(19) **Europäisches Patentamt / European Patent Office / Office européen des brevets**

(11) **EP 1 791 063 A1**

(12) **EUROPEAN PATENT APPLICATION**

(43) Date of publication:
**30.05.2007 Bulletin 2007/22**

(51) Int Cl.:
***G06F 15/173*** (2006.01)

(21) Application number: **07004754.3**

(22) Date of filing: **30.06.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **30.06.1999 US 141903 P**

(62) Document number(s) of the earlier application(s) in accordance with Art. 76 EPC:
**00947012.1 / 1 196 856**

(71) Applicant: **Apptitude, Inc.**
**Los Gatos, CA 95032 (US)**

(72) Inventors:
- **Dietz, Russell S.**
  **San Jose 95120-2736**
  **California (US)**
- **Maixner, Joseph R.**
  **Aptos 95003**
  **California (US)**
- **Koppenhaver, Andrew A.**
  **Fairfax 22030**
  **Virginia (US)**
- **Bares, William H.**
  **Germantown 38139**
  **Tennessee (US)**
- **Sarkissian, Haig A.**
  **San Antonio 78255**
  **Texas (US)**
- **Torgerson, James F.**
  **Andover 55304**
  **Minnesota (US)**

(74) Representative: **Collins, John David**
**Marks & Clerk**
**90 Long Acre**
**London WC2E 9RA (GB)**

Remarks:
This application was filed on 08 - 03 - 2007 as a divisional application to the application mentioned under INID code 62.

(54) **Method and apparatus for monitoring traffic in a network**

(57)     A monitor for and a method of examining packets passing through a connection point on a computer network. Each packets conforms to one or more protocols. The method includes receiving a packet from a packet acquisition device and performing one or more parsing/extraction operations on the packet to create a parser record comprising a function of selected portions of the packet. The parsing/extraction operations depend on one or more of the protocols to which the packet conforms. The method further includes looking up a flow-entry database containing flow-entries for previously encountered conversational flows. The lookup uses the selected packet portions and determining if the packet is of an existing flow. If the packet is of an existing flow, the method classifies the packet as belonging to the found existing flow, and if the packet is of a new flow, the method stores a new flow-entry for the new flow in the flow-entry database, including identifying information for future packets to be identified with the new flow-entry. For the packet of an existing flow, the method updates the flow-entry of the existing flow. Such updating may include storing one or more statistical measures. Any stage of a flow, state is maintained, and the method performs any state processing for an identified state to further the process of identifying the flow. The method thus examines each and every packet passing through the connection point in real time until the application program associated with the conversational flow is determined.

FIG. 1

## Description

## FIELD OF INVENTION

The present invention relates to computer networks, specifically to the real-time elucidation of packets communicated within a data network, including classification according to protocol and application program..

## COPYRIGHT NOTICE

A portion of the disclosure of this patent document contains material that is subject to copyright protection. The copyright owner has no objection to the facsimile reproduction by anyone of the patent document or the patent disclosure, as it appears in the Patent and Trademark Office patent file or records, but otherwise reserves all copyright rights whatsoever.

## BACKGROUND TO THE PRESENT INVENTION

There has long been a need for network activity monitors. This need has become especially acute, however, given the recent popularity of the Internet and other internets- an "internet" being any plurality of interconnected networks which forms a larger, single network. With the growth of networks used as a collection of clients obtaining services from one or more servers on the network, it is increasingly important to be able to monitor the use of those services and to rate them accordingly. Such objective information, for example, as which services (i.e., application programs) are being used, who is using them, how often they have been accessed, and for how long, is very useful in the maintenance and continued operation of these networks. It is especially important that selected users be able to access a network remotely in order to generate reports on network use in real time. Similarly, a need exists for a real-time network monitor that can provide alarms notifying selected users of problems that may occur with the network or site.

One prior art monitoring method uses log files. In this method, selected network activities may be analyzed retrospectively by reviewing log files, which are maintained by network servers and gateways. Log file monitors must access this data and analyze ("mine") its contents to determine statistics about the server or gateway. Several problems exist with this method, however. First, log file information does not provide a map of real-time usage; and secondly, log file mining does not supply complete information. This method relies on logs maintained by numerous network devices and servers, which requires that the information be subjected to refining and correlation. Also, sometimes information is simply not available to any gateway or server in order to make a log file entry.

One such case, for example, would be information concerning NetMeeting® (Microsoft Corporation, Redmond, Washington) sessions in which two computers connect directly on the network and the data is never seen by a server or a gateway.

Another disadvantage of creating log files is that the process requires data logging features of network elements to be enabled, placing a substantial load on the device, which results in a subsequent decline in network performance. Additionally, log files can grow rapidly, there is no standard means of storage for them, and they require a significant amount of maintenance.

Though Netflow® (Cisco Systems, Inc., San Jose, California), RMON2, and other network monitors are available for the real-time monitoring of networks, they lack visibility into application content and are typically limited to providing network layer level information. "Net Flow Services and Applications" (Cisco White Paper, March 1999, pages 1-27) discloses a packet flow monitoring process in which a cache is used to determine if a packet is part of an existing flow or should generate a new cache flow entry. Also, US 5,430,709 discloses a network layer level packet monitoring method.

Pattern-matching parser techniques wherein a packet is parsed and pattern filters are applied are also known, but these too are limited in how deep into the protocol stack they can examine packets.

Some prior art packet monitors classify packets into connection flows. The term "connection flow" is commonly used to describe all the packets involved with a single connection. A conversational flow, on the other hand, is the sequence of packets that are exchanged in any direction as a result of an activity-for instance, the running of an application on a server as requested by a client. It is desirable to be able to identify and classify conversational flows rather than only connection flows. The reason for this is that some conversational flows involve more than one connection, and some even involve more than one exchange of packets between a client and server. This is particularly true when using client/server protocols such as RPC, DCOMP, and SAP, which enable a service to be set up or defined prior to any use of that service.

An example of such a case is the SAP (Service Advertising Protocol), a NetWare (Novell Systems, Provo, Utah) protocol used to identify the services and addresses of servers attached to a network. In the initial exchange, a client might send a SAP request to a server for print service. The server would then send a SAP reply that identifies a particular address-for example, SAP#5-as the print service on that server. Such responses might be used to update a table in a router, for instance, known as a Server Information Table. A client who has inadvertently seen this reply or who has access to the table (via the router that has the Service Information Table) would know that SAP#5 for this particular server is a print service. Therefore, in order to print data on the server, such a client would not need to make a request for a print service, but would simply send data to be printed specifying SAP#5. Like the previous exchange, the transmission of data to be printed also involves an exchange between a client and a server, but requires a second connection and is therefore independent of the initial exchange. In order to eliminate the possibility of disjointed conversational exchanges, it is desirable for a network packet monitor to be able to "virtually concatenate"-that is, to link-the first exchange with the second. If the clients were the same, the two packet exchanges would then be correctly identified as being part of the same conversational flow.

Other protocols that may lead to disjointed flows, include RPC (Remote Procedure Call); DCOM (Distributed Component Object Model), formerly called Network OLE (Microsoft Corporation, Redmond, Washington); and CORBA (Common Object Request Broker Architecture). RPC is a programming interface from Sun Microsystems (Palo Alto, California) that allows one program to use the services of another program in a remote machine. DCOM, Microsoft's counterpart to CORBA, defines the remote procedure call that allows those objects-objects are self-contained software modules-to be run remotely over the network. And CORBA, a standard from the Object Management Group (OMG) for communicating between distributed objects, provides a way to execute programs (objects) written in different programming languages running on different platforms regardless of where they reside in a network.

What is needed, therefore, is a network monitor that makes it possible to continuously analyze all user sessions on a heavily trafficked network. Such a monitor should enable non-intrusive, remote detection, characterization, analysis, and capture of all information passing through any point on the network (i. e., of all packets and packet streams passing through any location in the network). Not only should all the packets be detected and analyzed, but for each of these packets the network monitor should determine the protocol *(e.g.,* http, ftp, H.323, VPN, etc.), the application/use within the protocol (e.g., voice, video, data, real-time data, etc.), and an end user's pattern of use within each application or the application context (e.g., options selected, service delivered, duration, time of day, data requested, etc.). Also, the network monitor should not be reliant upon server resident information such as log files. Rather, it should allow a user such as a network administrator or an Internet service provider (ISP) the means to measure and analyze network activity objectively; to customize the type of data that is collected and analyzed; to undertake real time analysis; and to receive timely notification of network problems.

Considering the previous SAP example again, because one features of the invention is to correctly identify the second exchange as being associated with a print service on that server, such exchange would even be recognized if the clients were not the same. What distinguishes one embodiment of the invention from prior art network monitors is that it has the ability to recognize disjointed flows as belonging to the same conversational flow.

The data value in monitoring network communications has been recognized by many inventors. Chiu, *et al.,* describe a method for collecting information at the session level in a computer network in United States Patent 5,101,402, titled "APPARATUS AND METHOD FOR REAL-TIME MONITORING OF NETWORK SESSIONS AND A LOCAL AREA NETWORK" (the "402 patent"). The 402 patent specifies fixed locations for particular types of packets to extract information to identify session of a packet. For example, if a DECnet packet appears, the 402 patent looks at six specific fields (at 6 locations) in the packet in order to identify the session of the packet. If, on the other hand, an IP packet appears, a different set of six different locations is specified for an IP packet. With the proliferation of protocols, clearly the specifying of all the possible places to look to determine the session becomes more and more difficult. Likewise, adding a new protocol or application is difficult. In one embodiment of the present invention, the locations examined and the information extracted from any packet are adaptively determined from information in the packet for the particular type of packet. There is no fixed definition of what to look for and where to look in order to form an identifying signature. A monitor implementation of one embodiment of the present invention, for example, adapts to handle differently IEEE 802.3 packet from the older Ethernet Type 2 (or Version 2) DIX (Digital-Intel-Xerox) packet.

The 402 patent system is able to recognize up to the session layer. In one embodiment of the present invention, the number of levels examined varies for any particular protocol. Furthermore, the present invention is capable of examining up to whatever level is sufficient to uniquely identify to a required level, even all the way to the application level (in the OSI model).

Other prior art systems also are known. Phael describes a network activity monitor that processes only randomly selected packets in United States Patent 5,315,580, titled "NETWORK MONITORING DEVICE AND SYSTEM." Nakamura teaches a network monitoring system in United States Patent 4,891,639, titled "MONITORING SYSTEM OF NETWORK." Ross, *et al.,* teach a method and apparatus for analyzing and monitoring network activity in United States Patent 5,247,517, titled "METHOD AND APPARATUS FOR ANALYSIS NETWORKS," McCreery, *et al.,* describe an Internet activity monitor that decodes packet data at the Internet protocol level layer in United States Patent 5,787,253, titled "APPARATUS AND METHOD OF ANALYZING INTERNET ACTIVITY." The McCreery method decodes IP-packets. It goes through the decoding operations for each packet, and therefore uses the processing overhead for both recognized and unrecognized flows. In a monitor implementation of one embodiment of the present invention, a signature is built for every flow such that future packets of the flow are easily recognized. When a new packet in the flow arrives, the recognition process can commence from where it last left off, and a new signature built to recognize new packets of the flow.

A network analyzer should be able to analyze many different protocols. At a base level, there are a number of standards used in digital telecommunications, including Ethernet, HDLC, ISDN, Lap B, ATM, X.25, Frame Relay, Digital Data Service, FDDI (Fiber Distributed Data Interface), T1, and others. Many of these standards employ different packet and/or frame formats. For example, data is transmitted in ATM and frame-relay systems in the form of fixed length packets (called "cells") that are 53 octets (i.e., bytes) long. Several such cells may be needed to make up the information that might be included in the packet employed by some other protocol for the same payload information-for example in a conversational flow that uses the frame-relay standard or the Ethernet protocol.

In order for a network monitor to be able to analyze different packet or frame formats, the monitor needs to be able to perform protocol specific operations on each packet with each packet carrying information conforming to different protocols and related to different applications. For example, the monitor needs to be able to parse packets of different formats into fields to understand the data encapsulated in the different fields. As the number of possible packet formats or types increases, the amount of logic required to parse these different packet formats also increases.

Prior art network monitors exist that parse individual packets and look for information at different fields to use for building a signature for identifying packets. Chiu, *et al.,* describe a method for collecting information at the session level in a computer network in United States Patent 5,101,402, titled "APPARATUS AND METHOD FOR REAL-TIME MONITORING OF NETWORK SESSIONS AND A LOCAL AREA NETWORK." In this patent, there are fixed locations specified for particular types of packets. For example, if a DECnet packet appears, the Chiu system looks at six specific fields (at 6 locations) in the packet in order to identify the session of the packet. If, on the other hand, an IP packet appears, a different set of six locations is examined. The system looks only at the lowest levels up to the protocol layer. There are fixed locations for each of the fields that specified the next level. With the proliferation of protocols, clearly the specifying of all the possible places to look to determine the session becomes more and more difficult. Likewise, adding a new protocol or application is difficult.

It is desirable to be able to adaptively determine the locations and the information extracted from any packet for the particular type of packet. In this way, an optimal signature may be defined using a protocol-dependent and packet-content-dependent definition of what to look for and where to look for it in order to form a signature.

There thus is also a need for a network monitor that can be tailored or adapted for different protocols and for different application programs. There thus is also a need for a network monitor that can accommodate new protocols and for new application programs. There also is a need for means for specifying new protocols and new levels, including new applications. There also is a need for a mechanism to describe protocol specific operations, including, for example, what information is relevant to packets and packets that need to be decoded, and to include specifying parsing operations and extraction operations. There also is a need for a mechanism to describe state operations to perform on packets that are at a particular state of recognition of a flow in order to further recognize the flow.

It is advantageous to collect statistics on packets passing through a point in a network rather than to simply count each and every packet. By maintaining statistical measures in the flow-entries related to a conversational flow, embodiments of the present invention enable specific metrics to be collected in real-time that otherwise would not be possible. For example, it is desirable to maintain metrics related to bi-directional conversations based on the entire flow for each exchange in the conversation. By maintaining the state of flow, embodiments of the present invention also enable certain metrics related to the states of flows to be determined.

Most prior-art network traffic monitors that use statistical metrics collect only end-point and end-of-session related statistics. Examples of such commonly used metrics include packet counts, byte counts, session connection time, session timeouts, session and transport response times and others. All of these deal with events that can be directly related to an event in a single packet. These prior-art systems cannot collect some important performance metrics that are related to a complete sequence of packets of a flow or to several disjointed sequences of the same flow in a network.

Time based metrics on application data packets are important. Such metrics could be determined if all the timestamps and related data could be stored and forwarded for later analysis. However when faced with thousands or millions of conversations per second on ever faster networks, storing all the data, even if compressed, would take too much processing, memory, and manager down load time to be practical.

Thus there is a need for maintaining and reporting time-base metrics from statistical measures accumulated from packets in a flow.

Network data is properly modeled as a population and not a sample. Thus, all the data needs to be processed. Because of the nature of application protocols, just sampling some of the packets may not give good measures related to flows. Missing just one critical packet, such as one the specified an additional port that data will be transmitted on, or what application will be run, can cause valid data to be lost.

Thus there is also a need for maintaining and reporting time-base metrics from statistical measures accumulated from *every* packet in a flow.

There also is a need to determine metrics related to a sequence of events. A good example is relative jitter. Measuring the time from the end of one packet in one direction to another packet with the same signature in the same direction collects data that relates normal jitter. This type of jitter metric is good for measuring broad signal quality in a packet network. However, it is not specific to the payload or data item being transported in a cluster of packets.

Because of the high speed that packets may be entering the system, embodiments of the present invention include a cache. It is desirable to maximize the hit rate in a cache system.

Typical prior-art cache systems are used to expediting memory accesses to and from microprocessor systems. Various mechanisms are available in such prior art systems to predict the lookup such that the hit rate can be maximized. Prior art caches, for example, can use a lookahead mechanism to predict both instruction cache lookups and data cache lookups. Such lookahead mechanisms are not available for a cache subsystem for the packet monitoring application. When a new packet enters the monitor, the next cache access, for example from the lookup engine, may be for a totally different conversational flow than the last cache lookup, and there is no way ahead of time of knowing what flow the next packet will belong to.

Thus there is a need in the art for a cache subsystem suitable for use in a packet monitor. One desirable property of such a cache system is a least recently used (LRU) replacement policy that replaces the LRU flow-entry when a cache replacement is needed. Replacing least recently used flow-entries is preferred because it is likely that a packet following a recent packet will belong to the same flow. Thus, the signature of a new packet will likely match a recently used flow record. Conversely, it is not highly likely that a packet associated with the least recently used flow-entry will soon arrive.

A hash is often used to facilitate lookups. Such a hash may spread entries randomly in a database. In such a case, an associative cache is desirable.

There thus is a need for an associative cache subsystem that also includes a LRU replacement policy.

It is desirable for a packet monitor to maintain the state of a flow and to perform any state processing necessary to further the process of determining the application program associated with a flow. Thus there is a need for a state processor that analyzes both new and existing flows in order to classify them by application.

One of the common operations that may be require of a state processor is to search the contents of a packet for the existence of one of a set of known strings. Such identification may be useful for furthering the process of identifying the application content of a conversational flow. For example, it may be desired to search for the uniform resource locator (URL) of packets related to the http protocol, or there may be a need to search for particular strings that identify protocols or aspects of protocols, for example, the strings "port", "get", "post," and so forth. Any of these strings may be in a packet, and which string and wherein the packet the string resides is often unknown.

In most common processing systems, the set of instructions implemented are general purpose in nature. All processing systems have a typical set of instructions related to the analysis and manipulation of the Instruction and program counters. These instructions include Jump, Call and Return. In addition, these same processing systems contain the appropriate instructions to analyze and manipulate registers and memory locations. These instructions include Increment, Decrement and Move, Compare and Logical manipulation.

While a state processor can include such a basic set of standard instructions, implementing searches for known for one or more known strings in a target data stream may take too long using such a set of standard instructions in order to accommodate the high speed of packet arrival. It is therefore desirable to have a processor that can perform some specific search functions that are required to evaluate the content of and data within packets on networks extremely rapidly.

Specifically, there is a need for a searching apparatus that may be part of the state processor and that can rapidly search a target data stream for a specified reference string. Furthermore, there is a need for a programmable processor that includes instructions that invoke the searching apparatus to perform such a search.

Using such a processor in a network monitor enables the monitor to scale and meet any network speed requirements.

**SUMMARY**

The present invention provides a method of performing specific operations on a packet passing through a connection point on a computer network as defined in claim 1.

In its various embodiments the present invention provides a network monitor that can accomplish one or more of the following objects and advantages:

- Recognize and classify all packets that are exchanges between a client and server into respective client/server applications.

- Recognize and classify at all protocol layer levels conversational flows that pass in either direction at a point in a network.

- Determine the connection and flow progress between clients and servers according to the individual packets exchanged over a network.

- Be used to help tune the performance of a network according to the current mix of client/server applications requiring network resources.

- Maintain statistics relevant to the mix of client/server applications using network resources.

- Report on the occurrences of specific sequences of packets used by particular applications for client/server network conversational flows.

Other aspects of embodiments of the invention are:

- Properly analyzing each of the packets exchanged between a client and a server and maintaining information relevant to the current state of each of these conversational flows.

- Providing a flexible processing system that can be tailored or adapted as new applications enter the client/server market.

- Maintaining statistics relevant to the conversational flows in a client/sever network as classified by an individual application.

- Reporting a specific identifier, which may be used by other network-oriented devices to identify the series of packets with a specific application for a specific client/server network conversational flow.

In general, the embodiments of the present invention overcome the problems and disadvantages of the art.

As described herein, one embodiment analyzes each of the packets passing through any point in the network in either direction, in order to derive the actual application used to communicate between a client and a server. Note that there could be several simultaneous and overlapping applications executing over the network that are independent and asynchronous.

A monitor embodiment of the invention successfully classifies each of the individual packets as they are seen on the network. The contents of the packets are parsed and selected parts are assembled into a signature (also called a key) that may then be used identify further packets of the same conversational flow, for example to further analyze the flow and ultimately to recognize the application program. Thus the key is a function of the selected parts, and in the preferred embodiment, the function is a concatenation of the selected parts. The preferred embodiment forms and remembers the state of any conversational flow, which is determined by the relationship between individual packets and the entire conversational flow over the network. By remembering the state of a flow in this way, the embodiment determines the context of the conversational flow, including the application program it relates to and parameters such as the time, length of the conversational flow, data rate, etc.

The monitor is flexible to adapt to future applications developed for client/server networks. New protocols and protocol combinations may be incorporated by compiling files written in a high-level protocol description language.

The monitor embodiment of the present invention is preferably implemented in application-specific integrated circuits (ASIC) or field programmable gate arrays (FPGA). In one embodiment, the monitor comprises a parser subsystem that forms a signature from a packet. The monitor further comprises an analyzer subsystem that receives the signature from the parser subsystem.

A packet acquisition device such as a media access controller (MAC) or a segmentation and reassemble module is used to provide packets to the parser subsystem of the monitor.

In a hardware implementation, the parsing subsystem comprises two sub-parts, the pattern analysis and recognition engine (PRE), and an extraction engine (slicer). The PRE interprets each packet, and in particular, interprets individual fields in each packet according to a pattern database.

The different protocols that can exist in different layers may be thought of as nodes of one or more trees of linked nodes. The packet type is the root of a tree. Each protocol is either a parent node or a terminal node. A parent node links a protocol to other protocols (child protocols) that can be at higher layer levels. For example, An Ethernet packet (the root node) may be an Ethertype packet-also called an Ethernet Type/Version 2 and a DIX (DIGITAL-Intel-Xerox packet)-or an IEEE 802.3 packet. Continuing with the IEEE 802.3-type packet, one of the children nodes may be the IP protocol, and one of the children of the IP protocol may be the TCP protocol.

The pattern database includes a description of the different headers of packets and their contents, and how these relate to the different nodes in a tree. The PRE traverses the tree as far as it can. If a node does not include a link to a deeper level, pattern matching is declared complete. Note that protocols can be the children of several parents. If a unique node was generated for each of the possible parent/child trees, the pattern database might become excessively large. Instead, child nodes are shared among multiple parents, thus compacting the pattern database.

Finally the PRE can be used on its own when only protocol recognition is required.

For each protocol recognized, the slicer extracts important packet elements from the packet. These form a signature (i.e., key) for the packet. The slicer also preferably generates a hash for rapidly identifying a flow that may have this signature from a database of known flows.

The flow signature of the packet, the hash and at least some of the payload are passed to an analyzer subsystem. In a hardware embodiment, the analyzer subsystem includes a unified flow key buffer (UFKB) for receiving parts of packets from the parser subsystem and for storing signatures in process, a lookup/update engine (LUE) to lookup a database of flow records for previously encountered conversational flows to determine whether a signature is from an existing flow, a state processor (SP) for performing state processing, a flow insertion and deletion engine (FIDE) for inserting new flows into the database of flows, a memory for storing the database of flows, and a cache for speeding up access to the memory containing the flow database. The LUE, SP, and FIDE are all coupled to the UFKB, and to the cache.

The unified flow key buffer thus contains the flow signature of the packet, the hash and at least some of the payload for analysis in the analyzer subsystem. Many operations can be performed to further elucidate the identity of the application program content of the packet involved in the client/server conversational flow while a packet signature exists in the unified flow signature buffer. In the particular hardware embodiment of the analyzer subsystem several flows may be processed in parallel, and multiple flow signatures from all the packets being analyzed in parallel may be held in the one UFKB.

The first step in the packet analysis process of a packet from the parser subsystem is to lookup the instance in the current database of known packet flow signatures. A lookup/update engine (LUE) accomplishes this task using first the hash, and then the flow signature. The search is carried out in the cache and if there is no flow with a matching signature in the cache, the lookup engine attempts to retrieve the flow from the flow database in the memory. The flow-entry for previously encountered flows preferably includes state information, which is used in the state processor to execute any operations defined for the state, and to determine the next state. A typical state operation may be to search for one or more known reference strings in the payload of the packet stored in the UFKB.

Once the lookup processing by the LUE has been completed a flag stating whether it is found or is new is set within the unified flow signature buffer structure for this packet flow signature. For an existing flow, the flow-entry is updated by a calculator component of the LUE that adds values to counters in the flow-entry database used to store one or more statistical measures of the flow. The counters are used for determining network usage metrics on the flow.

After the packet flow signature has been looked up and contents of the current flow signature are in the database, a state processor can begin analyzing the packet payload to further elucidate the identity of the application program component of this packet. The exact operation of the state processor and functions performed by it will vary depending on the current packet sequence in the stream of a conversational flow. The state processor moves to the next logical operation stored from the previous packet seen with this same flow signature. If any processing is required on this packet, the state processor will execute instructions from a database of state instruction for this state until there are either no more left or the instruction signifies processing.

In the preferred embodiment, the state processor functions are programmable to provide for analyzing new application programs, and new sequences of packets and states that can arise from using such application.

If during the lookup process for this particular packet flow signature, the flow is required to be inserted into the active database, a flow insertion and deletion engine (FIDE) is initiated. The state processor also may create new flow signatures and thus may instruct the flow insertion and deletion engine to add a new flow to the database as a new item.

In the preferred hardware embodiment, each of the LUE, state processor, and FIDE operate independently from the other two engines.

Another embodiment of the invention is collecting metrics related to a flow. Using the state processing described herein, because the state processor can search for specific data payloads, embodiments of the inventive monitor described herein can be programmed to collect the same jitter metric for a group of packets in a flow that are all related to a specific data payload. This allows the system to provide metrics more focused on the type of quality related to a set of packets. This in general is more desirable than metrics related to single packets when evaluating the performance of a system in a network.

Specifically, the monitor system can be programmed to maintain any type of metric at any state of a conversational flow. Also the monitor can have the actual statistics programmed into the state at any point. This enables embodiments of the monitor system to collect metrics related to network usage and performance, as well as metrics related to specific states or sequences of packets.

Some of the specific metrics that can be collected only with states are events related to a group of traffic in one direction, events related to the status of a communication sequence in one or both directions, events related to the exchange of packets for a specific application in a specific sequence. This is only a small sample of the metrics that requires an engine that can relate the state of a flow to a set of metrics.

In addition, because the monitor provides greater visibility to the specific application in a conversation or flow, the monitor can be programmed to collect metrics that may be specific to that type of application or service. In other word, if a flow is for an Oracle Database server, an embodiment of monitor could collect the number of packets required to complete a transaction. Only with both state and application classification can this type of metric be derived from the network.

Because the monitor can be programmed to collect a diverse set of metrics, the system can be used as a data source for metrics required in a number of environments. In particular, the metrics may be used to monitor and analyze the quality and performance of traffic flows related to a specific set of applications. Other implementation could include metrics related to billing and charge-back for specific traffic flow and events with the traffic flows. Yet other implementations could be programmed to provide metrics useful for troubleshooting and capacity planning and related directly to a focused application and service.

Another embodiment of the invention determines quality of service metrics based on each and every packet.

Thus, disclosed herein is a method of and monitor apparatus for analyzing a flow of packets passing through a connection point on a computer network are disclosed that may include such quality of service metrics. The method includes receiving a packet from a packet acquisition device, and looking up a flow-entry database containing flow-entries for previously encountered conversational flows. The looking up to determine if the received packet is of an existing flow. Each and every packet is processed. If the packet is of an existing flow, the method updates the flow-entry of the existing flow, including storing one or more statistical measures kept in the flow-entry. If the packet is of a new flow, the method stores a new flow-entry for the new flow in the flow-entry database, including storing one or more statistical measures kept in the flow-entry. The statistical measures are used to determine metrics related to the flow. The metrics may be base metrics from which quality of service metrics are determined, or may be the quality of service metrics.

Also described herein is an associative cache system for looking up one or more elements of an external memory. The cache system comprises a set of cache memory elements coupled to the external memory, a set of content addressable memory cells (CAMs) containing an address and a pointer to one of the cache memory elements, and including a matching circuit having an input such that the CAM asserts a match output when the input is the same as the address in the CAM cell. Which cache memory element a particular CAM points to changes over time. In the preferred implementation, the CAMs are connected in an order from top to bottom, and the bottom CAM points to the least recently used cache memory element.

Also disclosed herein is a processor for processing contents of packets passing through a connection point on a computer network. The processor includes a searching apparatus having one or more comparators for searching for a reference string in the contents of a packet. The processor processes contents of all packets passing through the connection point in real time. In one implementation, the processor is programmable and has an instruction set that includes an instruction for invoking the searching apparatus to search for a specified reference string in the packet starting at an unknown location within a range of the packet.

Embodiments of searching apparatus that can be used in the processor also are disclosed. The searching apparatus is configured to search for a reference string of $N_R$ units in target data starting from any of a set of starting positions within the target data. The searching apparatus includes a reference register configured to receive the $N_R$ units of a reference string, one or more target data registers coupled in series to receive the target data; and, a plurality of comparator sets, one comparator set corresponding to each of the starting positions. The comparator set of a particular starting position is coupled to each unit of the reference register and to $N_R$ units of the target data registers starting from the particular starting position and comparing the reference register contents to corresponding contents of $N_R$ contiguous units of the target data registers starting from the particular starting position. Each comparator set indicates if there is a match of the first reference string in the target data starting from its corresponding different starting position. The first plurality of comparator sets indicates in parallel if the first reference string is contained in the target data registers starting at any of the starting positions.

## BRIEF DESCRIPTION OF THE DRAWINGS

Although the present invention is better understood by referring to the detailed preferred embodiments, these should not be taken to limit the present invention to any specific embodiment because such embodiments are provided only for the purposes of explanation. The embodiments, in turn, are explained with the aid of the following figures.

FIG. 1 is a functional block diagram of a network embodiment of the present invention in which a monitor is connected to analyze packets passing at a connection point.

FIG. 2 is a diagram representing an example of some of the packets and their formats that might be exchanged in starting, as an illustrative example, a conversational flow between a client and server on a network being monitored and analyzed. A pair of flow signatures particular to this example and to embodiments of the present invention is also illustrated. This represents some of the possible flow signatures that can be generated and used in the process of analyzing packets and of recognizing the particular server applications that produce the discrete application packet exchanges.

FIG. 3 is a functional block diagram of a process embodiment of the present invention that can operate as the packet monitor shown in FIG. 1. This process may be implemented in software or hardware.

FIG. 4 is a flowchart of a high-level protocol language compiling and optimization process, which in one embodiment may be used to generate data for monitoring packets according to embodiments of the present invention.

FIG. 5 is a flowchart of a packet parsing process used as part of the parser in an embodiment of the packet monitor of an embodiment of the present invention.

FIG. 6 is a flowchart of a packet element extraction process that is used as part of the parser in the packet monitor of an embodiment of the present invention.

FIG. 7 is a flowchart of a flow-signature building process that is used as part of the parser in the packet monitor of an embodiment of the present invention.

FIG. 8 is a flowchart of a monitor lookup and update process that is used as part of the analyzer in the packet monitor of an embodiment of the present invention.

FIG. 9 is a flowchart of an exemplary Sun Microsystems Remote Procedure Call application than may be recognized by the packet monitor of an embodiment of the present invention.

FIG. 10 is a functional block diagram of a hardware parser subsystem including the pattern recognizer and extractor that can form part of the parser module in the packet monitor of an embodiment of the present invention.

FIG. 11 is a functional block diagram of a hardware analyzer including a state processor that can form part of an embodiment of the inventive packet monitor.

FIG. 12 is a functional block diagram of a flow insertion and deletion engine process that can form part of the analyzer in the packet monitor of an embodiment of the present invention.

FIG. 13 is a flowchart of a state processing process that can form part of the analyzer in the packet monitor of an embodiment of the present invention.

FIG. 14 is a simple functional block diagram of a process embodiment of the present invention that can operate as the packet monitor shown in FIG. 1. This process may be implemented in software.

FIG. 15 is a functional block diagram of how the packet monitor of FIG. 3 (and FIGS. 10 and 11) may operate on a network with a processor such as a microprocessor.

FIG. 16 is an example of the top (MAC) layer of an Ethernet packet and some of the elements that may be extracted to form a signature according to one embodiment of the invention.

FIG. 17A is an example of the header of an Ethertype type of Ethernet packet of FIG. 16 and some of the elements that may be extracted to form a signature according to one embodiment of the invention.

FIG. 17B is an example of an IP packet, for example, of the Ethertype packet shown in FIGs. 16 and 17A, and some of the elements that may be extracted to form a signature according to one embodiment of the invention.

FIG. 18A is a three-dimensional structure that can be used to store elements of the pattern, parse and extraction database used by the parser subsystem in accordance to one embodiment of the invention.

FIG. 18B is an alternate form of storing elements of the pattern, parse and extraction database used by the parser subsystem in accordance to another embodiment of the invention.

FIG. 19 is a block diagram of the state processor component of the analyzer subsystem of FIG. 11.

FIG. 20 is a block diagram of the search engine component of the analyzer subsystem of FIG. 11.

FIG. 21 is a dataflow block diagram showing four individual search modules of the search engine.

FIG. 22A is a block diagram of the search engine core; FIG 22B shows a comparator component of the core that compares a plurality of inputs to another plurality of inputs.

FIG. 23A shows an implementation of the input core in more detail; FIG 23B shows a comparator component of the core.

FIG. 26 is a block diagram of the cache memory part of the cache subsystem 1115 of the analyzer subsystem of FIG. 11.

FIG. 27 is a block diagram of the cache memory controller and the cache CAM controller of the cache subsystem.

FIG. 28 is a block diagram of one implementation of the CAM array of the cache subsystem 1115.

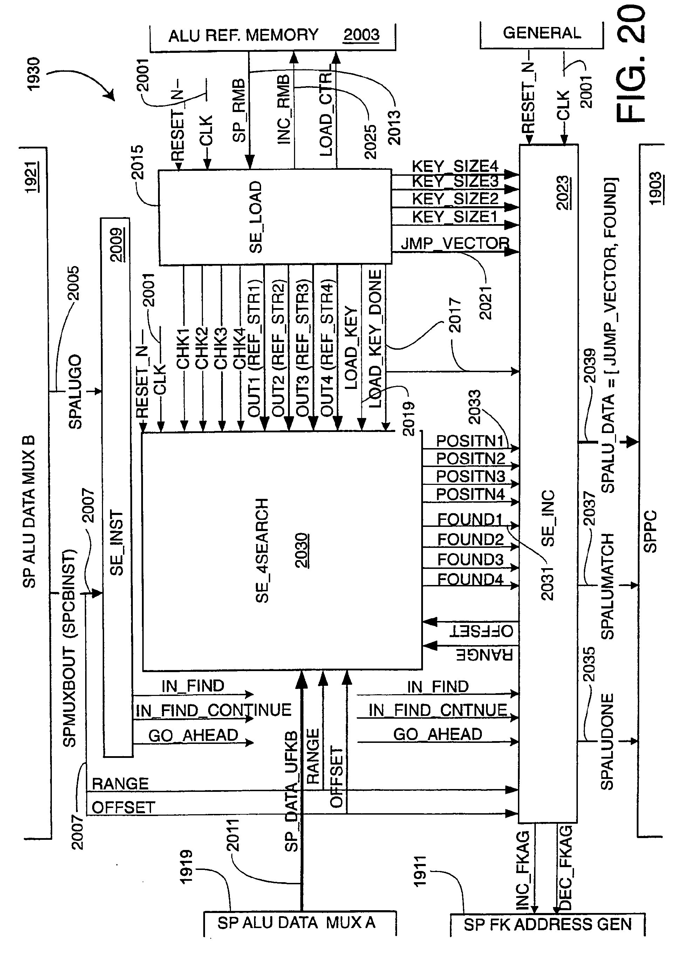

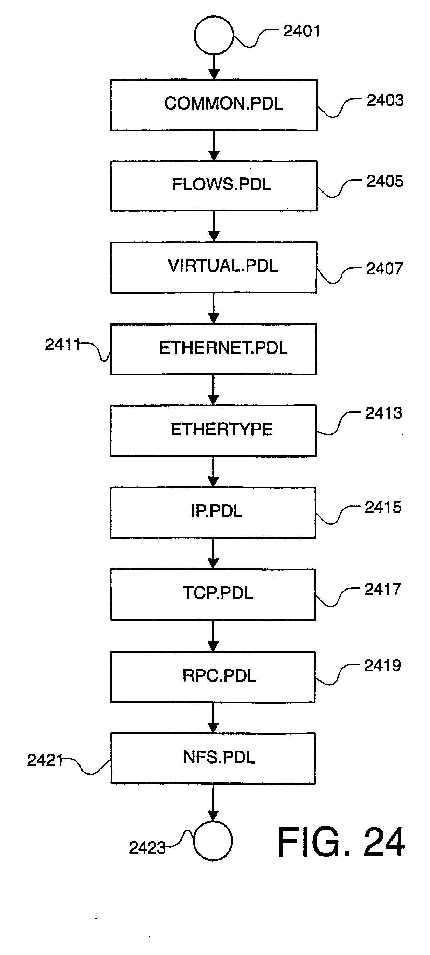

FIG. 24 shows various PDL file modules to be compiled together by the compiling process illustrated in FIG. 20 as an example, in accordance with a compiling embodiment of the invention.

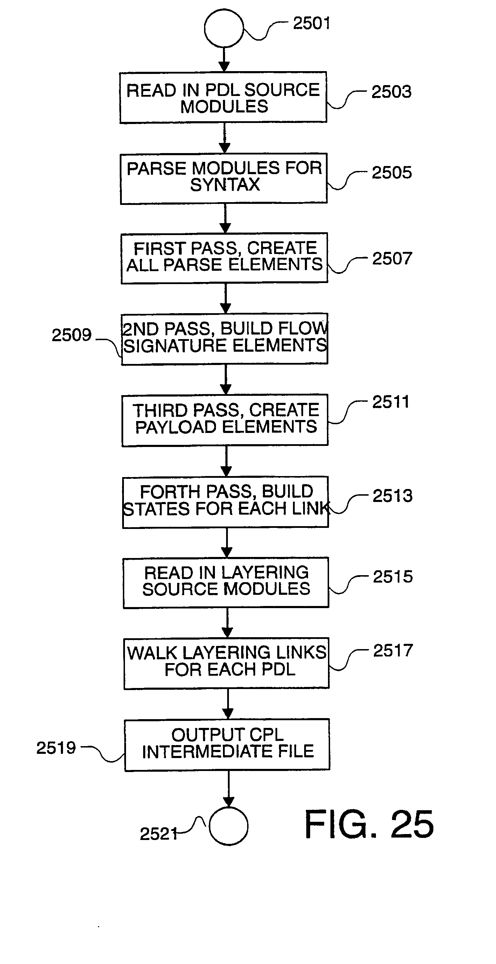

FIG. 25 is a flowchart of the process of compiling high-level language files according to an embodiment of the invention.

## DETAILED DESCRIPTION OF THE PREFERRED EMBODIMENTS

Note that this document includes hardware diagrams and descriptions that may include signal names. In most cases, the names are sufficiently descriptive, in other cases however the signal names are not needed to understand the operation and practice of the invention.

### *Operation in a Network*

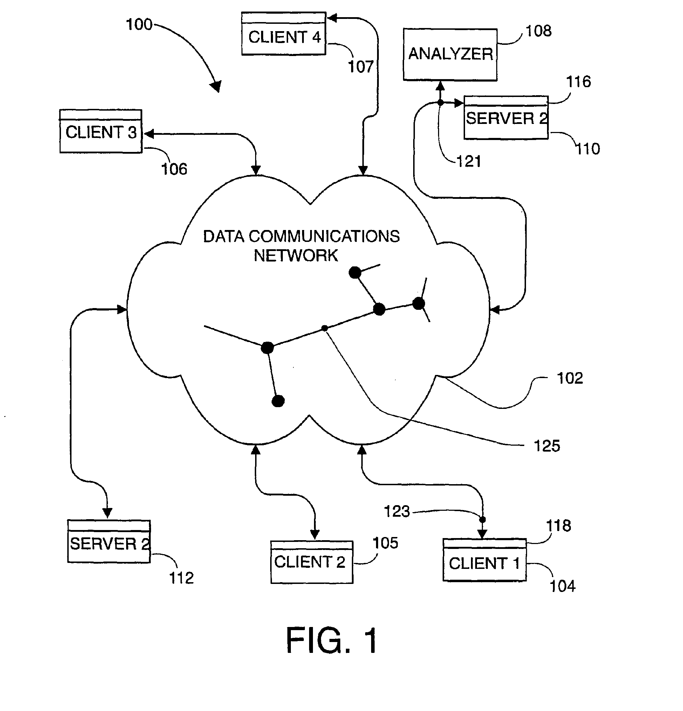

FIG. 1 represents a system embodiment of the present invention that is referred to herein by the general reference numeral 100. The system 100 has a computer network 102 that communicates packets (e.g., IP datagrams) between various computers, for example between the clients 104-107 and servers 110 and 112. The network is shown schematically as a cloud with several network nodes and links shown in the interior of the cloud. A monitor 108 examines the packets passing in either direction past its connection point 121 and, according to one aspect of the invention, can elucidate what application programs are associated with each packet. The monitor 108 is shown examining packets *(i.e.,* datagrams) between the network interface 116 of the server 110 and the network. The monitor can also be placed at other points in the network, such as connection point 123 between the network 102 and the interface 118 of the client 104, or some other location, as indicated schematically by connection point 125 somewhere in network 102. Not shown is a network packet acquisition device at the location 123 on the network for converting the physical information on the network into packets for input into monitor 108. Such packet acquisition devices are common.

Various protocols may be employed by the network to establish and maintain the required communication, e.g., TCP/IP, etc. Any network activity-for example an application program run by the client 104 (CLIENT 1) communicating with another running on the server 110 (SERVER 2)-will produce an exchange of a sequence of packets over network 102 that is characteristic of the respective programs and of the network protocols. Such characteristics may not be completely revealing at the individual packet level. It may require the analyzing of many packets by the monitor 108 to have enough information needed to recognize particular application programs. The packets may need to be parsed then analyzed in the context of various protocols, for example, the transport through the application session layer protocols for packets of a type conforming to the ISO layered network model.

Communication protocols are layered, which is also referred to as a protocol stack. The ISO (International Standardization Organization) has defined a general model that provides a framework for design of communication protocol layers. This model, shown in table form below, serves as a basic reference for understanding the functionality of existing communication protocols.

## ISO MODEL

| Layer | Functionality | Example |
|---|---|---|
| 7 | Application | Telnet, NFS, Novell NCP, HTTP, H.323 |
| 6 | Presentation | XDR |
| 5 | Session | RPC, NETBIOS, SNMP, *etc.* |
| 4 | Transport | TCP, Novel SPX, UDP, *etc.* |
| 3 | Network | IP, Novell IPX, VIP, AppleTalk, *etc.* |
| 2 | Data Link | Network Interface Card (Hardware Interface). MAC layer |
| 1 | Physical | Ethernet, Token Ring, Frame Relay, ATM, T 1 (Hardware Connection) |

Different communication protocols employ different levels of the ISO model or may use a layered model that is similar to but which does not exactly conform to the ISO model. A protocol in a certain layer may not be visible to protocols employed at other layers. For example, an application (Level 7) may not be able to identify the source computer for a communication attempt (Levels 2-3).

In some communication arts, the term "frame" generally refers to encapsulated data at OSI layer 2, including a destination address, control bits for flow control, the data or payload, and CRC (cyclic redundancy check) data for error checking. The term "packet" generally refers to encapsulated data at OSI layer 3. In the TCP/IP world, the term "datagram" is also used. In this specification, the term "packet" is intended to encompass packets, datagrams, frames, and cells. In general, a packet format or frame format refers to how data is encapsulated with various fields and headers for transmission across a network. For example, a data packet typically includes an address destination field, a length field, an error correcting code (ECC) field, or cyclic redundancy check (CRC) field, as well as headers and footers to identify the beginning and end of the packet. The terms "packet format" and "frame format," also referred to as "cell format," are generally synonymous.

Monitor 108 looks at every packet passing the connection point 121 for analysis. However, not every packet carries the same information useful for recognizing all levels of the protocol. For example, in a conversational flow associated with a particular application, the application will cause the server to send a type-A packet, but so will another. If, though, the particular application program always follows a type-A packet with the sending of a type-B packet, and the other application program does not, then in order to recognize packets of that application's conversational flow, the monitor can be available to recognize packets that match the type-B packet to associate with the type-A packet. If such is recognized after a type-A packet, then the particular application program's conversational flow has started to reveal itself to the monitor 108.

Further packets may need to be examined before the conversational flow can be identified as being associated with the application program. Typically, monitor 108 is simultaneously also in partial completion of identifying other packet exchanges that are parts of conversational flows associated with other applications. One aspect of monitor 108 is its ability to maintain the state of a flow. The state of a flow is an indication of all previous events in the flow that lead to recognition of the content of all the protocol levels, e.g., the ISO model protocol levels. Another aspect of the invention is forming a signature of extracted characteristic portions of the packet that can be used to rapidly identify packets belonging to the same flow.

In real-world uses of the monitor 108, the number of packets on the network 102 passing by the monitor 108's connection point can exceed a million per second. Consequently, the monitor has very little time available to analyze and type each packet and identify and maintain the state of the flows passing through the connection point. The monitor 108 therefore masks out all the unimportant parts of each packet that will not contribute to its classification. However, the parts to mask-out will change with each packet depending on which flow it belongs to and depending on the state of the flow.

The recognition of the packet type, and ultimately of the associated application programs according to the packets that their executions produce, is a multi-step process within the monitor 108. At a first level, for example, several application programs will all produce a first kind of packet. A first "signature" is produced from selected parts of a packet that will allow monitor 108 to identify efficiently any packets that belong to the same flow. In some cases, that packet type may be sufficiently unique to enable the monitor to identify the application that generated such a packet in the conversational flow. The signature can then be used to efficiently identify all future packets generated in traffic related to that application.

In other cases, that first packet only starts the process of analyzing the conversational flow, and more packets are necessary to identify the associated application program. In such a case, a subsequent packet of a second type-but that potentially belongs to the same conversational flow-is recognized by using the signature. At such a second level, then, only a few of those application programs will have conversational flows that can produce such a second packet type. At this level in the process of classification, all application programs that are not in the set of those that lead to such a sequence of packet types may be excluded in the process of classifying the conversational flow that includes these two packets. Based on the known patterns for the protocol and for the possible applications, a signature is produced that allows recognition of any future packets that may follow in the conversational flow.

It may be that the application is now recognized, or recognition may need to proceed to a third level of analysis using the second level signature. For each packet, therefore, the monitor parses the packet and generates a signature to determine if this signature identified a previously encountered flow, or shall be used to recognize future packets belonging to the same conversational flow. In real time, the packet is further analyzed in the context of the sequence of previously encountered packets (the state), and of the possible future sequences such a past sequence may generate in conversational flows associated with different applications. A new signature for recognizing future packets may also be generated. This process of analysis continues until the applications are identified. The last generated signature may then be used to efficiently recognize future packets associated with the same conversational flow. Such an arrangement makes it possible for the monitor 108 to cope with millions of packets per second that must be inspected.

Another aspect of the invention is adding Eavesdropping. In alternative embodiments of the present invention capable of eavesdropping, once the monitor 108 has recognized the executing application programs passing through some point in the network 102 (for example, because of execution of the applications by the client 105 or server 110), the monitor sends a message to some general purpose processor on the network that can input the same packets from the same location on the network, and the processor then loads its own executable copy of the application program and uses it to read the content being exchanged over the network. In other words, once the monitor 108 has accomplished recognition of the application program, eavesdropping can commence.

*The Network Monitor*

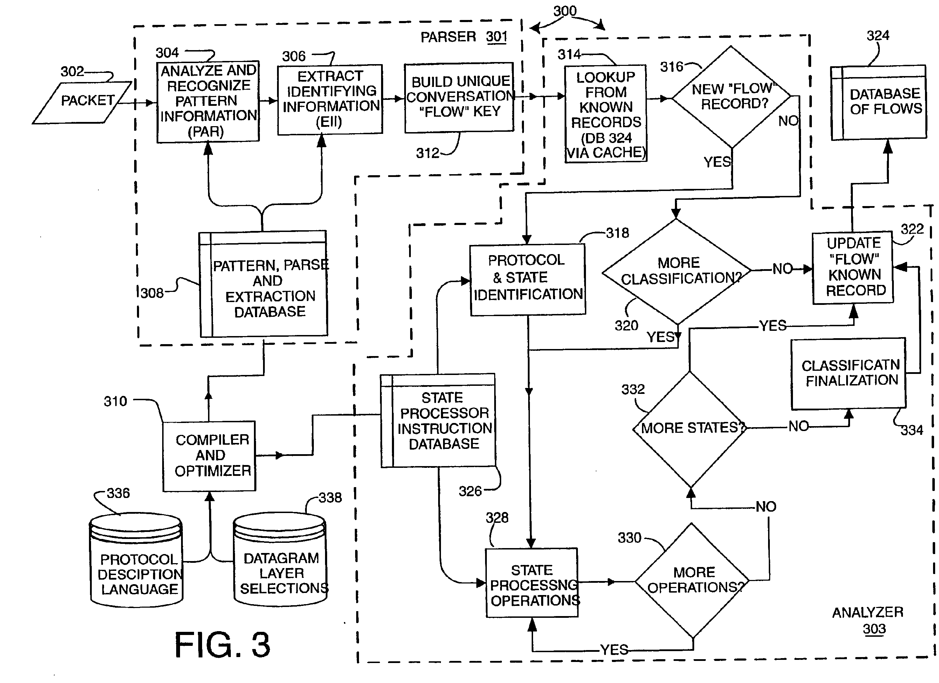

FIG. 3 shows a network packet monitor 300, in an embodiment of the present invention that can be implemented with computer hardware and/or software. The system 300 is similar to monitor 108 in FIG. 1. A packet 302 is examined, e.g., from a packet acquisition device at the location 121 in network 102 (FIG. 1), and the packet evaluated, for example in an attempt to determine its characteristics, e.g., all the protocol information in a multilevel model, including what server application produced the packet.

The packet acquisition device is a common interface that converts the physical signals and then decodes them into bits, and into packets, in accordance with the particular network (Ethernet, frame relay, ATM, *etc.).* The acquisition device indicates to the monitor 108 the type of network of the acquired packet or packets.

Aspects shown here include: (1) the initialization of the monitor to generate what operations need to occur on packets of different types-accomplished by compiler and optimizer 310, (2) the processing-parsing and extraction of selected portions-of packets to generate an identifying signature-accomplished by parser subsystem 301, and (3) the analysis of the packets-accomplished by analyzer 303.

The purpose of compiler and optimizer 310 is to provide protocol specific information to parser subsystem 301 and to analyzer subsystem 303. The initialization occurs prior to operation of the monitor, and only needs to re-occur when new protocols are to be added.

A flow is a stream of packets being exchanged between any two addresses in the network. For each protocol there are known to be several fields, such as the destination (recipient), the source (the sender), and so forth, and these and other fields are used in monitor 300 to identify the flow. There are other fields not important for identifying the flow, such as checksums, and those parts are not used for identification.

Parser subsystem 301 examines the packets using pattern recognition process 304 that parses the packet and determines the protocol types and associated headers for each protocol layer that exists in the packet 302. An extraction process 306 in parser subsystem 301 extracts characteristic portions (signature information) from the packet 302. Both the pattern information for parsing and the related extraction operations, e.g., extraction masks, are supplied from a parsing-pattern-structures and extraction-operations database (parsing/extractions database) 308 filled by the compiler and optimizer 310.

The protocol description language (PDL) files 336 describes both patterns and states of all protocols that an occur at any layer, including how to interpret header information, how to determine from the packet header information the protocols at the next layer, and what information to extract for the purpose of identifying a flow, and ultimately, applications and services. The layer selections database 338 describes the particular layering handled by the monitor. That is, what protocols run on top of what protocols at any layer level. Thus 336 and 338 combined describe how one would decode, analyze, and understand the information in packets, and, furthermore, how the information is layered. This information is input into compiler and optimizer 310.

When compiler and optimizer 310 executes, it generates two sets of internal data structures. The first is the set of parsing/extraction operations 308. The pattern structures include parsing information and describe what will be recognized in the headers of packets; the extraction operations are what elements of a packet are to be extracted from the packets based on the patterns that get matched. Thus, database 308 of parsing/extraction operations includes information describing how to determine a set of one or more protocol dependent extraction operations from data in the packet that indicate a protocol used in the packet.

The other internal data structure that is built by compiler 310 is the set of state patterns and processes 326. These are the different states and state transitions that occur in different conversational flows, and the state operations that need to be performed (e.g., patterns that need to be examined and new signatures that need to be built) during any state of a conversational flow to further the task of analyzing the conversational flow.

Thus, compiling the PDL files and layer selections provides monitor 300 with the information it needs to begin processing packets. In an alternate embodiment, the contents of one or more of databases 308 and 326 may be manually or otherwise generated. Note that in some embodiments the layering selections information is inherent rather than explicitly described. For example, since a PDL file for a protocol includes the child protocols, the parent protocols also may be determined.

In the preferred embodiment, the packet 302 from the acquisition device is input into a packet buffer. The pattern recognition process 304 is carried out by a pattern analysis and recognition (PAR) engine that analyzes and recognizes patterns in the packets. In particular, the PAR locates the next protocol field in the header and determines the length of the header, and may perform certain other tasks for certain types of protocol headers. An example of this is type and length comparison to distinguish an IEEE 802.3 (Ethernet) packet from the older type 2 (or Version 2) Ethernet packet, also called a DIGITAL-Intel-Xerox (DIX) packet. The PAR also uses the pattern structures and extraction operations database 308 to identify the next protocol and parameters associated with that protocol that enables analysis of the next protocol layer. Once a pattern or a set of patterns has been identified, it/they will be associated with a set of none or more extraction operations. These extraction operations (in the form of commands and associated parameters) are passed to the extraction process 306 implemented by an extracting and information identifying (EII) engine that extracts selected parts of the packet, including identifying information from the packet as required for recognizing this packet as part of a flow. The extracted information is put in sequence and then processed in block 312 to build a unique flow signature (also called a "key") for this flow. A flow signature depends on the protocols used in the packet. For some protocols, the extracted components may include source and destination addresses. For example, Ethernet frames have end-point addresses that are useful in building a better flow signature. Thus, the signature typically includes the client and server address pairs. The signature is used to recognize further packets that are or may be part of this flow.

In the preferred embodiment, the building of the flow key includes generating a hash of the signature using a hash function. The purpose if using such a hash is conventional-to spread flow-entries identified by the signature across a database for efficient searching. The hash generated is preferably based on a hashing algorithm and such hash generation is known to those in the art.

In one embodiment, the parser passes data from the packet-a parser record-that includes the signature (i.e., selected portions of the packet), the hash, and the packet itself to allow for any state processing that requires further data from the packet. An improved embodiment of the parser subsystem might generate a parser record that has some predefined structure and that includes the signature, the hash, some flags related to some of the fields in the parser record, and parts of the packet's payload that the parser subsystem has determined might be required for further processing, e.g., for state processing.

Note that alternate embodiments may use some function other than concatenation of the selected portions of the packet to make the identifying signature. For example, some "digest function" of the concatenated selected portions may be used.

The parser record is passed onto lookup process 314 which looks in an internal data store of records of known flows that the system has already encountered, and decides (in 316) whether or not this particular packet belongs to a known flow as indicated by the presence of a flow-entry matching this flow in a database of known flows 324. A record in database 324 is associated with each encountered flow.

The parser record enters a buffer called the unified flow key buffer (UFKB). The UFKB stores the data on flows in a data structure that is similar to the parser record, but that includes a field that can be modified. In particular, one or the UFKB record fields stores the packet sequence number, and another is filled with state information in the form of a program counter for a state processor that implements state processing 328.

The determination (316) of whether a record with the same signature already exists is carried out by a lookup engine (LUE) that obtains new UFKB records and uses the hash in the UFKB record to lookup if there is a matching known flow. In the particular embodiment, the database of known flows 324 is in an external memory. A cache is associated with the database 324. A lookup by the LUE for a known record is carried out by accessing the cache using the hash, and if the entry is not already present in the cache, the entry is looked up (again using the hash) in the external memory.

The flow-entry database 324 stores flow-entries that include the unique flow-signature, state information, and extracted information from the packet for updating flows, and one or more statistical about the flow. Each entry completely describes a flow. Database 324 is organized into bins that contain a number, denoted N, of flow-entries (also called flow-entries, each a bucket), with N being 4 in the preferred embodiment. Buckets (i.e., flow-entries) are accessed via the hash of the packet from the parser subsystem 301 (i.e., the hash in the UFKB record). The hash spreads the flows across the database to allow for fast lookups of entries, allowing shallower buckets. The designer selects the bucket depth N based on the amount of memory attached to the monitor, and the number of bits of the hash data value used. For example, in one embodiment, each flow-entry is 128 bytes long, so for 128K flow-entries, 16 Mbytes are required. Using a 16-bit hash gives two flow-entries per bucket. Empirically, this has been shown to be more than adequate for the vast majority of cases. Note that another embodiment uses flow-entries that are 256 bytes long.

Herein, whenever an access to database 324 is described, it is to be understood that the access is via the cache, unless otherwise stated or clear from the context.

If there is no flow-entry found matching the signature, i.e., the signature is for a new flow, then a protocol and state identification process 318 further determines the state and protocol. That is, process 318 determines the protocols and where in the state sequence for a flow for this protocol's this packet belongs. Identification process 318 uses the extracted information and makes reference to the database 326 of state patterns and processes. Process 318 is then followed by any state operations that need to be executed on this packet by a state processor 328.

If the packet is found to have a matching flow-entry in the database 324 (e.g., in the cache), then a process 320 determines, from the looked-up flow-entry, if more classification by state processing of the flow signature is necessary. If not, a process 322 updates the flow-entry in the flow-entry database 324 (e.g., via the cache). Updating includes updating one or more statistical measures stored in the flow-entry. In our embodiment, the statistical measures are stored in counters in the flow-entry.

If state processing is required, state process 328 is commenced. State processor 328 carries out any state operations specified for the state of the flow and updates the state to the next state according to a set of state instructions obtained form the state pattern and processes database 326.

The state processor 328 analyzes both new and existing flows in order to analyze all levels of the protocol stack, ultimately classifying the flows by application (level 7 in the ISO model). It does this by proceeding from state-to-state based on predefined state transition rules and state operations as specified in state processor instruction database 326. A state transition rule is a rule typically containing a test followed by the next-state to proceed to if the test result is true. An operation is an operation to be performed while the state processor is in a particular state-for example, in order to evaluate a quantity needed to apply the state transition rule. The state processor goes through each rule and each state process until the test is true, or there are no more tests to perform.

In general, the set of state operations may be none or more operations on a packet, and carrying out the operation or operations may leave one in a state that causes exiting the system prior to completing the identification, but possibly knowing more about what state and state processes are needed to execute next, i.e., when a next packet of this flow is encountered. As an example, a state process (set of state operations) at a particular state may build a new signature for future recognition packets of the next state.

By maintaining the state of the flows and knowing that new flows may be set up using the information from previously encountered flows, the network traffic monitor 300 provides for (a) single-packet protocol recognition of flows, and (b) multiple-packet protocol recognition of flows. Monitor 300 can even recognize the application program from one or more disjointed sub-flows that occur in server announcement type flows. What may seem to prior art monitors to be some unassociated flow, may be recognized by the inventive monitor using the flow signature to be a sub-flow associated with a previously encountered sub-flow.

Thus, state processor 328 applies the first state operation to the packet for this particular flow-entry. A process 330 decides if more operations need to be performed for this state. If so, the analyzer continues looping between block 330 and 328 applying additional state operations to this particular packet until all those operations are completed-that is, there are no more operations for this packet in this state. A process 332 decides if there are further states to be analyzed for this type of flow according to the state of the flow and the protocol, in order to fully characterize the flow. If not, the conversational flow has now been fully characterized and a process 334 finalizes the classification of the conversational flow for the flow.

In the particular embodiment, the state processor 328 starts the state processing by using the last protocol recognized by the parser as an offset into a jump table (jump vector). The jump table finds the state processor instructions to use for that protocol in the state patterns and processes database 326. Most instructions test something in the unified flow key buffer, or the flow-entry in the database of known flows 324, if the entry exists. The state processor may have to test bits, do comparisons, add, or subtract to perform the test. For example, a common operation carried out by the state processor is searching for one or more patterns in the payload part of the UFKB.

Thus, in 332 in the classification, the analyzer decides whether the flow is at an end state. If not at an end state, the flow-entry is updated (or created if a new flow) for this flow-entry in process 322.

Furthermore, if the flow is known and if in 332 it is determined that there are further states to be processed using later packets, the flow-entry is updated in process 322.

The flow-entry also is updated after classification finalization so that any further packets belonging to this flow will be readily identified from their signature as belonging to this fully analyzed conversational flow.

After updating, database 324 therefore includes the set of all the conversational flows that have occurred.

Thus, the embodiment of present invention shown in FIG. 3 automatically maintains flow-entries, which in one aspect includes storing states. The monitor of FIG. 3 also generates characteristic parts of packets-the signatures-that can be used to recognize flows. The flow-entries may be identified and accessed by their signatures. Once a packet is identified to be from a known flow, the state of the flow is known and this knowledge enables state transition analysis to be performed in real time for each different protocol and application. In a complex analysis, state transitions are traversed as more and more packets are examined. Future packets that are part of the same conversational flow have their state analysis continued from a previously achieved state. When enough packets related to an application of interest have been processed, a final recognition state is ultimately reached, *i.e.,* a set of states has been traversed by state analysis to completely characterize the conversational flow. The signature for that final state enables each new incoming packet of the same conversational flow to be individually recognized in real time.

Once a particular set of state transitions has been traversed for the first time and ends in a final state, a short-cut recognition pattern-a signature-can be generated that will key on every new incoming packet that relates to the conversational flow. Checking a signature involves a simple operation, allowing high packet rates to be successfully monitored on the network.

In improved embodiments, several state analyzers are run in parallel so that a large number of protocols and applications may be checked for. Every known protocol and application will have at least one unique set of state transitions, and can therefore be uniquely identified by watching such transitions.

When each new conversational flow starts, signatures that recognize the flow are automatically generated on-the-fly, and as further packets in the conversational flow are encountered, signatures are updated and the states of the set of state transitions for any potential application are further traversed according to the state transition rules for the flow. The new states for the flow-those associated with a set of state transitions for one or more potential applications-are added to the records of previously encountered states for easy recognition and retrieval when a new packet in the flow is encountered.

### *Detailed operation*

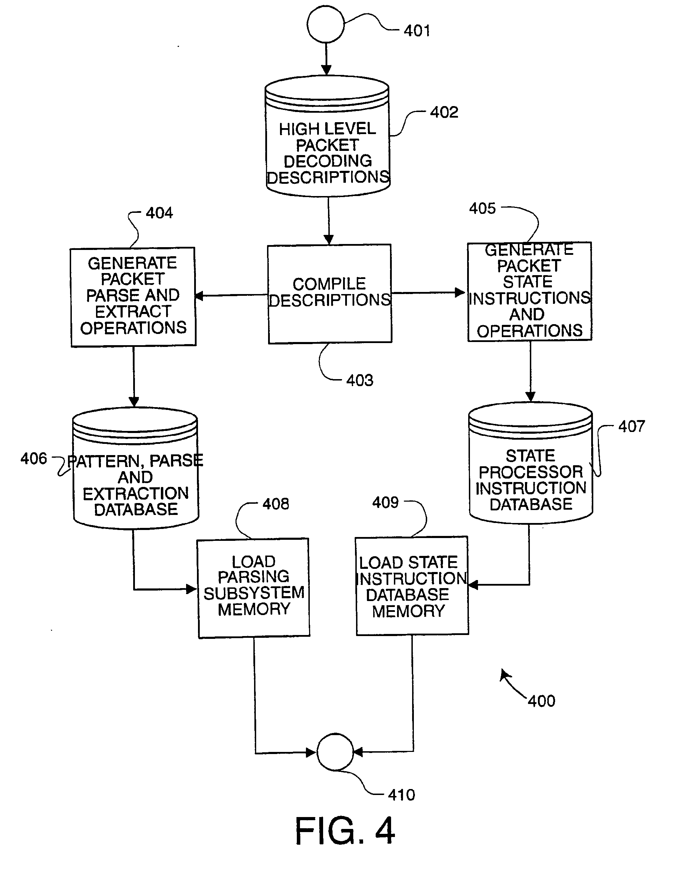

FIG. 4 diagrams an initialization system 400 that includes the compilation process. That is, part of the initialization generates the pattern structures and extraction operations database 308 and the state instruction database 328. Such initialization can occur off-line or from a central location.

The different protocols that can exist in different layers may be thought of as nodes of one or more trees of linked nodes. The packet type is the root of a tree (called level 0). Each protocol is either a parent node or a terminal node. A parent node links a protocol to other protocols (child protocols) that can be at higher layer levels. Thus a protocol may have zero or more children. Ethernet packets, for example, have several variants, each having a basic format that remains substantially the same. An Ethernet packet (the root or level 0 node) may be an Ethertype packet-also called an Ethernet TypeNersion 2 and a DIX (DIGITAL-Intel-Xerox packet)-or an IEEE 803.2 packet. Continuing with the IEEE 802.3 packet, one of the children nodes may be the IP protocol, and one of the children of the IP protocol may be the TCP protocol.

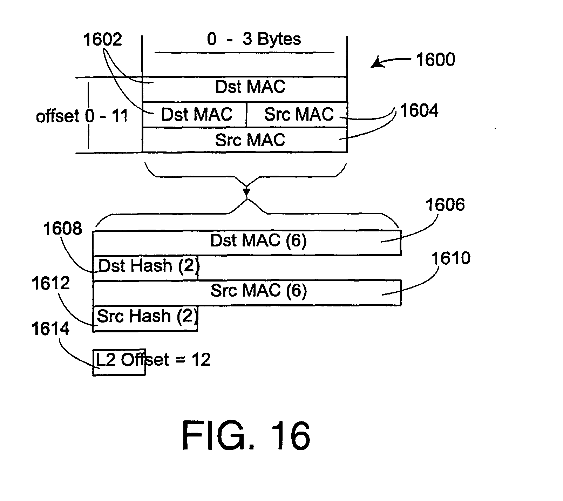

FIG. 16 shows the header 1600 (base level 1) of a complete Ethernet frame (i.e., packet) of information and includes information on the destination media access control address (Dst MAC 1602) and the source media access control address (Src MAC 1604). Also shown in FIG. 16 is some (but not all) of the information specified in the PDL files for extraction the signature.

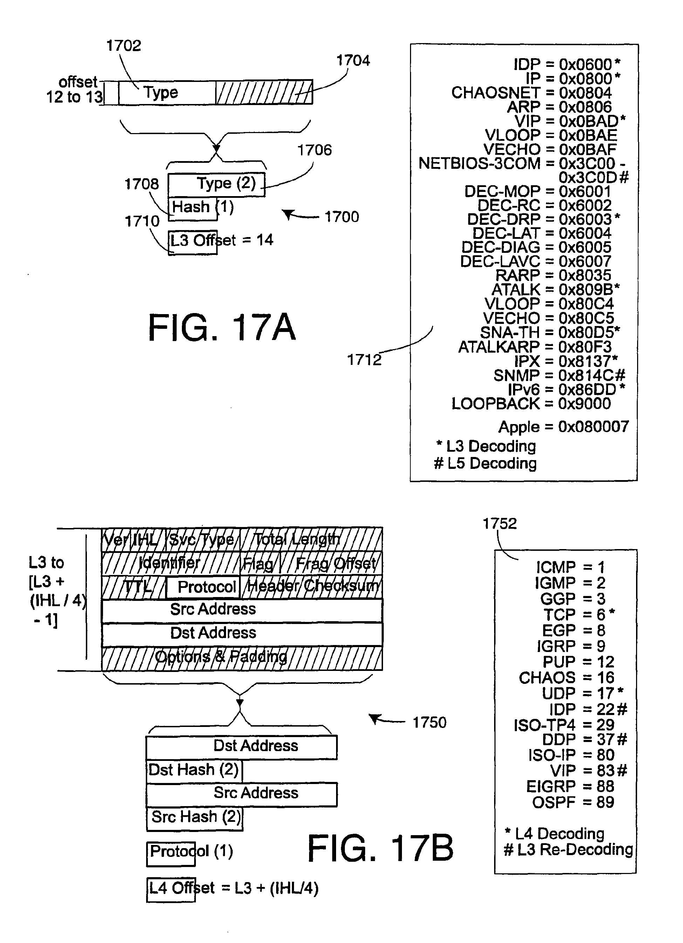

FIG. 17A now shows the header information for the next level (level-2) for an Ethertype packet 1700. For an Ethertype packet 1700, the relevant information from the packet that indicates the next layer level is a two-byte type field 1702 containing the child recognition pattern for the next level. The remaining information 1704 is shown hatched because it not relevant for this level. The list 1712 shows the possible children for an Ethertype packet as indicated by what child recognition pattern is found offset 12. FIG. 17B shows the structure of the header of one of the possible next levels, that of the IP protocol. The possible children of the IP protocol are shown in table 1752.

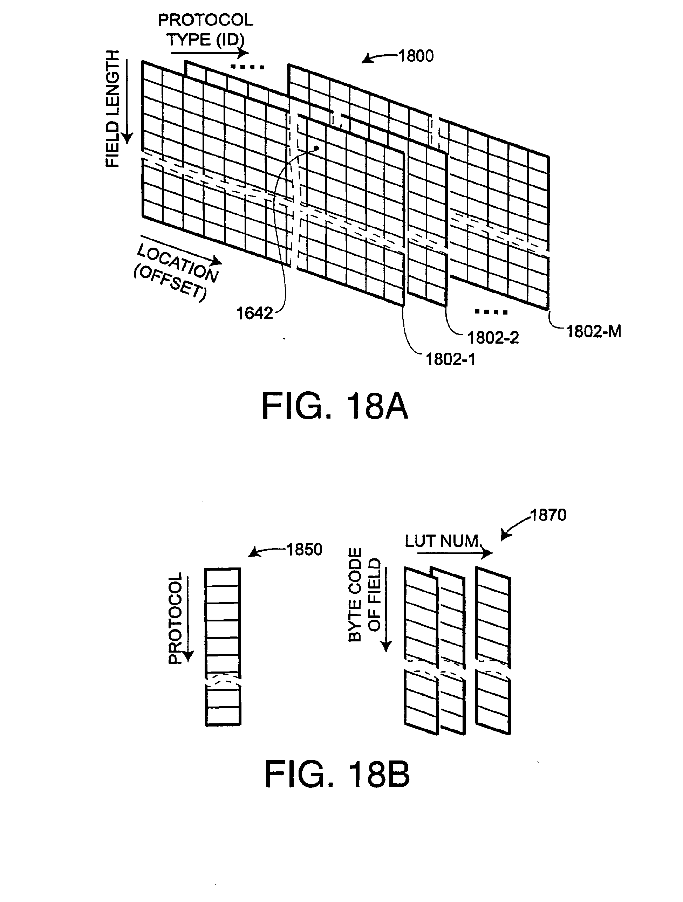

The pattern, parse, and extraction database (pattern recognition database, or PRD) 308 generated by compilation process 310, in one embodiment, is in the form of a three dimensional structure that provides for rapidly searching packet headers for the next protocol. FIG. 18A shows such a 3-D representation 1800 (which may be considered as an indexed set of 2-D representations). A compressed form of the 3-D structure is preferred.

An alternate embodiment of the data structure used in database 308 is illustrated in FIG. 18B. Thus, like the 3-D structure of FIG. 18A, the data structure permits rapid searches to be performed by the pattern recognition process 304 by indexing locations in a memory rather than performing address link computations. In this alternate embodiment, the PRD 308 includes two parts, a single protocol table 1850 (PT) which has an entry for each protocol known for the monitor, and a series of Look Up Tables 1870 (LUT's) that are used to identify known protocols and their children. The protocol table includes the parameters needed by the pattern analysis and recognition process 304 (implemented by PRE 1006) to evaluate the header information in the packet that is associated with that protocol, and parameters needed by extraction process 306 (implemented by slicer 1007) to process the packet header. When there are children, the PT describes which bytes in the header to evaluate to determine the child protocol. In particular, each PT entry contains the header length, an offset to the child, a slicer command, and some flags.

The pattern matching is carried out by finding particular "child recognition codes" in the header fields, and using these codes to index one or more of the LUT's. Each LUT entry has a node code that can have one of four values, indicating the protocol that has been recognized, a code to indicate that the protocol has been partially recognized (more LUT lookups are needed), a code to indicate that this is a terminal node, and a null node to indicate a null entry. The next LUT to lookup is also returned from a LUT lookup.

Compilation process is described in FIG. 4. The source-code information in the form of protocol description files is shown as 402. In the particular embodiment, the high level decoding descriptions includes a set of protocol description files 336, one for each protocol, and a set of packet layer selections 338, which describes the particular layering (sets of trees of protocols) that the monitor is to be able to handle.

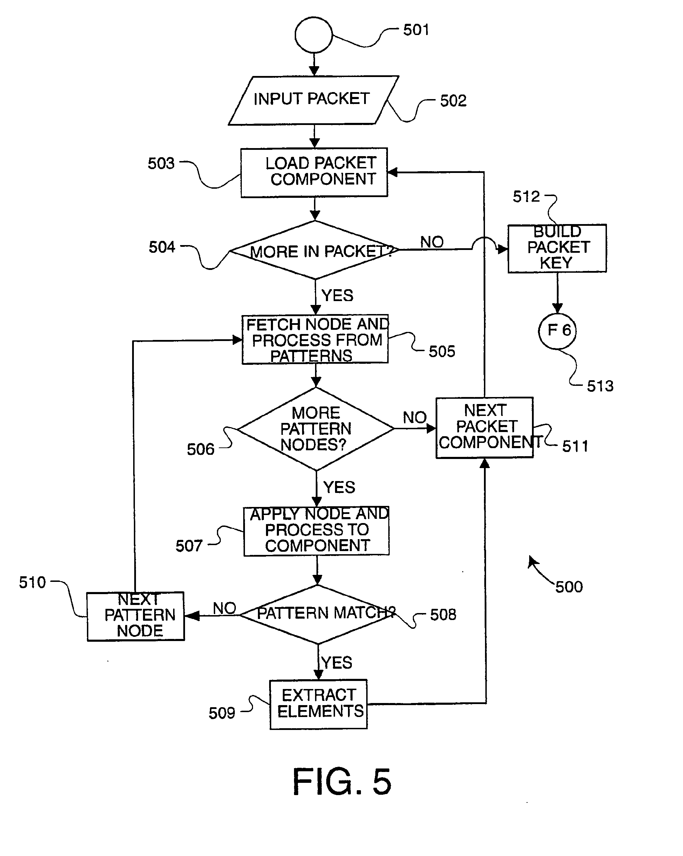

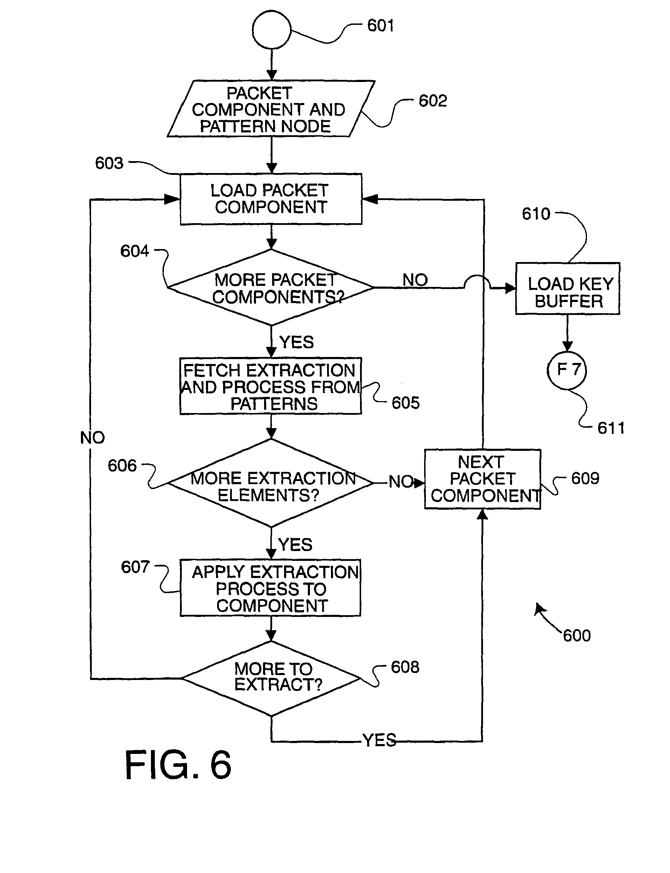

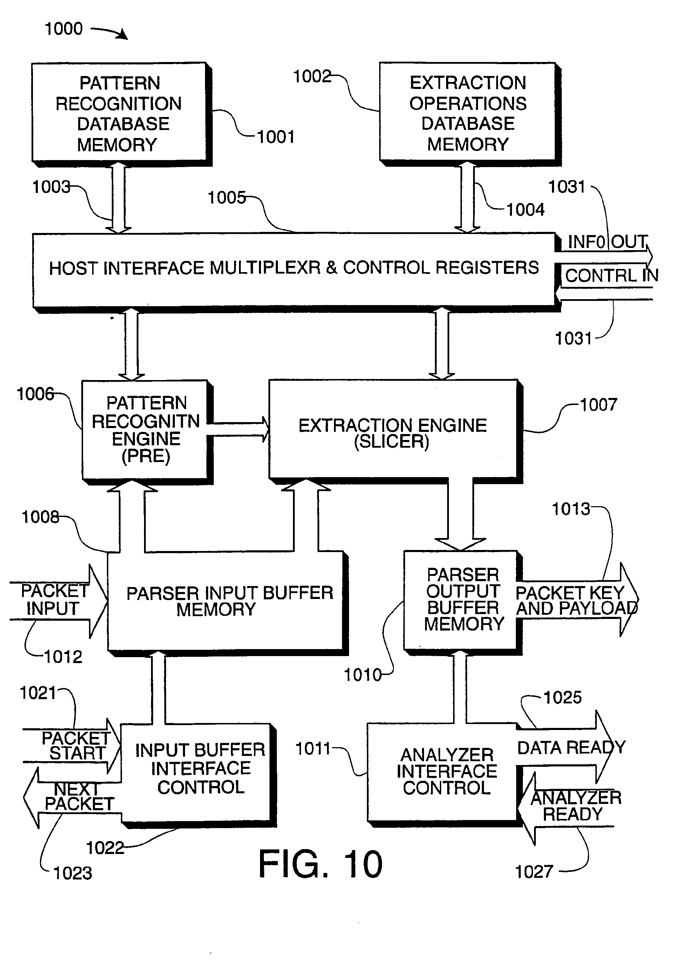

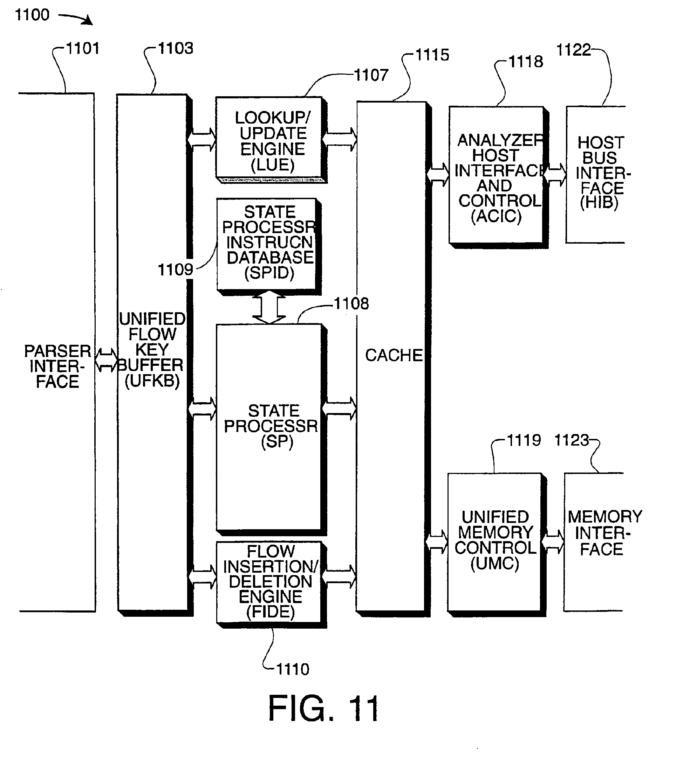

A compiler 403 compiles the descriptions. The set of packet parse-and-extract operations 406 is generated (404), and a set of packet state instructions and operations 407 is generated (405) in the form of instructions for the state processor that implements state processing process 328. Data files for each type of application and protocol to be recognized by the analyzer are downloaded from the pattern, parse, and extraction database 406 into the memory systems of the parser and extraction engines. (See the parsing process 500 description and FIG. 5; the extraction process 600 description and FIG. 6; and the parsing subsystem hardware description and FIG. 10). Data files for each type of application and protocol to be recognized by the analyzer are also downloaded from the state-processor instruction database 407 into the state processor. (see the state processor 1108 description and FIG. 11.).

Note that generating the packet parse and extraction operations builds and links the three dimensional structure (one embodiment) or the or all the lookup tables for the PRD.

Because of the large number of possible protocol trees and subtrees, the compiler process 400 includes optimization that compares the trees and subtrees to see which children share common parents. When implemented in the form of the LUT's, this process can generate a single LUT from a plurality of LUT's. The optimization process further includes a compaction process that reduces the space needed to store the data of the PRD.

As an example of compaction, consider the 3-D structure of FIG. 18A that can be thought of as a set of 2-D structures each representing a protocol. To enable saving space by using only one array per protocol which may have several parents, in one embodiment, the pattern analysis subprocess keeps a "current header" pointer. Each location (offset) index for each protocol 2-D array in the 3-D structure is a relative location starting with the start of header for the particular protocol. Furthermore, each of the two-dimensional arrays is sparse. The next step of the optimization, is checking all the 2-D arrays against all the other 2-D arrays to find out which ones can share memory. Many of these 2-D arrays are often sparsely populated in that they each have only a small number of valid entries. So, a process of "folding" is next used to combine two or more 2-D arrays together into one physical 2-D array without losing the identity of any of the original 2-D arrays (i.e., all the 2-D arrays continue to exist logically). Folding can occur between any 2-D arrays irrespective of their location in the tree as long as certain conditions are met. Multiple arrays may be combined into a single array as long as the individual entries do not conflict with each other. A fold number is then used to associate each element with its original array. A similar folding process is used for the set of LUTs 1850 in the alternate embodiment of FIG. 18B.

In 410, the analyzer has been initialized and is ready to perform recognition.

FIG. 5 shows a flowchart of how actual parser subsystem 301 functions. Starting at 501, the packet 302 is input to the packet buffer in step 502. Step 503 loads the next (initially the first) packet component from the packet 302. The packet components are extracted from each packet 302 one element at a time. A check is made (504) to determine if the load-packet-component operation 503 succeeded, indicating that there was more in the packet to process. If not, indicating all components have been loaded, the parser subsystem 301 builds the packet signature (512)-the next stage (FIG 6).

If a component is successfully loaded in 503, the node and processes are fetched (505) from the pattern, parse and extraction database 308 to provide a set of patterns and processes for that node to apply to the loaded packet component. The parser subsystem 301 checks (506) to determine if the fetch pattern node operation 505 completed successfully, indicating there was a pattern node that loaded in 505. If not, step 511 moves to the next packet component. If yes, then the node and pattern matching process are applied in 507 to the component extracted in 503. A pattern match obtained in 507 (as indicated by test 508) means the parser subsystem 301 has found a node in the parsing elements; the parser subsystem 301 proceeds to step 509 to extract the elements.

If applying the node process to the component does not produce a match (test 508), the parser subsystem 301 moves (510) to the next pattern node from the pattern database 308 and to step 505 to fetch the next node and process. Thus, there is an "applying patterns" loop between 508 and 505. Once the parser subsystem 301 completes all the patterns and has either matched or not, the parser subsystem 301 moves to the next packet component (511).

Once all the packet components have been the loaded and processed from the input packet 302, then the load packet will fail (indicated by test 504), and the parser subsystem 301 moves to build a packet signature which is described in FIG. 6

FIG. 6 is a flow chart for extracting the information from which to build the packet signature. The flow starts at 601, which is the exit point 513 of FIG. 5. At this point parser subsystem 301 has a completed packet component and a pattern node available in a buffer (602). Step 603 loads the packet component available from the pattern analysis process of FIG. 5. If the load completed (test 604), indicating that there was indeed another packet component, the parser subsystem 301 fetches in 605 the extraction and process elements received from the pattern node component in 602. If the fetch was successful (test 606), indicating that there are extraction elements to apply, the parser subsystem 301 in step 607 applies that extraction process to the packet component based on an extraction instruction received from that pattern node. This removes and saves an element from the packet component.

In step 608, the parser subsystem 301 checks if there is more to extract from this component, and if not, the parser subsystem 301 moves back to 603 to load the next packet component at hand and repeats the process. If the answer is yes, then the parser subsystem 301 moves to the next packet component ratchet. That new packet component is then loaded in step 603. As the parser subsystem 301 moved through the loop between 608 and 603, extra extraction processes are applied either to the same packet component if there is more to extract, or to a different packet component if there is no more to extract.

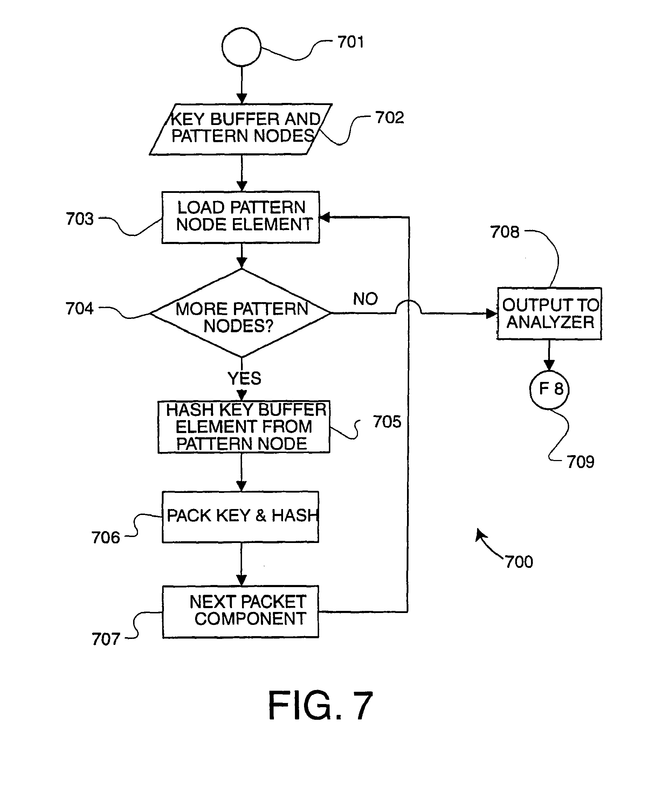

The extraction process thus builds the signature, extracting more and more components according to the information in the patterns and extraction database 308 for the particular packet. Once loading the next packet component operation 603 fails (test 604), all the components have been extracted. The built signature is loaded into the signature buffer (610) and the parser subsystem 301 proceeds to FIG. 7 to complete the signature generation process.

Referring now to FIG. 7, the process continues at 701. The signature buffer and the pattern node elements are available (702). The parser subsystem 301 loads the next pattern node element. If the load was successful (test 704) indicating there are more nodes, the parser subsystem 301 in 705 hashes the signature buffer element based on the hash elements that are found in the pattern node that is in the element database. In 706 the resulting signature and the hash are packed. In 707 the parser subsystem 301 moves on to the next packet component which is loaded in 703.

The 703 to 707 loop continues until there are no more patterns of elements left (test 704). Once all the patterns of elements have been hashed, processes 304, 306 and 312 of parser subsystem 301 are complete. Parser subsystem 301 has generated the signature used by the analyzer subsystem 303.

A parser record is loaded into the analyzer, in particular, into the UFKB in the form of a UFKB record which is similar to a parser record, but with one or more different fields.

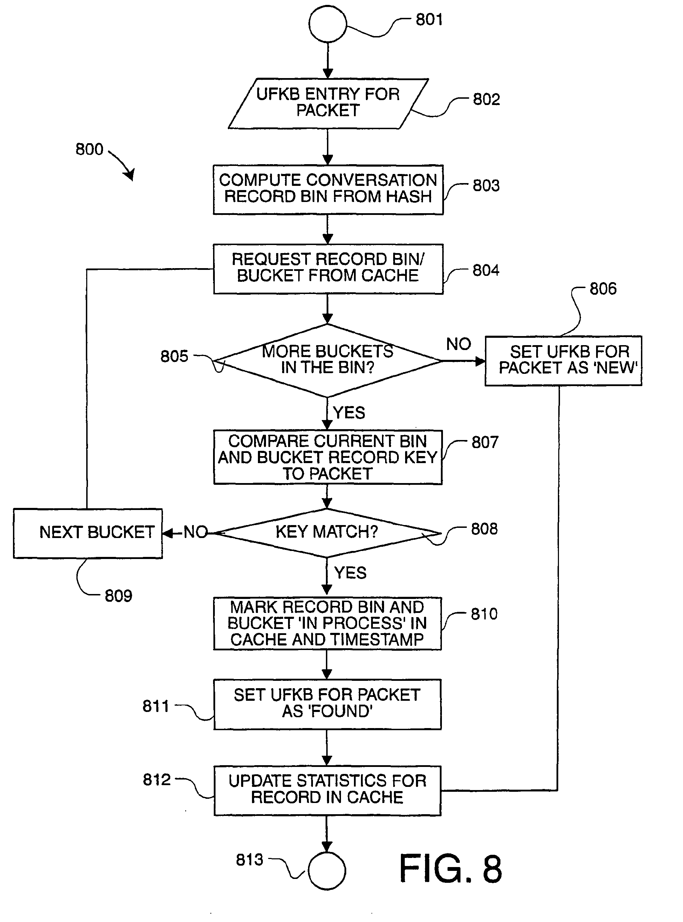

FIG. 8 is a flow diagram describing the operation of the lookup/update engine (LUE) that implements lookup operation 314. The process starts at 801 from FIG. 7 with the parser record that includes a signature, the hash and at least parts of the payload. In 802 those elements are shown in the form of a UFKB-entry in the buffer. The LUE, the lookup engine 314 computes a "record bin number" from the hash for a flow-entry. A bin herein may have one or more "buckets" each containing a flow-entry. The preferred embodiment has four buckets per bin.

Since preferred hardware embodiment includes the cache, all data accesses to records in the flowchart of FIG. 8 are stated as being to or from the cache.

Thus, in 804, the system looks up the cache for a bucket from that bin using the hash. If the cache successfully returns with a bucket from the bin number, indicating there are more buckets in the bin, the lookup/update engine compares (807) the current signature (the UFKB-entry's signature) from that in the bucket (i.e., the flow-entry signature). If the signatures match (test 808), that record (in the cache) is marked in step 810 as "in process" and a timestamp added. Step 811 indicates to the UFKB that the UFKB-entry in 802 has a status of "found." The "found" indication allows the state processing 328 to begin processing this UFKB element. The preferred hardware embodiment includes one or more state processors, and these can operate in parallel with the lookup/update engine.

In the preferred embodiment, a set of statistical operations is performed by a calculator for every packet analyzed. The statistical operations may include one or more of counting the packets associated with the flow; determining statistics related to the size of packets of the flow; compiling statistics on differences between packets in each direction, for example using timestamps; and determining statistical relationships of timestamps of packets in the same direction. The statistical measures are kept in the flow-entries. Other statistical measures also may be compiled. These statistics may be used singly or in combination by a statistical processor component to analyze many different aspects of the flow. This may include determining network usage metrics from the statistical measures, for example to ascertain the network's ability to transfer information for this application. Such analysis provides for measuring the quality of service of a conversation, measuring how well an application is performing in the network, measuring network resources consumed by an application, and so forth.

To provide for such analyses, the lookup/update engine updates one or more counters that are part of the flow-entry (in the cache) in step 812. The process exits at 813. In our embodiment, the counters include the total packets of the flow, the time, and a differential time from the last timestamp to the present timestamp.

It may be that the bucket of the bin did not lead to a signature match (test 808). In such a case, the analyzer in 809 moves to the next bucket for this bin. Step 804 again looks up the cache for another bucket from that bin. The lookup/update engine thus continues lookup up buckets of the bin until there is either a match in 808 or operation 804 is not successful (test 805), indicating that there are no more buckets in the bin and no match was found.

If no match was found, the packet belongs to a new (not previously encountered) flow. In 806 the system indicates that the record in the unified flow key buffer for this packet is new, and in 812, any statistical updating operations are performed for this packet by updating the flow-entry in the cache. The update operation exits at 813. A flow insertion/deletion engine (FIDE) creates a new record for this flow (again via the cache).

Thus, the update/lookup engine ends with a UFKB-entry for the packet with a "new" status or a "found" status.

Note that the above system uses a hash to which more than one flow-entry can match. A longer hash may be used that corresponds to a single flow-entry. In such an embodiment, the flow chart of FIG. 8 is simplified as would be clear to those in the art.

### The hardware system

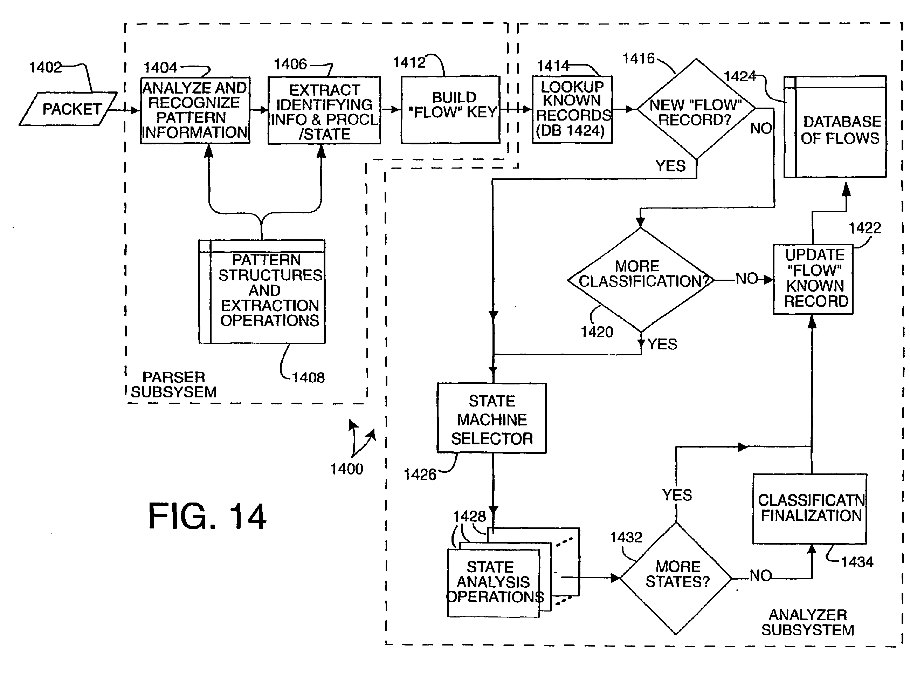

Each of the individual hardware elements through which the data flows in the system are now described with reference to FIGS. 10 and 11. Note that while we are describing a particular hardware implementation of the invention embodiment of FIG. 3, it would be clear to one skilled in the art that the flow of FIG. 3 may alternatively be implemented in software running on one or more general-purpose processors, or only partly implemented in hardware. An implementation of the invention that can operate in software is shown in FIG. 14. The hardware embodiment (FIGS. 10 and 11) can operate at over a million packets per second, while the software system of FIG. 14 may be suitable for slower networks. To one skilled in the art it would be clear that more and more of the system may be implemented in software as processors become faster.

FIG. 10 is a description of the parsing subsystem (301, shown here as subsystem 1000) as implemented in hardware. Memory 1001 is the pattern recognition database memory, in which the patterns that are going to be analyzed are stored. Memory 1002 is the extraction-operation database memory, in which the extraction instructions are stored. Both 1001 and 1002 correspond to internal data structure 308 of FIG. 3. Typically, the system is initialized from a microprocessor (not shown) at which time these memories are loaded through a host interface multiplexor and control register 1005 via the internal buses 1003 and 1004. Note that the contents of 1001 and 1002 are preferably obtained by compiling process 310 of FIG. 3.

A packet enters the parsing system via 1012 into a parser input buffer memory 1008 using control signals 1021 and 1023, which control an input buffer interface controller 1022. The buffer 1008 and interface control 1022 connect to a packet acquisition device (not shown). The buffer acquisition device generates a packet start signal 1021 and the interface control 1022 generates a next packet (i.e., ready to receive data) signal 1023 to control the data flow into parser input buffer memory 1008. Once a packet starts loading into the buffer memory 1008, pattern recognition engine (PRE) 1006 carries out the operations on the input buffer memory described in block 304 of FIG. 3. That is, protocol types and associated headers for each protocol layer that exist in the packet are determined.

The PRE searches database 1001 and the packet in buffer 1008 in order to recognize the protocols the packet contains. In one implementation, the database 1001 includes a series of linked lookup tables. Each lookup table uses eight bits of addressing. The first lookup table is always at address zero. The Pattern Recognition Engine uses a base packet offset from a control register to start the comparison. It loads this value into a current offset pointer (COP). It then reads the byte at base packet offset from the parser input buffer and uses it as an address into the first lookup table.

Each lookup table returns a word that links to another lookup table or it returns a terminal flag. If the lookup produces a recognition event the database also returns a command for the slicer. Finally it returns the value to add to the COP.

The PRE 1006 includes of a comparison engine. The comparison engine has a first stage that checks the protocol type field to determine if it is an 802.3 packet and the field should be treated as a length. If it is not a length, the protocol is checked in a second stage. The first stage is the only protocol level that is not programmable. The second stage has two full sixteen bit content addressable memories (CAMs) defined for future protocol additions.

Thus, whenever the PRE recognizes a pattern, it also generates a command for the extraction engine (also called a "slicer") 1007. The recognized patterns and the commands are sent to the extraction engine 1007 that extracts information from the packet to build the parser record. Thus, the operations of the extraction engine are those carried out in blocks 306 and 312 of FIG. 3. The commands are sent from PRE 1006 to slicer 1007 in the form of extraction instruction pointers which tell the extraction engine 1007 where to a find the instructions in the extraction operations database memory (i.e., slicer instruction database) 1002.

Thus, when the PRE 1006 recognizes a protocol it outputs both the protocol identifier and a process code to the extractor. The protocol identifier is added to the flow signature and the process code is used to fetch the first instruction from the instruction database 1002. Instructions include an operation code and usually source and destination offsets as well as a length. The offsets and length are in bytes. A typical operation is the MOVE instruction. This instruction tells the slicer 1007 to copy n bytes of data unmodified from the input buffer 1008 to the output buffer 1010. The extractor contains a byte-wise barrel shifter so that the bytes moved can be packed into the flow signature. The extractor contains another instruction called HASH. This instruction tells the extractor to copy from the input buffer 1008 to the HASH generator.

Thus these instructions are for extracting selected element(s) of the packet in the input buffer memory and transferring the data to a parser output buffer memory 1010. Some instructions also generate a hash.

The extraction engine 1007 and the PRE operate as a pipeline. That is, extraction engine 1007 performs extraction operations on data in input buffer 1008 already processed by PRE 1006 while more (i.e., later arriving) packet information is being simultaneously parsed by PRE 1006. This provides high processing speed sufficient to accommodate the high arrival rate speed of packets.

Once all the selected parts of the packet used to form the signature are extracted, the hash is loaded into parser output buffer memory 1010. Any additional payload from the packet that is required for further analysis is also included. The parser output memory 1010 is interfaced with the analyzer subsystem by analyzer interface control 1011. Once all the information of a packet is in the parser output buffer memory 1010, a data ready signal 1025 is asserted by analyzer interface control. The data from the parser subsystem 1000 is moved to the analyzer subsystem via 1013 when an analyzer ready signal 1027 is asserted.

FIG. 11 shows the hardware components and dataflow for the analyzer subsystem that performs the functions of the analyzer subsystem 303 of FIG. 3. The analyzer is initialized prior to operation, and initialization includes loading the state processing information generated by the compilation process 310 into a database memory for the state processing, called state processor instruction database (SPID) memory 1109.

The analyzer subsystem 1100 includes a host bus interface 1122 using an analyzer host interface controller 1118, which in turn has access to a cache system 1115. The cache system has bi-directional access to and from the state processor of the system 1108. State processor 1108 is responsible for initializing the state processor instruction database memory 1109 from information given over the host bus interface 1122.

With the SPID 1109 loaded, the analyzer subsystem 1100 receives parser records comprising packet signatures and payloads that come from the parser into the unified flow key buffer (UFKB) 1103. UFKB is comprised of memory set up to maintain UFKB records. A UFKB record is essentially a parser record; the UFKB holds records of packets that are to be processed or that are in process. Furthermore, the UFKB provides for one or more fields to act as modifiable status flags to allow different processes to run concurrently.

Three processing engines run concurrently and access records in the UFKB 1103: the lookup/update engine (LUE) 1107, the state processor (SP) 1108, and the flow insertion and deletion engine (FIDE) 1110. Each of these is implemented by one or more finite state machines (FSM's). There is bi-directional access between each of the finite state machines and the unified flow key buffer 1103. The UFKB record includes a field that stores the packet sequence number, and another that is filled with state information in the form of a program counter for the state processor 1108 that implements state processing 328. The status flags of the UFKB for any entry includes that the LUE is done and that the LUE is transferring processing of the entry to the state processor. The LUE done indicator is also used to indicate what the next entry is for the LUE. There also is provided a flag to indicate that the state processor is done with the current flow and to indicate what the next entry is for the state processor. There also is provided a flag to indicate the state processor is transferring processing of the UFKB-entry to the flow insertion and deletion engine.

A new UFKB record is first processed by the LUE 1107. A record that has been processed by the LUE 1107 may be processed by the state processor 1108, and a UFKB record data may be processed by the flow insertion/deletion engine 1110 after being processed by the state processor 1108 or only by the LUE. Whether or not a particular engine has been applied to any unified flow key buffer entry is determined by status fields set by the engines upon completion. In one embodiment, a status flag in the UFKB-entry indicates whether an entry is new or found. In other embodiments, the LUE issues a flag to pass the entry to the state processor for processing, and the required operations for a new record are included in the SP instructions.

Note that each UFKB-entry may not need to be processed by all three engines. Furthermore, some UFKB entries may need to be processed more than once by a particular engine.

Each of these three engines also has bi-directional access to a cache subsystem 1115 that includes a caching engine. Cache 1115 is designed to have information flowing in and out of it from five different points within the system: the three engines, external memory via a unified memory controller (UMC) 1119 and a memory interface 1123, and a microprocessor via analyzer host interface and control unit (ACIC) 1118 and host interface bus (HIB) 1122. The analyzer microprocessor (or dedicated logic processor) can thus directly insert or modify data in the cache.

The cache subsystem 1115 is an associative cache that includes a set of content addressable memory cells (CAMs) each including an address portion and a pointer portion pointing to the cache memory (e.g., RAM) containing the cached flow-entries. The CAMs are arranged as a stack ordered from a top CAM to a bottom CAM. The bottom CAM's pointer points to the least recently used (LRU) cache memory entry. Whenever there is a cache miss, the contents of cache memory pointed to by the bottom CAM are replaced by the flow-entry from the flow-entry database 324. This now becomes the most recently used entry, so the contents of the bottom CAM are moved to the top CAM and all CAM contents are shifted down. Thus, the cache is an associative cache with a true LRU replacement policy.

The LUE 1107 first processes a UFKB-entry, and basically performs the operation of blocks 314 and 316 in FIG. 3. A signal is provided to the LUE to indicate that a "new" UFKB-entry is available. The LUE uses the hash in the UFKB-entry to read a matching bin of up to four buckets from the cache. The cache system attempts to obtain the matching bin. If a matching bin is not in the cache, the cache 1115 makes the request to the UMC 1119 to bring in a matching bin from the external memory.

When a flow-entry is found using the hash, the LUE 1107 looks at each bucket and compares it using the signature to the signature of the UFKB-entry until there is a match or there are no more buckets.

If there is no match, or if the cache failed to provide a bin of flow-entries from the cache, a time stamp in set in the flow key of the UFKB record, a protocol identification and state determination is made using a table that was loaded by compilation process 310 during initialization, the status for the record is set to indicate the LUE has processed the record, and an indication is made that the UFKB-entry is ready to start state processing. The identification and state determination generates a protocol identifier which in the preferred embodiment is a "jump vector" for the state processor which is kept by the UFKB for this UFKB-entry and used by the state processor to start state processing for the particular protocol. For example, the jump vector jumps to the subroutine for processing the state.

If there was a match, indicating that the packet of the UFKB-entry is for a previously encountered flow, then a calculator component enters one or more statistical measures stored in the flow-entry, including the timestamp. In addition, a time difference from the last stored timestamp may be stored, and a packet count may be updated. The state of the flow is obtained from the flow-entry is examined by looking at the protocol identifier stored in the flow-entry of database 324. If that value indicates that no more classification is required, then the status for the record is set to indicate the LUE has processed the record. In the preferred embodiment, the protocol identifier is a jump vector for the state processor to a subroutine to state processing the protocol, and no more classification is indicated in the preferred embodiment by the jump vector being zero. If the protocol identifier indicates more processing, then an indication is made that the UFKB-entry is ready to start state processing and the status for the record is set to indicate the LUE has processed the record.

The state processor 1108 processes information in the cache system according to a UFKB-entry after the LUE has completed. State processor 1108 includes a state processor program counter SPPC that generates the address in the state processor instruction database 1109 loaded by compiler process 310 during initialization. It contains an Instruction Pointer (SPIP) which generates the SPID address. The instruction pointer can be incremented or loaded from a Jump Vector Multiplexor which facilitates conditional branching. The SPIP can be loaded from one of three sources: (1) A protocol identifier from the UFKB, (2) an immediate jump vector form the currently decoded instruction, or (3) a value provided by the arithmetic logic unit (SPALU) included in the state processor.

Thus, after a Flow Key is placed in the UFKB by the LUE with a known protocol identifier, the Program Counter is initialized with the last protocol recognized by the Parser. This first instruction is a jump to the subroutine which analyzes the protocol that was decoded.

The State Processor ALU (SPALU) contains all the Arithmetic, Logical and String Compare functions necessary to implement the State Processor instructions. The main blocks of the SPALU are: The A and B Registers, the Instruction Decode & State Machines, the String Reference Memory the Search Engine, an Output Data Register and an Output Control Register

The Search Engine in turn contains the Target Search Register set, the Reference Search Register set, and a Compare block which compares two operands by exclusive-or-ing them together.

Thus, after the UFKB sets the program counter, a sequence of one or more state operations are be executed in state processor 1108 to further analyze the packet that is in the flow key buffer entry for this particular packet.

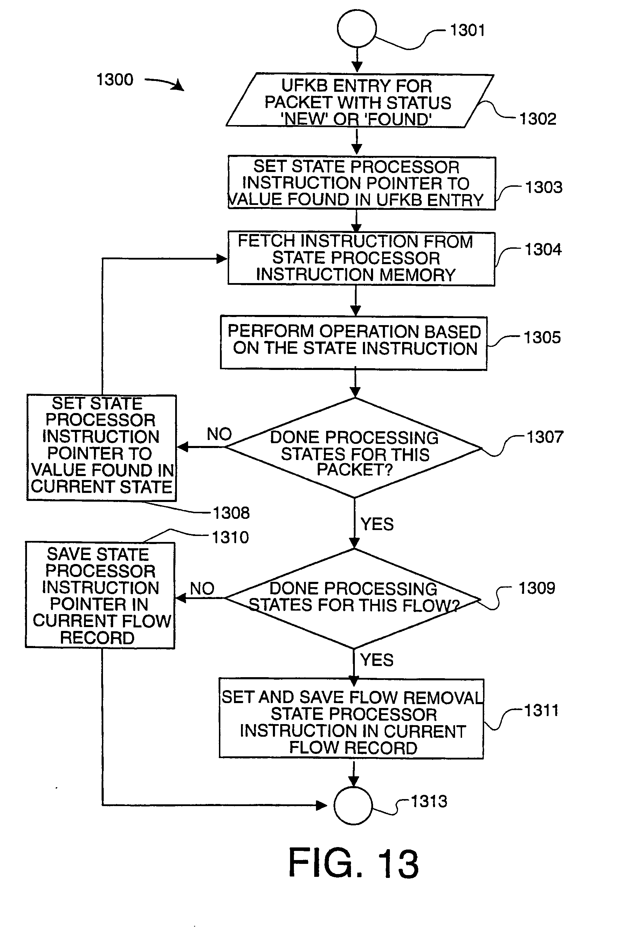

FIG. 13 describes the operation of the state processor 1108. The state processor is entered at 1301 with a unified flow key buffer entry to be processed. The UFKB-entry is new or corresponding to a found flow-entry. This UFKB-entry is retrieved from unified flow key buffer 1103 in 1301. In 1303, the protocol identifier for the UFKB-entry is used to set the state processor's instruction counter. The state processor 1108 starts the process by using the last protocol recognized by the parser subsystem 301 as an offset into a jump table. The jump table takes us to the instructions to use for that protocol. Most instructions test something in the unified flow key buffer or the flow-entry if it exists. The state processor 1108 may have to test bits, do comparisons, add or subtract to perform the test.

The first state processor instruction is fetched in 1304 from the state processor instruction database memory 1109. The state processor performs the one or more fetched operations (1304). In our implementation, each single state processor instruction is very primitive (e.g., a move, a compare, etc.), so that many such instructions need to be performed on each unified flow key buffer entry. One aspect of the state processor is its ability to search for one or more (up to four) reference strings in the payload part of the UFKB entry. This is implemented by a search engine component of the state processor responsive to special searching instructions.

In 1307, a check is made to determine if there are any more instructions to be performed for the packet. If yes, then in 1308 the system sets the state processor instruction pointer (SPIP) to obtain the next instruction. The SPIP may be set by an immediate jump vector in the currently decoded instruction, or by a value provided by the SPALU during processing.

The next instruction to be performed is now fetched (1304) for execution. This state processing loop between 1304 and 1307 continues until there are no more instructions to be performed.

At this stage, a check is made in 1309 if the processing on this particular packet has resulted in a final state. That is, is the analyzer is done processing not only for this particular packet, but for the whole flow to which the packet belongs, and the flow is fully determined. If indeed there are no more states to process for this flow, then in 1311 the processor finalizes the processing. Some final states may need to put a state in place that tells the system to remove a flow-for example, if a connection disappears from a lower level connection identifier. In that case, in 1311, a flow removal state is set and saved in the flow-entry. The flow removal state may be a NOP (no-op) instruction which means there are no removal instructions.

Once the appropriate flow removal instruction as specified for this flow (a NOP or otherwise) is set and saved, the process is exited at 1313. The state processor 1108 can now obtain another unified flow key buffer entry to process.

If at 1309 it is determined that processing for this flow is not completed, then in 1310 the system saves the state processor instruction pointer in the current flow-entry in the current flow-entry. That will be the next operation that will be performed the next time the LRE 1107 finds packet in the UFKB that matches this flow. The processor now exits processing this particular unified flow key buffer entry at 1313.

Note that state processing updates information in the unified flow key buffer 1103 and the flow-entry in the cache. Once the state processor is done, a flag is set in the UFKB for the entry that the state processor is done. Furthermore, If the flow needs to be inserted or deleted from the database of flows, control is then passed on to the flow insertion/deletion engine 1110 for that flow signature and packet entry. This is done by the state processor setting another flag in the UFKB for this UFKB-entry indicating that the state processor is passing processing of this entry to the flow insertion and deletion engine.

The flow insertion and deletion engine 1110 is responsible for maintaining the flow-entry database. In particular, for creating new flows in the flow database, and deleting flows from the database so that they can be reused.

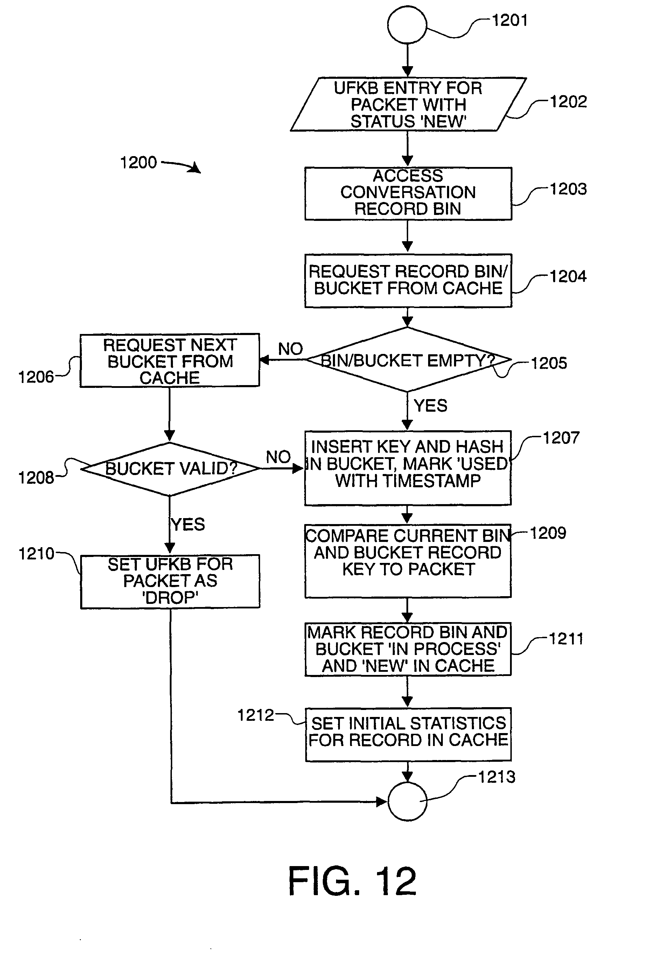

The process of flow insertion is now described with the aid of FIG. 12. Flows are grouped into bins of buckets by the hash value. The engine processes a UFKB-entry that may be new or that the state processor otherwise has indicated needs to be created. FIG. 12 shows the case of a new entry being created. A conversation record bin (preferably containing 4 buckets for four records) is obtained in 1203. This is a bin that matches the hash of the UFKB, so this bin may already have been sought for the UFKB-entry by the LUE. In 1204 the FIDE 1110 requests that the record bin/bucket be maintained in the cache system 1115. If in 1205 the cache system 1115 indicates that the bin/bucket is empty, step 1207 inserts the flow signature (with the hash) into the bucket and the bucket is marked "used" in the cache engine of cache 1115 using a timestamp that is maintained throughout the process. In 1209, the FIDE 1110 compares the bin and bucket record flow signature to the packet to verify that all the elements are in place to complete the record. In 1211 the system marks the record bin and bucket as "in process" and as "new" in the cache system (and hence in the external memory). In 1212, the initial statistical measures for the flow-record are set in the cache system. This in the preferred embodiment clears the set of counters used to maintain statistics, and may perform other procedures for statistical operations requires by the analyzer for the first packet seen for a particular flow.

Back in step 1205, if the bucket is not empty, the FIDE 1110 requests the next bucket for this particular bin in the cache system. If this succeeds, the processes of 1207, 1209, 1211 and 1212 are repeated for this next bucket. If at 1208, there is no valid bucket, the unified flow key buffer entry for the packet is set as "drop," indicating that the system cannot process the particular packet because there are no buckets left in the system. The process exits at 1213. The FIDE 1110 indicates to the UFKB that the flow insertion and deletion operations are completed for this UFKB-entry. This also lets the UFKB provide the FIDE with the next UFKB record.

Once a set of operations is performed on a unified flow key buffer entry by all of the engines required to access and manage a particular packet and its flow signature, the unified flow key buffer entry is marked as "completed." That element will then be used by the parser interface for the next packet and flow signature coming in from the parsing and extracting system.

All flow-entries are maintained in the external memory and some are maintained in the cache 1115. The cache system 1115 is intelligent enough to access the flow database and to understand the data structures that exists on the other side of memory interface 1123. The lookup/update engine 1107 is able to request that the cache system pull a particular flow or "buckets" of flows from the unified memory controller 1119 into the cache system for further processing. The state processor 1108 can operate on information found in the cache system once it is looked up by means of the lookup/update engine request, and the flow insertion/deletion engine 1110 can create new entries in the cache system if required based on information in the unified flow key buffer 1103. The cache retrieves information as required from the memory through the memory interface 1123 and the unified memory controller 1119, and updates information as required in the memory through the memory controller 1119.

There are several interfaces to components of the system external to the module of FIG. 11 for the particular hardware implementation. These include host bus interface 1122,which is designed as a generic interface that can operate with any kind of external processing system such as a microprocessor or a multiplexor (MUX) system. Consequently, one can connect the overall traffic classification system of FIGS. 11 and 12 into some other processing system to manage the classification system and to extract data gathered by the system.

The memory interface 1123 is designed to interface to any of a variety of memory systems that one may want to use to store the flow-entries. One can use different types of memory systems like regular dynamic random access memory (DRAM), synchronous DRAM, synchronous graphic memory (SGRAM), static random access memory (SRAM), and so forth.

FIG. 10 also includes some "generic" interfaces. There is a packet input interface 1012-a general interface that works in tandem with the signals of the input buffer interface control 1022. These are designed so that they can be used with any kind of generic systems that can then feed packet information into the parser. Another generic interface is the interface of pipes 1031 and 1033 respectively out of and into host interface multiplexor and control registers 1005. This enables the parsing system to be managed by an external system, for example a microprocessor or another kind of external logic, and enables the external system to program and otherwise control the parser.

The preferred embodiment of this aspect of the invention is described in a hardware description language (HDL) such as VHDL or Verilog. It is designed and created in an HDL so that it may be used as a single chip system or, for instance, integrated into another general-purpose system that is being designed for purposes related to creating and analyzing traffic within a network. Verilog or other HDL implementation is only one method of describing the hardware.

In accordance with one hardware implementation, the elements shown in FIGS. 10 and 11 are implemented in a set of six field programmable logic arrays (FPGA's). The boundaries of these FPGA's are as follows. The parsing subsystem of FIG. 10 is implemented as two FPGAS; one FPGA, and includes blocks 1006, 1008 and 1012, parts of 1005, and memory 1001. The second FPGA includes 1002, 1007, 1013, 1011 parts of 1005. Referring to FIG. 11, the unified look-up buffer 1103 is implemented as a single FPGA. State processor 1108 and part of state processor instruction database memory 1109 is another FPGA. Portions of the state processor instruction database memory 1109 are maintained in external SRAM's. The lookup/update engine 1107 and the flow insertion/deletion engine 1110 are in another FPGA. The sixth FPGA includes the cache system 1115, the unified memory control 1119, and the analyzer host interface and control 1118.

Note that one can implement the system as one or more VSLI devices, rather than as a set of application specific integrated circuits (ASIC's) such as FPGA's. It is anticipated that in the future device densities will continue to increase, so that the complete system may eventually form a sub-unit (a "core") of a larger single chip unit.

### Operation of the Invention

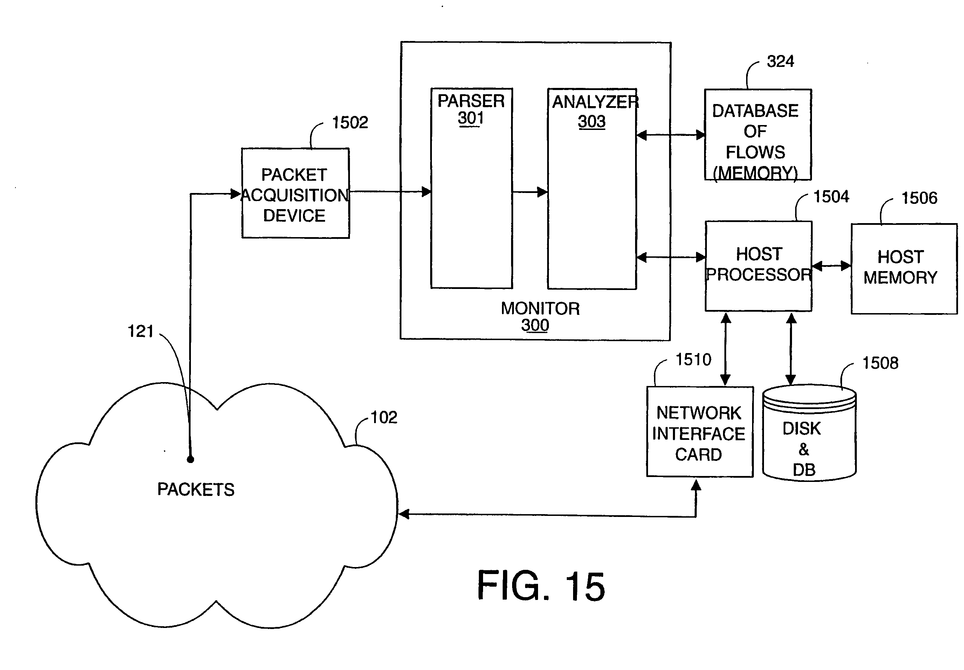

Fig. 15 shows how an embodiment of the network monitor 300 might be used to analyze traffic in a network 102. Packet acquisition device 1502 acquires all the packets from a connection point 121 on network 102 so that all packets passing point 121 in either direction are supplied to monitor 300. Monitor 300 comprises the parser sub-system 301, which determines flow signatures, and analyzer sub-system 303 that analyzes the flow signature of each packet. A memory 324 is used to store the database of flows that are determined and updated by monitor 300. A host computer 1504, which might be any processor, for example, a general-purpose computer, is used to analyze the flows in memory 324. As is conventional, host computer 1504 includes a memory, say RAM, shown as host memory 1506. In addition, the host might contain a disk. In one application, the system can operate as an RMON probe, in which case the host computer is coupled to a network interface card 1510 that is connected to the network 102.

The preferred embodiment of the invention is supported by an optional Simple Network Management Protocol (SNMP) implementation. Fig. 15 describes how one would, for example, implement an RMON probe, where a network interface card is used to send RMON information to the network. Commercial SNMP implementations also are available, and using such an implementation can simplify the process of porting the preferred embodiment of the invention to any platform.

In addition, MIB Compilers are available. An MIB Compiler is a tool that greatly simplifies the creation and maintenance of proprietary MIB extensions.

### Examples of Packet Elucidation

Monitor 300, and in particular, analyzer 303 is capable of carrying out state analysis for packet exchanges that are commonly referred to as "server announcement" type exchanges. Server announcement is a process used to ease communications between a server with multiple applications that can all be simultaneously accessed from multiple clients. Many applications use a server announcement process as a means of multiplexing a single port or socket into many applications and services. With this type of exchange, messages are sent on the network, in either a broadcast or multicast approach, to announce a server and application, and all stations in the network may receive and decode these messages. The messages enable the stations to derive the appropriate connection point for communicating that particular application with the particular server. Using the server announcement method, a particular application communicates using a service channel, in the form of a TCP or UDP socket or port as in the IP protocol suite, or using a SAP as in the Novell IPX protocol suite.

The analyzer 303 is also capable of carrying out "in-stream analysis" of packet exchanges. The "in-stream analysis" method is used either as a primary or secondary recognition process. As a primary process, in-stream analysis assists in extracting detailed information which will be used to further recognize both the specific application and application component. A good example of in-stream analysis is any Web-based application. For example, the commonly used PointCast Web information application can be recognized using this process; during the initial connection between a PointCast server and client, specific key tokens exist in the data exchange that will result in a signature being generated to recognize PointCast.

The in-stream analysis process may also be combined with the server announcement process. In many cases in-stream analysis will augment other recognition processes. An example of combining in-stream analysis with server announcement can be found in business applications such as SAP and BAAN.

"Session tracking" also is known as one of the primary processes for tracking applications in client/server packet exchanges. The process of tracking sessions requires an initial connection to a predefined socket or port number. This method of communication is used in a variety of transport layer protocols. It is most commonly seen in the TCP and UDP transport protocols of the IP protocol.

During the session tracking, a client makes a request to a server using a specific port or socket number. This initial request will cause the server to create a TCP or UDP port to exchange the remainder of the data between the client and the server. The server then replies to the request of the client using this newly created port. The original port used by the client to connect to the server will never be used again during this data exchange.

One example of session tracking is TFTP (Trivial File Transfer Protocol), a version of the TCP/IP FTP protocol that has no directory or password capability. During the client/server exchange process of TFTP, a specific port (port number 69) is always used to initiate the packet exchange. Thus, when the client begins the process of communicating, a request is made to UDP port 69. Once the server receives this request, a new port number is created on the server. The server then replies to the client using the new port. In this example, it is clear that in order to recognize TFTP; network monitor 300 analyzes the initial request from the client and generates a signature for it. Monitor 300 uses that signature to recognize the reply. Monitor 300 also analyzes the reply from the server with the key port information, and uses this to create a signature for monitoring the remaining packets of this data exchange.

Network monitor 300 can also understand the current state of particular connections in the network. Connection-oriented exchanges often benefit from state tracking to correctly identify the application. An example is the common TCP transport protocol that provides a reliable means of sending information between a client and a server. When a data exchange is initiated, a TCP request for synchronization message is sent. This message contains a specific sequence number that is used to track an acknowledgement from the server. Once the server has acknowledged the synchronization request, data may be exchanged between the client and the server. When communication is no longer required, the client sends a finish or complete message to the server, and the server acknowledges this finish request with a reply containing the sequence numbers from the request. The states of such a connection-oriented exchange relate to the various types of connection and maintenance messages.

### *Server Announcement Example*

The individual methods of server announcement protocols vary. However, the basic underlying process remains similar. A typical server announcement message is sent to one or more clients in a network. This type of announcement message has specific content, which, in another aspect of the invention, is salvaged and maintained in the database of flow-entries in the system. Because the announcement is sent to one or more stations, the client involved in a future packet exchange with the server will make an assumption that the information announced is known, and an aspect of the inventive monitor is that it too can make the same assumption.

Sun-RPC is the implementation by Sun Microsystems, Inc. (Palo Alto, California) of the Remote Procedure Call (RPC), a programming interface that allows one program to use the services of another on a remote machine. A Sun-RPC example is now used to explain how monitor 300 can capture server announcements.

A remote program or client that wishes to use a server or procedure must establish a connection, for which the RPC protocol can be used.

Each server running the Sun-RPC protocol must maintain a process and database called the port Mapper. The port Mapper creates a direct association between a Sun-RPC program or application and a TCP or UDP socket or port (for TCP or UDP implementations). An application or program number is a 32-bit unique identifier assigned by ICANN (the Internet Corporation for Assigned Names and Numbers, www.icann.org), which manages the huge number of parameters associated with Internet protocols (port numbers, router protocols, multicast addresses, etc.) Each port Mapper on a Sun-RPC server can present the mappings between a unique program number and a specific transport socket through the use of specific request or a directed announcement. According to ICANN, port number 111 is associated with Sun RPC.

As an example, consider a client (e.g., CLIENT 3 shown as 106 in FIG. 1) making a specific request to the server (e.g., SERVER 2 of FIG. 1, shown as 110) on a predefined UDP or TCP socket. Once the port Mapper process on the sun RPC server receives the request, the specific mapping is returned in a directed reply to the client.

1. A client (CLIENT 3, 106 in FIG. 1) sends a TCP packet to SERVER 2 (110 in FIG. 1) on port 111, with an RPC Bind Lookup Request (rpcBindLookup). TCP or UDP port 111 is always associated Sun RPC. This request specifies the program (as a program identifier), version, and might specify the protocol (UDP or TCP).

2. The server SERVER 2 (110 in FIG. 1) extracts the program identifier and version identifier from the request. The server also uses the fact that this packet came in using the TCP transport and that no protocol was specified, and thus will use the TCP protocol for its reply.

3. The server 110 sends a TCP packet to port number 111, with an RPC Bind Lookup Reply. The reply contains the specific port number *(e.g., port* number 'port') on which future transactions will be accepted for the specific RPC program identifier *(e.g.,* Program 'program') and the protocol (UDP or TCP) for use.

It is desired that from now on every time that port number 'port' is used, the packet is associated with the application program 'program' until the number 'port' no longer is to be associated with the program 'program'. Network monitor 300 by creating a flow-entry and a signature includes a mechanism for remembering the exchange so that future packets that use the port number 'port' will be associated by the network monitor with the application program 'program'.

In addition to the Sun RPC Bind Lookup request and reply, there are other ways that a particular program-say 'program'-might be associated with a particular port number, for example number 'port'. One is by a broadcast announcement of a particular association between an application service and a port number, called a Sun RPC portMapper Announcement. Another, is when some server-say the same SERVER 2-replies to some client-say CLIENT 1-requesting some portMapper assignment with a RPC portMapper Reply. Some other client-say CLIENT 2-might inadvertently see this request, and thus know that for this particular server, SERVER 2, port number 'port' is associated with the application service 'program'. It is desirable for the network monitor 300 to be able to associate any packets to SERVER 2 using port number 'port' with the application program 'program'.

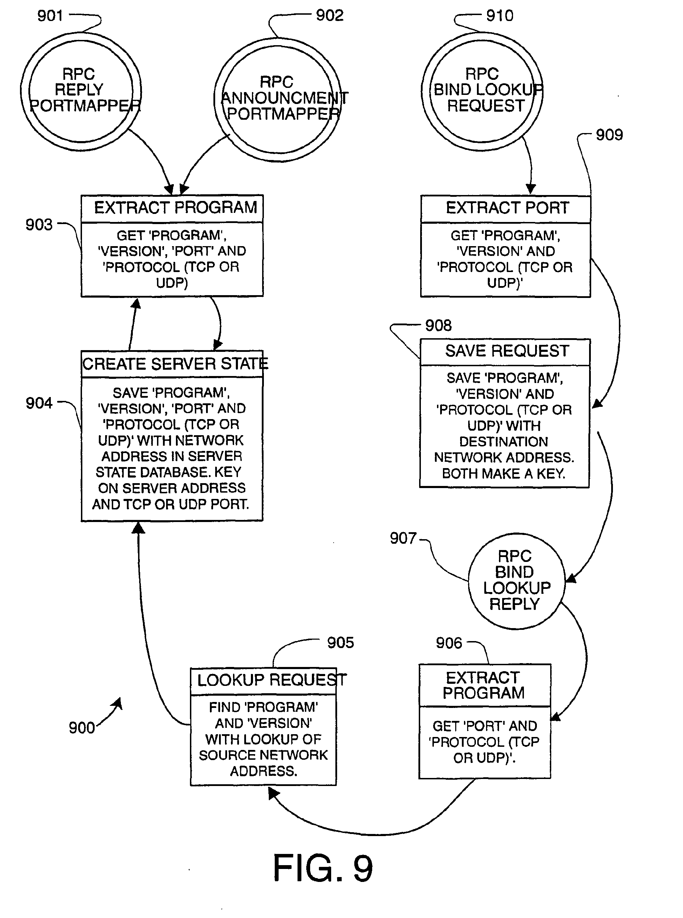

FIG. 9 represents a dataflow 900 of some operations in the monitor 300 of FIG. 3 for Sun Remote Procedure Call. Suppose a client 106 (e.g., CLIENT 3 in FIG. 1) is communicating via its interface to the network 118 to a server 110 (e.g., SERVER 2 in FIG. 1) via the server's interface to the network 116. Further assume that Remote Procedure Call is used to communicate with the server 110. One path in the data flow 900 starts with a step 910 that a Remote Procedure Call bind lookup request is issued by client 106 and ends with the server state creation step 904. Such RPC bind lookup request includes values for the 'program,' 'version,' and 'protocol' to use, e.g., TCP or UDP. The process for Sun RPC analysis in the network monitor 300 includes the following aspects. :

- Process 909: Extract the 'program,' 'version,' and 'protocol' (UDP or TCP). Extract the TCP or UDP port (process 909) which is 111 indicating Sun RPC.

- Process 908: Decode the Sun RPC packet. Check RPC type field for ID. If value is portMapper, save paired socket (i.e., dest for destination address, src for source address). Decode ports and mapping, save ports with socket/addr key. There may be more than one pairing per mapper packet. Form a signature (e.g., a key). A flow-entry is created in database 324. The saving of the request is now complete.

At some later time, the server (process 907) issues a RPC bind lookup reply. The packet monitor 300 will extract a signature from the packet and recognize it from the previously stored flow. The monitor will get the protocol port number (906) and lookup the request (905). A new signature (i.e., a key) will be created and the creation of the server state (904) will be stored as an entry identified by the new signature in the flow-entry database. That signature now may be used to identify packets associated with the server.

The server state creation step 904 can be reached not only from a Bind Lookup Request/Reply pair, but also from a RPC Reply portMapper packet shown as 901 or an RPC Announcement portMapper shown as 902. The Remote Procedure Call protocol can announce that it is able to provide a particular application service. Embodiments of the present invention preferably can analyze when an exchange occurs between a client and a server, and also can track those stations that have received the announcement of a service in the network.

The RPC Announcement portMapper announcement 902 is a broadcast. Such causes various clients to execute a similar set of operations, for example, saving the information obtained from the announcement. The RPC Reply portMapper step 901 could be in reply to a portMapper request, and is also broadcast. It includes all the service parameters.

Thus monitor 300 creates and saves all such states for later classification of flows that relate to the particular service 'program'.

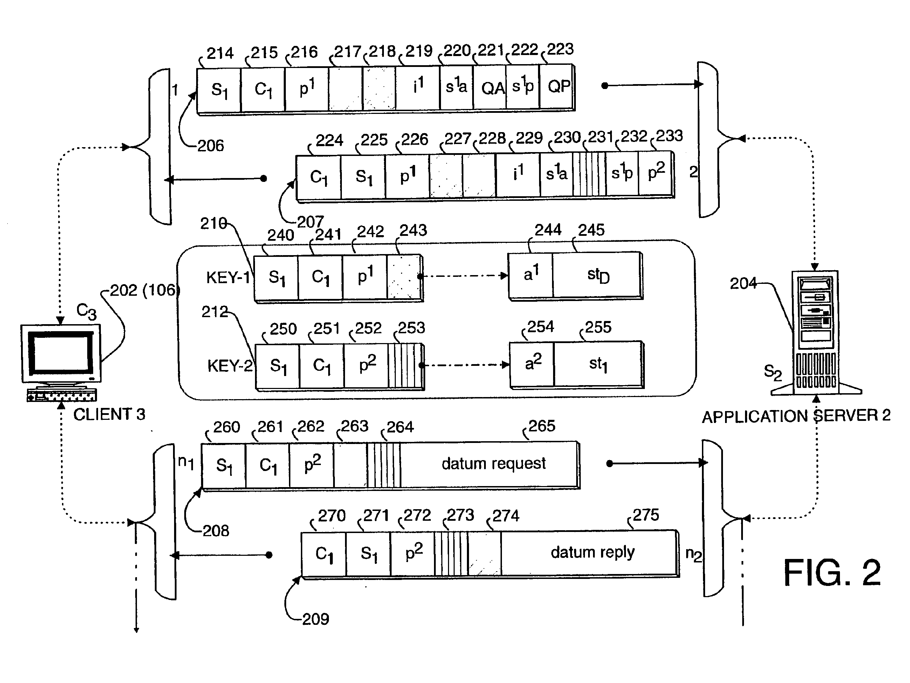

FIG. 2 shows how the monitor 300 in the example of Sun RPC builds a signature and flow states. A plurality of packets 206-209 are exchanged, e.g., in an exemplary Sun Microsystems Remote Procedure Call protocol. A method embodiment of the present invention might generate a pair of flow signatures, "signature-1" 210 and "signature-2" 212, from information found in the packets 206 and 207 which, in the example, correspond to a Sun RPC Bind Lookup request and reply, respectively.

Consider first the Sun RPC Bind Lookup request. Suppose packet 206 corresponds to such a request sent from CLIENT 3 to SERVER 2. This packet contains important information that is used in building a signature according to an aspect of the invention. A source and destination network address occupy the first two fields of each packet, and according to the patterns in pattern database 308, the flow signature (shown as KEY1 230 in FIG. 2) will also contain these two fields, so the parser subsystem 301 will include these two fields in signature KEY 1 (230). Note that in FIG. 2, if an address identifies the client 106 (shown also as 202), the label used in the drawing is "$C_1$". If such address identifies the server 110 (shown also as server 204), the label used in the drawing is "$S_1$". The first two fields 214 and 215 in packet 206 are "$S_1$" and $C_1$" because packet 206 is provided from the server 110 and is destined for the client 106. Suppose for this example, "$S_1$" is an address numerically less than address "$C_1$". A third field "$p^1$" 216 identifies

the particular protocol being used, e.g., TCP, UDP, etc.

In packet 206, a fourth field 217 and a fifth field 218 are used to communicate port numbers that are used. The conversation direction determines where the port number field is. The diagonal pattern in field 217 is used to identify a source-port pattern, and the hash pattern in field 218 is used to identify the destination-port pattern. The order indicates the client-server message direction. A sixth field denoted "$i^1$" 219 is an element that is being requested by the client from the server. A seventh field denoted "$s_1a$" 220 is the service requested by the client from server 110. The following eighth field "QA" 221 (for question mark) indicates that the client 106 wants to know what to use to access application "$s_1a$". A tenth field "QP" 223 is used to indicate that the client wants the server to indicate what protocol to use for the particular application.

Packet 206 initiates the sequence of packet exchanges, e.g., a RPC Bind Lookup Request to SERVER 2. It follows a well-defined format, as do all the packets, and is transmitted to the server 110 on a well-known service connection identifier (port 111 indicating Sun RPC).

Packet 207 is the first sent in reply to the client 106 from the server. It is the RPC Bind Lookup Reply as a result of the request packet 206.

Packet 207 includes ten fields 224-233. The destination and source addresses are carried in fields 224 and 225, e.g., indicated "$C_1$" and "$S_1$", respectively. Notice the order is now reversed, since the client-server message direction is from the server 110 to the client 106. The protocol "$p^1$" is used as indicated in field 226. The request "$i^1$" is in field 229. Values have been filled in for the application port number, e.g., in field 233 and protocol ""$p^2$"" in field 233.

The flow signature and flow states built up as a result of this exchange are now described. When the packet monitor 300 sees the request packet 206 from the client, a first flow signature 210 is built in the parser subsystem 301 according to the pattern and extraction operations database 308. This signature 210 includes a destination and a source address 240 and 241. One aspect of the invention is that the flow keys are built consistently in a particular order no matter what the direction of conversation. Several mechanisms may be used to achieve this. In the particular embodiment, the numerically lower address is always placed before the numerically higher address. Such least to highest order is used to get the best spread of signatures and hashes for the lookup operations. In this case, therefore, since we assume "$S_1$"<"$C_1$", the order is address "$S_1$" followed by client address "$C_1$". The next field used to build the signature is a protocol field 242 extracted from packet 206's field 216, and thus is the protocol "$p^1$". The next field used for the signature is field 243, which contains the destination source port number shown as a crosshatched pattern from the field 218 of the packet 206. This pattern will be recognized in the payload of packets to derive how this packet or sequence of packets exists as a flow. In practice, these may be TCP port numbers, or a combination of TCP port numbers. In the case of the Sun RPC example, the crosshatch represents a set of port numbers of UDS for $p^1$ that will be used to recognize this flow (e.g., port 111). Port 111 indicates this is Sun RPC. Some applications, such as the Sun RPC Bind Lookups, are directly determinable ("known") at the parser level. So in this case, the signature KEY-1 points to a known application denoted "$a^1$" (Sun RPC Bind Lookup), and a next-state that the state processor should proceed to for more complex recognition jobs, denoted as state "$st_D$" is placed in the field 245 of the flow-entry.

When the Sun RPC Bind Lookup reply is acquired, a flow signature is again built by the parser. This flow signature is identical to KEY-1. Hence, when the signature enters the analyzer subsystem 303 from the parser subsystem 301, the complete flow-entry is obtained, and in this flow-entry indicates state "$st_D$". The operations for state "$st_D$" in the state processor instruction database 326 instructs the state processor to build and store a new flow signature, shown as KEY-2 (212) in FIG. 2. This flow signature built by the state processor also includes the destination and a source addresses 250 and 251, respectively, for server "$S_1$" followed by (the numerically higher address) client "$C_1$". A protocol field 252 defines the protocol to be used, e.g., "$p^2$" which is obtained from the reply packet. A field 253 contains a recognition pattern also obtained from the reply packet. In this case, the application is Sun RPC, and field 254 indicates this application "$a^2$". A next-state field 255 defines the next state that the state processor should proceed to for more complex recognition jobs, e.g., a state "$st^1$". In this particular example, this is a final state. Thus, KEY-2 may now be used to recognize packets that are in any way associated with the application "$a^2$". Two such packets 208 and 209 are shown, one in each direction. They use the particular application service requested in the original Bind Lookup Request, and each will be recognized because the signature KEY-2 will be built in each case.

The two flow signatures 210 and 212 always order the destination and source address fields with server "$S_1$" followed by client "$C_1$". Such values are automatically filled in when the addresses are first created in a particular flow signature. Preferably, large collections of flow signatures are kept in a lookup table in a least-to-highest order for the best spread of flow signatures and hashes.

Thereafter, the client and server exchange a number of packets, e.g., represented by request packet 208 and response packet 209. The client 106 sends packets 208 that have a destination and source address $S_1$ and $C_1$, in a pair of fields 260 and 261. A field 262 defines the protocol as "$p^2$", and a field 263 defines the destination port number.

Some network-server application recognition jobs are so simple that only a single state transition has to occur to be able to pinpoint the application that produced the packet. Others require a sequence of state transitions to occur in order to match a known and predefined climb from state-to-state.

Thus the flow signature for the recognition of application "a$^2$" is automatically set up by predefining what packet-exchange sequences occur for this example when a relatively simple Sun Microsystems Remote Procedure Call bind lookup request instruction executes. More complicated exchanges than this may generate more than two flow signatures and their corresponding states. Each recognition may involve setting up a complex state transition diagram to be traversed before a "final" resting state such as "st$_1$" in field 255 is reached. All these are used to build the final set of flow signatures for recognizing a particular application in the future.

### The State Processor in Detail

The state processor 1108 analyzes both new and existing flows in order to classify them by application. It does this by proceeding from state to state based on rules defined by the engineer. A rule is a test followed by the next state to proceed to if the test is true. The state processor 1108 goes through each rule until the test is true or there are no more tests to perform. The state processor 1108 starts the process by using the last protocol recognized by parser subsystem 1000 as an offset into a jump table (the jump vector). The jump table takes us to the instructions to use for that protocol. Most instructions test something in the unified flow key buffer 1103 or the flow-entry if it exists. The state processor 1108 may have to test bits, do comparisons, add or subtract to perform the test.

In most common processing systems, the set of instructions implemented are general purpose in nature. All processing systems have a typical set of instructions related to the analysis and manipulation of the Instruction and program counters. These instructions include Jump, Call and Return. In addition, these same processing systems contain the appropriate instructions to analyze and manipulate registers and memory locations. These instructions include Increment, Decrement and Move, Compare and Logical manipulation.

The state processor 1108 of the preferred embodiment also includes such a basic set of standard instructions. However, the preferred embodiment state processor 1108 has some very specific functions that are required in order to evaluate the content of and data within packets on networks. There are four specific functions performed by the preferred embodiment state processor to meet these objectives. Two of these are specialized conversion instructions designed to interpret and transpose text elements in a specific for into a mathematical and numerical format. These instructions are AH2B (ASCII Hexadecimal to Binary) and AD2D (ASCII Decimal to Binary). These instructions are single cycle in nature. These instructions are novel and included to provide for the time sensitive nature of the functions performed by the preferred embodiment state processor.

In order to have the system make speed and meet the objective for classification, there are several other special functions provided in the State Processor. These functions primarily deal with seeking, locating, analyzing and evaluating sequences of strings. These strings can be either formatted or unformatted.

The primary high level instructions are the **In_Find** and In_**Find_CONTINUE** instructions, and are implemented by a searching apparatus (search engine) that is part of the state processor. These functions and the searching apparatus have been designed to make the state processor 1108 capable of simultaneous searching payload content from a packet sent into the monitor 300. This enables the monitor to scale and meet any network speed requirements.

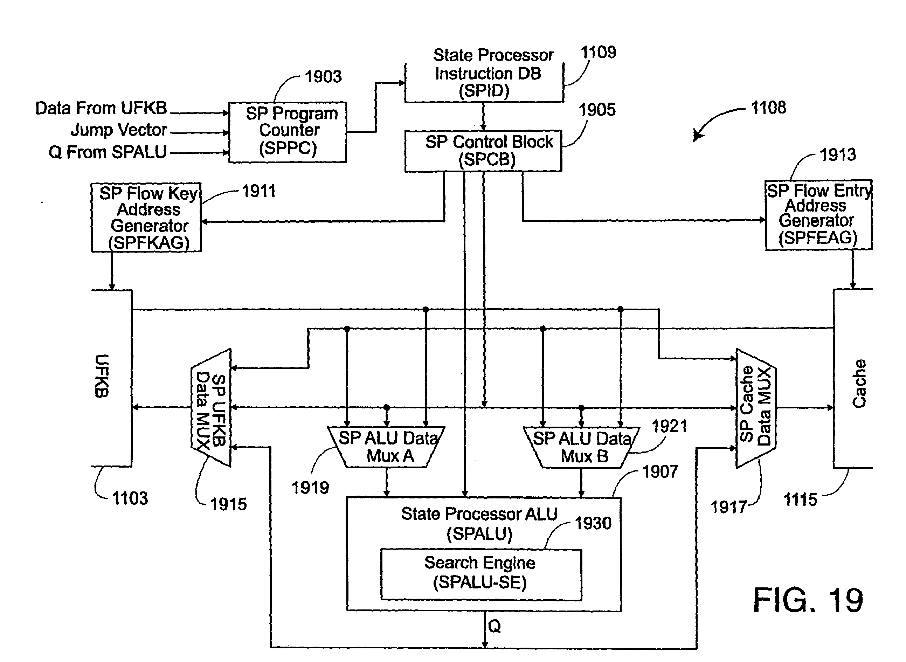

The state processor is shown in FIG. 19 as processor 1108. It executes its instructions from the state processor instruction database (SPID) 1109 which if filled by the host CPU as part of the compilation process 310. The SP 1108 contains several sub blocks including a program counter 1903 (SPPC) a control block 1905 (SPCB), an arithmetic logic unit 1907 (SPALU), address generators and data bus multiplexors (Muxes) to enable the movement of data from various sources to various destinations. The two address generators are a SP flow key address generator 1911 (SPFKAG) that points to the UFKB and a SP flow-entry address generator 1913 (SPFEAG) that points to the cache subsystem 1115. The SP 1108 also includes four data Muxes: SP ALU Data Mux A 1919, SP ALU Data Mux B 1921, SP UFKB Data Mux 1915, and SP Cache Data Mux 1917. These Muxes facilitate the movement of data within the various blocks of the state processor 1108 and to/from the UFKB 1103 and the cache subsystem 1115.

The SP control block 1905 decodes instructions coming out of the SPID 1109 and separates them into various fields to control the state processor 1108. The main function of the SPCB 1905 is instruction decoding and control signal generation. There are two classes of instructions. One that are executed completely by the SPCB and one that are passed along to the SPALU 1907 for partial or complete execution. Some of the SP instructions are described herein below.

When an instruction needs to be passed to the SPALU 1907, the SPCB 1905 decodes the instruction and supplies the SPALU 1907 instruction code on a bus and asserts a "Go" signal.

When an instruction, e.g., a move or jump instruction, can be completely executed by the SPCB 1905, the SPCB generates the appropriate control signals to the SP program counter 1903, SP Address Generators 1911 and/or 1913, and the SP Muxes in order to implement the specific move or jump instruction.

Words in the SPID 1109 are 40 bits long and partitioned into various fields by the SPCB 1905 depending on the instruction code. One field is the instruction code. The remaining bits in the SPID word is partitioned into various fields depending on the accompanying instruction. For example, the SP 1108 can implement Jump, Call, Wait, and WaitRJ instructions that are followed by a condition code and a jump address. The SP 1108 also can execute a Move Immediate instruction that is followed by the constant value. Furthermore, SP 1008 can execute Load Address Generator instructions that are followed by the address to be loaded. Upon decoding the instruction field, the SPCB generates a combination of control signals from an included decode PAL. These control signals select the various Muxes that facilitate data movement and generate strobe signals that load values in various registers.

The program counter SPPC 1903 generates the address to the state processor instruction database. It contained an instruction pointer that generates the SPID 1109 address. The instruction pointer can be incremented or loaded from a jump vector multiplexor that facilitates conditional branching. The instruction pointer can be loaded from one of three sources: (1) a protocol identifier from the UFKB, (2) an immediate jump vector form the currently decoded instruction or (3) a value provided by the SPALU 1907.

After a flow signature is placed in the UFKB by the LUE with a known protocol identifier, the program counter 1903 is initialized with the last protocol recognized by the parser subsystem. This first instruction is a jump to the subroutine that analyzes the protocol that was decoded.

In order to facilitate JUMP immediate instructions, the program counter takes an input field from the SPCB 1905 with the jump vector and loads the instruction pointer with the jump vector.

The state processor ALU 1907 contains all the arithmetic, logical and string compare functions necessary to implement the state processor instructions. The main blocks of the SP ALU 1907 are: an A register and a B register, instruction decode & state machines, a reference string memory, a search engine 1930, an output data register and an output control register.

The state processor ALU search engine 1930 (SPALU_SE) in turn contains a target search register set, a reference search register set, and a compare block. The search engine 1930 is able to search for up to several (four in our embodiment) reference strings anywhere in a target, and, if one of the reference strings is found, returns which reference string and the position in the target of the reference string.

The flow key address generator 1911 generates the address to where the state processor 1108 is accessing in the unified flow key buffer. The main blocks of the SPFKAG are a flow key address pointer register, and a ROM decode that generates addresses.

The flow-entry address generator 1913 provides the address where the state processor 1108 is accessing the flow-entry in the cache subsystem 1115. If a flow-entry exists, the upper address bits come from the hash is used to lookup the bucket in the flow database 324. The middle bits come from the bucket entry found. The lower bits come from the offset the state processor 1108 is using.

The main blocks of the SPFKAG are a flow key pointer register, and a ROM decode that generates addresses.

The state processor UFKB Data Mux 1915 selects the data source destined to the UFKB. It multiplexes one of three sources of data into the UFKB. The three sources are an ALU output data bus, the cache output data bus and the SPCB data. The select signal is a 2-bit signal.

The state processor Cache Data Mux 1917 selects the data source destined to the cache subsystem out of four sources of data into the cache subsystem. The four sources are: the ALU output data bus, the lower bits of the UFKB data bus, the upper bits of the UFKB data bus and the SPCB Data. The select signal is a 2-bit signal. In order to allow for 16bit moves, the SPMUXCA incorporates two 16bit Muxes that supply information to the lower and upper 16bits of the cache subsystem.

The State Processor ALU Data Mux A 1919 selects the data source destined to the UFKB and multiplexes one of three sources of 32 bit data into the A side of the ALU. The three sources are the cache subsystem data bus, the lower 32 bits of the UFKB data bus and the upper 32 bits of the UFKB data bus. The select signal is a 2-bit signal.

The state processor ALU Data Mux B 1919 selects the data source destined to the B side of the SP ALU and multiplexes one of two sources of 32 bit data into the B side of the ALU. The two sources are the cache subsystem data bus, and the SPCB data word. The select signal is a 1-bit signal.

**State Processor Instruction Definitions**

The following sections describe some of the instructions available in the state processor 1108. It should be noted that typically, no assembler is provided for the state processor 1108. This is because the engineer typically need not write code for this processor. The Compiler writes the code and loads it into the state processor instruction database from the protocols defined in the Protocol List (PDL files).

The table is divided into two embodiments, embodiment 1, and embodiment 2 which is a more complex embodiment that includes more complex versions of embodiment 1 instructions and additional instructions.

| State Processor Instruction Definition | |
|---|---|
| **EMBODIMENT 1 Instructions (a simpler embodiment)** | |
| **Instruction** | **Description** |
| In_Noop | No Operation |
| **In_Wait** | Wait for a condition to occur, jump absolute based on the condition |
| **In_Call** | Call a subroutine |
| **In_Return** | Return from a subroutine |
| **In_WaitJR** | Wait for a condition to occur, jump relative based on the condition |
| In_Jump | Jump to an immediate jump vector based on a condition |
| **In_Move** | Move Data from Location X, to Location Y |
| In_Load_FKAG | Load the FK Address Generator 1911 |
| **In_Inc_FKAG** | Increment the FK Address Generator 1911 |
| **In_Dec_FKAG** | Decrement the FK Address Generator 1911 |
| **In_Load_FEAG** | Load the FE Address Generator 1913 |
| **In_Inc_FEAG** | Increment the FE Address Generator 1913 |
| **In_Dec_FEAG** | Decrement the FE Address Generator 1913 |
| **In-Set-SPDone** | Set the SP Done Bit, a bot to indicate SP 1108 done |
| **EMBODIMENT 1 ALU Instructions** | |
| **Instruction** | **Description** |
| **In_INC** | Increment the value in the A Register |
| **In_DEC** | Decrement the value in the A Register |
| **In_ADD** | ADD Register A + Register B |
| **In_SUB** | Subtract Register A - Register B |
| **In_AND** | Bitwise OR Register A, Register B |
| **In_OR** | Bitwise OR Register A, Register B |
| **In_XOR** | Bitwise XOR Register A , Register B |
| **In_COM** | Bitwise Complement Register A |
| **In_Simple_Compare** | Compare Reg A, with Reg B. Returns a SPALU_MATCH if equal |
| **EMBODIMENT 2 ALU Instructions (more complex implementation)** | |
| **Instruction** | **Description** |
| **In_Compare** | See if the string at a fixed location matches one in a reference string array of reference strings |
| **In_Find** | Find a string (or a set of strings) in a range, with the starting position unknown |
| **In_FindContinue** | Perform a Find operation starting from the location where the last string was found. |
| **In_AD2B** | Convert an ASCII Decimal character to Binary |
| **In_AD2BContinue** | Convert an ASCII Decimal character to Binary |
| **In_AH2B** | Convert an ASCII Hex character to Binary |
| **In_AH2BContinue** | Convert an ASCII Hex character to Binary |

Some of these instructions are now described in more detail.

**Move**

The move instruction set includes specific move instructions that deal with moving different size words from a source to a destination. The set of Move instructions has been developed to ensure the word sizes always match, and includes 32 bit and 16 bit Move instructions

The Move instruction moves data from: immediate data to the SP ALU B register, immediate data to the cache subsystem, immediate data to the UFKB, the SP ALU Output to the UFKB, the SP ALU Output to the cache subsystem, the cache to the UFKB, the cache to the SP ALU A register, the cache to the SP ALU B register, UFKB to the cache subsystem, and the UFKB to the SP ALU A register.

**In_Compare**

The In_Compare instruction instructs the ALU 1907 to perform a compare operation and return a MATCH signal along with the matched string information. A compare operation compares a target data whose first character is located at a known location in the UFKB, and a known reference string in the reference string memory. Prior to executing this instruction, the SP UFKB address generator 1911 is loaded with the address pointing to the target character. A location in the ALU reference memory holds a list of reference characters to compare.

**ASCII Decimal to Binary**

This instruction passes the location of an ASCII code string representing a decimal value. The result is the binary equivalent value. This is carried out in one cycle.

**ASCII Hex to Binary**

This instruction passes the location of an ASCII code string representing a hex value. The result is the binary equivalent value. This is carried out in one cycle.

**In_Find**

**In_Find_Continue**

These instructions are described in more detail in the following section describing the search engine 1930.

***The Search Engine and SP Instructions Invoking the Search Engine***

One aspect of the monitor 300 is its ability to analyze each and every packet in real time. Network traffic may move at a very fast rate. One of the tasks of the state processor 1107 is to search for one or more known strings of data. Such searches are carried out on the UFKB records, for example, in the payload section of the record. The searches may be in known parts of the record, or may be in unknown parts of the record, for example, anywhere in the payload part of a UFKB record. Furthermore, the searches may need to be carried out at extremely high rates.

The state processor ALU includes a search engine SPALU_SE 1930 for carrying out such searches. The search engine 1930 is capable of searching up to four reference strings in a target area in the UFKB, and in parallel indicates (1) if *any* of the four strings are found *anywhere* in the target, (2) which string was found, and (3) where in the target the string was found.

The search engine provides for carrying out the following state processor instructions.

**In_Find**

The **In_Find** instruction provides information to the ALU-Search Engine to perform a Find operation and return a match signal along with the matched string information and the location at which the string was found in the target.

The instruction format is as follows:

**In_Find** [Reference String Array Address], [UFKB Byte Offset], [Range]

| Instruction Word Definition | |
| --- | --- |
| **Bit** | **Description** |
| In_Find | OpCode |
| **N (size of Abus)** | Reference String Array Address in the ALU Reference Memory. the ALU Reference Memory can store an array of one to four reference strings to be found. Each reference string is $N_R$ units long, in our implementation, a unit is a byte, and $N_R$ is 16. |
| **Offset (2:0)** | UFKB Byte Offset This is the offset address pointing to a byte in the selected UFKB entry. The offset is used to determine which byte within the selected UFKB entry is the first byte location to start the find operation. If the UFKB is 64 bits (8 bytes) this field would be 3 bits wide and point to the first target byte to start the find operation. |
| **Range (7:0)** | The Range, in number of bytes, in the UFKB area to be searched. This means the number of bytes to search. It typically specifies how many bytes of a particular field in the particular UFKB record to search. If a full MATCH does not result after comparing this range, the find operation is concluded. |

| Reference String Memory Data Structure for In_Find Operations | |
| --- | --- |
| **Bit Field** | **Description** |
| # of Strings **(8 bits)** | **# of Strings in Array indicates the total number of strings in this array. Valid numbers are 0,1,2,3 for 1,2,3 or 4 strings. 8 bits are allocated for future expansion and to simplify the implementation.** |
| **Size of 1st String (4 bits)** | This parameter indicates the size of the 1st string in bytes. The value placed here is $N_{R1}$ -1. Valid numbers are 0-F for a string as small as 1 character and as large as 0xF characters. |
| **Size of 2nd String (4 bits)** | This parameter indicates the size of the 2nd string in bytes. The value placed here is $N_{R2}$ -1. Valid numbers are 0-F for a string as small as 1 character and as large as 0xF characters. |
| **Size of 3rd String (4 bits)** | This parameter indicates the size of the 3rd string in bytes. The value placed here in $N_{R3}$ -1. Valid numbers are 0-F for a string as small as 1 character and as large as 0xF characters. |
| **Size of 4th String (4 bits)** | This parameter indicates the size of the 4th string in bytes. The value placed here in $N_{R4}$ -1. Valid numbers are 0-F for a string as small as 1 character and as large as 0xF characters. |
| **String1** | 1 to 16 (=$N_R$) characters of string1. |
| **String2** | 1 to 16 (=$N_R$) characters of string2. |
| **String3** | 1 to 16 (=$N_R$) characters of string3. |
| **String4** | 1 to 16 (=$N_R$) characters of string4. |
| **Vector ($_{16}$ bits)** | This is a 16 bit (i.e., $N_R$-bit) vector returned to the program counter to point to an area in the SPID that processes the result of the **In_Find.** |

When the search is complete, a Search Done bit is asserted. A MATCH bit is asserted or reset based on the result of the search. A bus in the ALU, called the ALU_DATA bus, will hold the following information:

• Jump_Vector[15:0]- this is a vector stored in the Reference String Array and indicates what instructions (e.g., subroutine) the state processor jumps to when a reference string is found.
• String Code[1:0]- this is the string code indicating which of the reference strings was found, i.e., 0, 1, 2, or 3 for the four reference string implementation.

The location at which the string was found in the Flow Key Buffer is maintained. This is a combination of the UFKB word address and the byte location of the first character of the target found string.

The search is done if the first occurrence of any of the reference strings is found, or if there is no MATCH in the entire search range.

Consider the following example. Assume we wish to search for a reference string in the payload area of the UFKB and search starting at byte location 5 of the payload and stop searching at byte location 100. Assume the reference string is located at location 0050h. The instruction format for this example would be as follows:

**In Load FKAG, payload address**

**In_Find,** $0050_{16}$, 5, $60_{16}$

The range would be 100 - 5 + 1 = 96 = $60_{16}$

Consider as a second example, searching locations $12_{16}$ to location $2A_{16}$ in the UFKB. The following state processor instructions will achieve this.

**In_Load_FKAG $02_{16}$**

**In Find [Reference String Address],2,$19_{16}$**

Note that $2A_{16}$-$12_{16}$ +1 = $19_{16}$.

**In Find Continue**

This instruction follows an In_Find instruction and tells the ALU-Search Engine 1930 to perform a Find operation starting from the location where the last string was found and return a MATCH along with the matched string information and the location at which the target string was found. The purpose for this instruction is to facilitate searching for a new reference string starting from the location where a previous search ended. Therefore, an offset is not provided since the Search Engine will remember the location where it finished its previous search.

The instruction format is as follows:

**In_Find_Continue** [Reference String Array Address], [0], [Range]

| Instruction Word Definition | |
|---|---|
| **Bit** | **Description** |
| **In_Find** | Opcode |
| **N (size of Abus)** | Reference String Array Address in the ALU Reference Memory. At this location, there is an array of one to four reference strings to be found. A Reference String Data Structure of the array is defined in the Reference Memory Data Structure section below. (Default N = 16) |
| **Offset (2:0)** | UFKB Byte Offset Always Zero. |
| **Range (7:0)** | The Range, in number of byte, in the UFKB area to be searched. This means the number of bytes to search. If a full MATCH does not result after comparing this range, the find operation is concluded. |

As an example, assume we wish to In_Find a string (String A) in the payload area of the UFKB and search starting at byte location 5 of the payload and stop searching at byte location 100. Assume the reference string (String A) is located at location $0050_{16}$. After finding the first reference string, assume we wish to continue searching for a new string (String B) in the following $30_{16}$bytes. Assume String B is located at location 0080h.

The instruction format for this example would be as follows:

**In Load FKAG, payload address**

**In_Find, 005016, 5, 6016**

**. . .**

**In_Find_Continue, $0080_{16}$, 5, $30_{16}$**

The range would be 100 - 5 + 1 = 96 = $60_{16}$

FIG. 20 is an overall block diagram of the search engine (SPALU_SE) 1930 that is part of the ALU 1907 and that executes the **In_Find** and **In_Find_Continue** instructions issued to the ALU 1907. The **In_Find** Instructions searches an area of the UFKB and looks for up to four possible reference strings in the target (UFKB) area. The reference strings are stored in the ALU Reference String Memory.

As shown in Fig. 20, the Search Engine is coupled with the following components:

(a) ALU String Reference Memory 2003 where the reference strings are stored.

(b) SPALU Data Mux A 1919 through which the target data 2011 for matching with the reference string is supplied. This is coupled to the UFKB during operation of the **In_Find** instruction using SP_UFKB Data Mux 1915.

(c) SPALU Data Mux B 1921 through which the instruction code is supplied, including the "Go" signal SPALUGO 2005 to start the search.

(d) The state processor flow key address generator 1911 used to increment and decrement the UFKB address.

(e) The state processor program counter 1903 where the results of the search are reported.

The system is run by a clock signal CLK 2001 and may be reset by a RESET signal. An instruction decode block SE_INST 2009 decodes the instruction code for **In_Find** and **In Find_Continue** and starts the Search Engine upon the activation of the SPALUGO signal 2005. The Search Engine continuously monitors the SPMuxB 1921 output bus 2007 and SPALUGO signal 2005 to detect the in_Find and **In_Find_Continue** instructions. During operation of the search engine 1930 the engine receives the target data 2011, in word size, from the UFKB 1103 through SPMUXA 1919. Similarly, the reference string(s) from the appropriate address of a reference string memory 2003 arrives as data SP_Data_RMB 2013.

A Search Engine Reference Load (SE_LOAD) module 2015 is responsible for "priming" reference string registers once an **In_Find** or **In_Find_Continue** instruction is issued. It takes a reference string array from the reference string memory 2003 and interprets it and loads the reference string registers with the information.

In the processing state, the SE-LOAD module 2015 first loads the first word from the starting location of the reference memory 2003. The starting location is assumed to be set up at the proper location prior to issuing of the instruction. Once the number of strings and the size of the strings are loaded, the loading process continues loading all of the reference strings. An increment reference signal 2025 increments the reference memory from where the reference string is being loaded. During the loading of the strings, a LOAD_KEY_DONE signal 2017 is unasserted. A LOAD_KEY signal 2019 is pulsed when the last word of the last reference string is being loaded indicating to the search_engine_ module 2030 to start searching from the next clock cycle. The LOAD_KEY_DONE signal 2017 is asserted during the next clock cycle and the jump vector 2021 is loaded at the same time from the Reference Memory 2003.

The Search Engine Increment/Control module (SE_INC) 2023 is responsible for incrementing the flow key address generator 1911 in order to supply new words from the UFKB to the Search Engine. It monitors the found signals out of the Search Engine modules and reports results. SE_INC 2023 is also responsible for calculating true ending address and determines the last byte to be checked in the last word based on the Range provided in the **In_Find** instruction.

The SE-4SEARCH 2030 module includes four search engines to search for four strings simultaneously. The engine outputs a found signal 2031 and a position signal 2033 for each of the four reference strings to indicate if and where the string was found.

The assertion of SPALU_Done signal 2035 by SE-INC 2023 indicates the search is completed. If the SPALU_ Match signal 2037 is asserted at the same time then it is a successful search. The successful search also results in the SPALU_Data bus 2039 carrying the jump vector along with the search engine number that found the reference string.

One aspect of an embodiment of the invention is the speediness of searching. The longest time for the SPALU_ Done 2035 to be asserted from the time the instruction is issued for searching anywhere in a number N of words in the UFKB is N clock cycles plus an additional number of clock cycles for pre-loading and pointer adjustment in case of successful search. In our embodiment, this additional overhead is 11 clock cycles. Therefore, each extra word takes only one clock cycle.

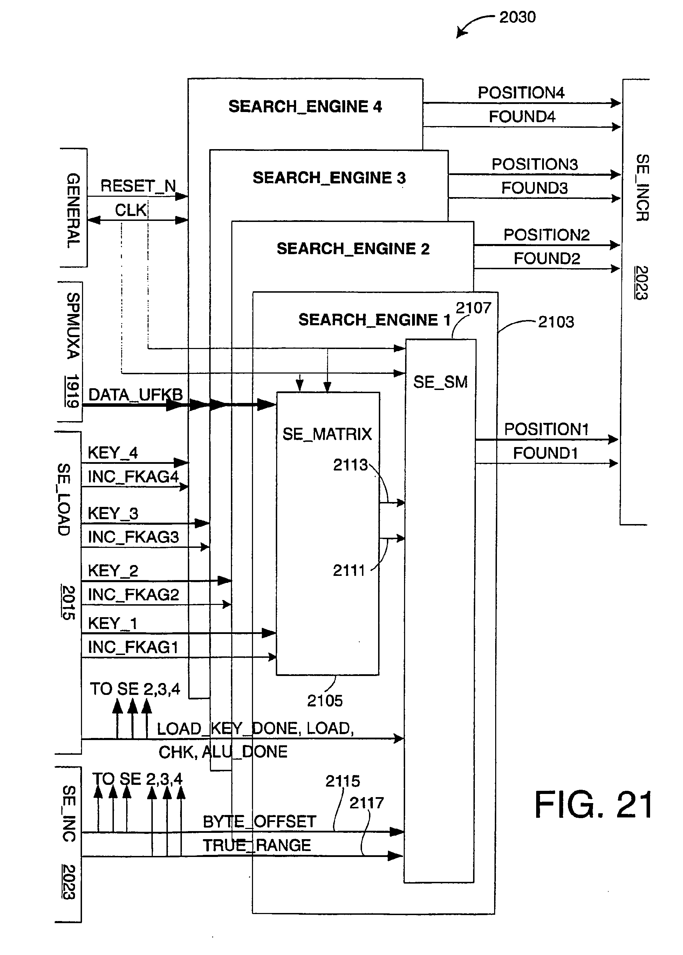

FIG. 21 shows the SE_4SEARCH module 2030 that includes four single search modules. Alternate embodiments may include more single search modules to enable searching for more than four reference strings simultaneously. Each of the four search engine modules is identical, so only one such module 2103 will be described.

Each of the single search modules 2103 performs a single reference string search. Using multiple copies of this module multiple distinct reference strings can be searched in a common source buffer (the UFKB). The module includes a core comparator matrix block 2105 (the search engine core) and a state machine SE_SM 2107. The search engine core 2105 is capable of comparing a reference string up to $N_R$ units (16 bytes in our embodiment) with a target string of three eight-byte words (loaded in three successive cycles, one word at a time). During each clock cycle, the single search modules 2103 searches for the reference string anywhere in the target starting from any of the eight bytes of the first word. Each of the reference string bytes is appended with a check bit, which indicates whether to check this byte, or not. If the check bit is asserted, then the corresponding byte checking is disabled. As 64-bit words (8 bytes) are loaded into three registers in a pipelined fashion, the comparison takes place two clock cycles after they are fetched.

The source (UFKB) address pointer needs to be adjusted if the search is successful. If the search is successful, a match signal 2111 becomes active and the position of the first byte of the reference string is placed out on a position bus 2113. The SE_SM state machine 2107 performs several tasks every clock cycle. It has three states: reset, idle, and process. While in the idle state, the state machine 2107 waits for a signal from the SE_LOAD module 2015 to switch to the Process State. During the first clock cycle in the Process State, if a match occurs then the position is checked against the byte offset 2115. If the byte offset is greater then the position, then it is ignored, i.e. found is not asserted. Similarly, if it is the last word to be checked, then the end offset byte is checked with the position and the found is ignored if the position is greater then last byte to be checked in the range 2117. Otherwise, the found signal is asserted when the match is found by the search engine core 2105 and the position is latched and forwarded to the SE_INC module 2023.

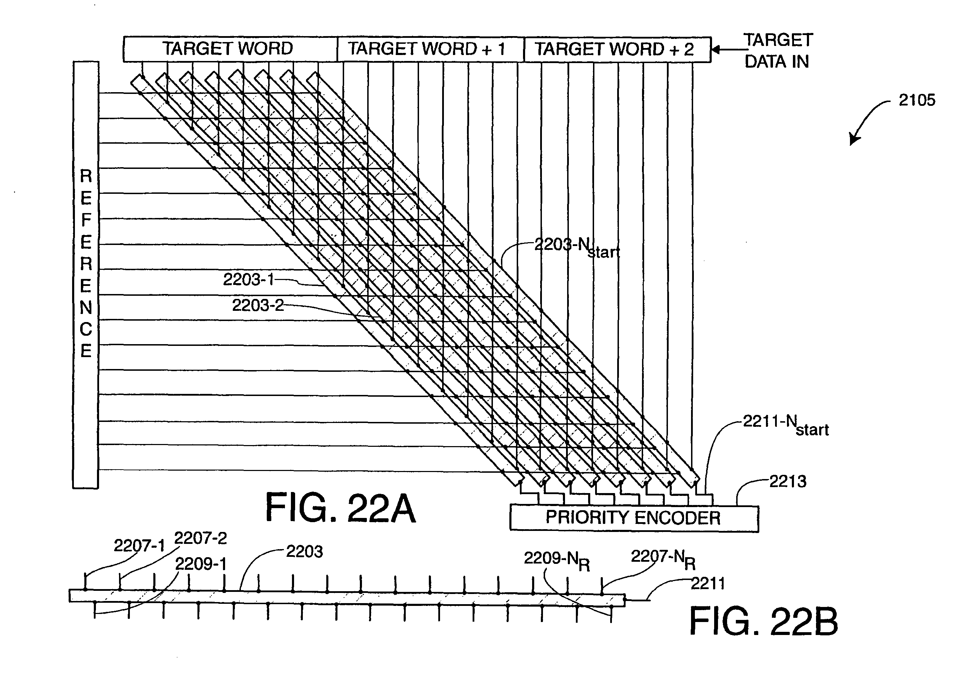

Referring now to FIG. 22A, the search engine core 2105 is the core comparator matrix of the search engine module. It searches for an $N_R$-unit reference string in a target string. It includes a reference axis and a target axis. The reference axis includes a register that holds the reference string, in general a string of $N_R$ units. The unit is a byte and $N_R$ is 16 in the preferred embodiment, and other units and the matrix may easily be modified to search for other reference string sizes. The target data is organized as words. The target axis is arranged as a series of one word registers each holding a word of target data. A word is clocked into the register in one clock cycle. Thus, the first word of the target data is clocked into the target axis in three cycles.

The search engine core 2105 includes at least one $N_R$-unit comparator each having $N_R$ pairs of inputs and an output indicating a match of each pair of the $N_R$-pairs of inputs. One such comparator 2203 is shown in FIG. 22B. The pairs of inputs are shown as (2207-1, 2209-1), (2207-2, 2202-2), ..., (2207-$N_R$, 2207-$N_R$). The output is 2211. FIG. 22A shown a number (say $N_{start}$) comparators labeled 2203-1, 2203-2, ..., 2203-$N_{start}$. Considering any one of the comparators, the search engine core also includes a matrix of connections including $N_R$ connections indicating values of the reference string along the reference axis, and $N_R$ connections indicating values of the target data along the target axis, the target data connections starting from a first starting location of the target data and ending at an ending location. The comparators are connected such that when the reference and target axes are oriented perpendicular to each other, any comparator is oriented along the diagonal of the matrix such that $N_R$ connections of the target data are compared to the reference string. Each comparator starts at a different location in the target axis. In our implementation, each word is 8 bytes long, the number of comparators $N_{start}$ is the same as the word size, and the comparators start at contiguous locations on the target axis. Thus, in one clock cycle the search engine core 2105 can find the reference string starting from any location in the first word. Notice that if a target string happens to cross a word boundary, the search engine core will still automatically find the word.

The outputs of the comparators are input into an $N_{start}$ input priority encoder that indicates if a string is found which of the $N_{start}$ comparators found the string. This provides for the location.

During operation after the data is loaded, in the first clock cycle, the state machine 2107 will ignore any strings that might be found in the first few comparators, that number of comparators indicated by the offset. During each subsequent clock cycle, the search engine core 2105 will find the reference string if it starts anywhere in the first $N_{start}$ positions. Thus, in a number of clock cycles, the search engine core 2105 will find the reference string anywhere in the target data.

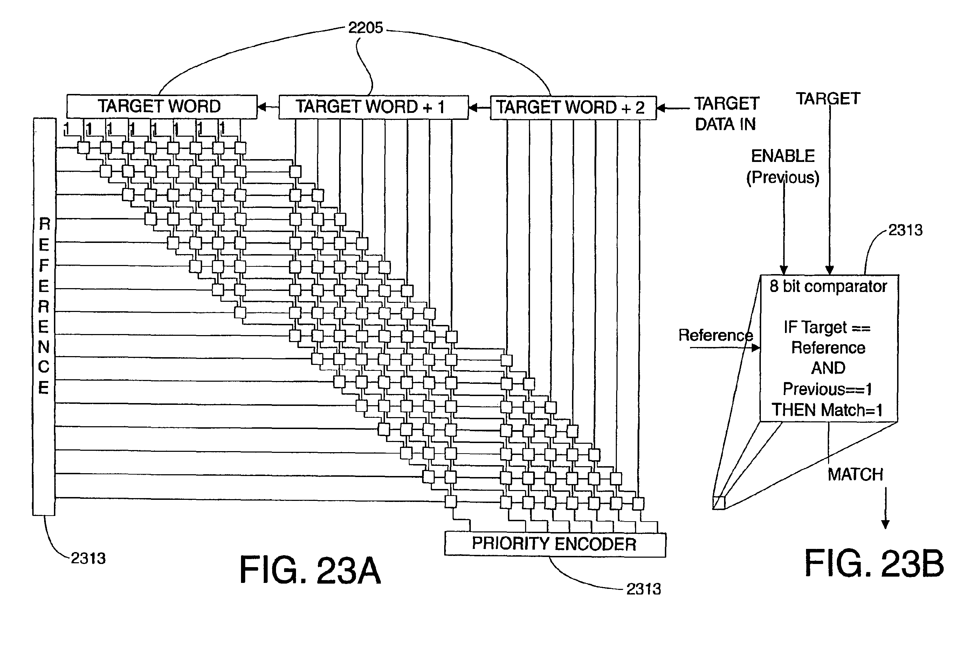

FIG. 23A shows an implementation of the input core in more detail. This implementation is for finding the reference string in any of a set of starting positions. The implementation includes a reference register 2203 for receiving the $N_R$ units of one of the reference strings, a set of target data registers 2205 coupled in series to receive the target data, a plurality of comparator sets, one comparator set corresponding to each of the starting positions, the comparator set of a particular starting position coupled to each unit-each byte in this implementation-of the reference register and to $N_R$ units-bytes in this case-of the target data registers starting from the particular starting position and comparing the first reference register contents to $N_R$ units of the target data registers starting from the particular staring position. Each comparator set indicates if there is a match of first reference string in the target data starting from its corresponding different starting position. The set of possible starting positions might include $N_{start}$ different positions. These positions may or may not be contiguous, and if contiguous, the one or more target data registers are coupled in series to receive at least $N_R+N_{start}-1$ units of the target data. Thus there are $N_{start}$ comparator sets, one comparator set for each of the $N_{start}$ starting positions.

Each comparator set includes $N_R$ consecutive comparators. One such comparator 2313 is shown in FIG. 23B, and includes a reference input, a target input, an enable input, and an output indicating a match, such that the output of a comparator 2313 is asserted when the reference and target inputs match and the enable input is asserted. For a particular set of comparators for a particular starting position, the reference inputs of consecutive comparators are coupled to consecutive units of the reference register, the target data inputs of consecutive comparators are coupled to consecutive units of the target data registers starting at the particular starting location, the first comparator of the set is enabled, and the enable input of each comparator is coupled to the output of the previous comparator, such that the output of the final comparator is asserted when the $N_R$ units of the reference string and the $N_R$ units of the target data agree.

In this way, the state processor is able to locate strings at unknown locations in areas of the packets (stored in the UFKB) at an extremely high rate.

### The Cache Subsystem

Referring again to FIG. 11, the cache subsystem 1115 is connected to the lookup update engine (LUE) 1107, the state processor the state processor (SP) 1108 and the flow insertion/deletion engine (FIDE) 1110. The cache 1115 keeps a set of flow-entries of the flow-entry database stored in memory 1123, so is coupled to memory 1123 via the unified memory controller 1119. According to one aspect of the invention, these entries in the cache are those likely-to-be-accessed next.

It is desirable to maximize the hit rate in a cache system. Typical prior-art cache systems are used to expedite memory accesses to and from microprocessor systems. Various mechanisms are available in such prior art systems to predict the lookup such that the hit rate can be maximized. Prior art caches, for example, can use a lookahead mechanism to predict both instruction cache lookups and data cache lookups. Such lookahead mechanisms are not available for the packet monitoring application of cache subsystem 1115. When a new packet enters the monitor 300, the next cache access, for example from the LUE 1107, may be for a totally different flow than the last cache lookup, and there is no way ahead of time of knowing what flow the next packet will belong to.

One embodiment of the present invention is a cache system that replaces a least recently used (LRU) flow-entry when a cache replacement is needed. Replacing least recently used flow-entries is preferred because it is likely that a packet following a recent packet will belong to the same flow. Thus, the signature of a new packet will likely match a recently used flow record. Conversely, it is not highly likely that a packet associated with the least recently used flow-entry will soon arrive.

Furthermore, after one of the engines that operate on flow-entries, for example the LUE 1107, completes an operation on a flow-entry, it is likely that the same or another engine will soon use the same flow-entry. Thus it is desirable to make sure that recently used entries remain in the cache.

A feature of the cache system of one embodiment of the present invention is that most recently used (MRU) flow-entries are kept in cache whenever possible. Since typically packets of the same flow arrive in bursts, and since MRU flow-entries are likely to be required by another engine in the analysis subsystem, maximizing likelihood of MRU flow-entries remaining in cache increases the likelihood of finding flow records in the cache, thus increasing the cache hit rate.

Yet another feature of the cache of one embodiment of the invention is that it includes an associative memory using a set of content addressable memory cells (CAMs). The CAM contains an address that in our implementation is the hash value associated with the corresponding flow-entry in a cache memory (e.g., a data RAM) comprising memory cells. In one embodiment, each memory cell is a page. Each CAM also includes a pointer to a cache memory page. Thus, the CAM contents include the address and the pointer to cache memory. As is conventional, each CAM cell includes a matching circuit having an input. The hash is presented to the CAM's matching circuit input, and if the hash matches the hash in the CAM, the a match output is asserted indicating there is a hit. The CAM pointer points to the page number (i.e., the address) in the cache memory of the flow-entry.

Each CAM also includes a cache address input, a cache pointer input, and a cache contents output for inputting and outputting the address part and pointer part of the CAM.

The particular embodiment cache memory stores flow-entries in pages of one bucket, i.e., that can store a single flow-entry. Thus, the pointer is the page number in the cache memory. In one version, each hash value corresponds to a bin of N flow-entries (e.g., 4 buckets in the preferred embodiment of this version). In another implementation, each hash value points to a single flow record, i.e., the bin and bucket sizes correspond. For simplicity, this second implementation is assumed when describing the cache 1115.

Furthermore, as is conventional, the match output signal is provided to a corresponding location in the cache memory so that a read or write operation may take place with the location in the cache memory pointed to be the CAM.

One embodiment of the present invention achieves a combination of associatively and true LRU replacement policy. For this, the CAMs of cache system 1115 are organized in what we call a CAM stack (also CAM array) in an ordering, with a top CAM and a bottom CAM. The address and pointer output of each CAM starting from the top CAM is connected to the address and pointer input of the next cache up to the bottom.

In our implementation, a hash is used to address the cache. The hash is input to the CAM array, and any CAM that has an address that matches the input hash asserts its match output indicating a hit. When there is a cache hit, the contents of the CAM that produced the hit (including the address and pointer to cache memory) are put in the top CAM of the stack. The CAM contents (cache address, and cache memory pointer) of the CAMs above the CAM that produced are shifted down to fill the gap.

If there is a miss, any new flow record is put in the cache memory element pointed to by the bottom CAM. All CAM contents above the bottom are shifted down one, and then the new hash value and the pointer to cache memory of the new flow-entry are put in the top-most CAM of the CAM stack.

In this manner, the CAMs are ordered according to recentness of use, with the least recently used cache contents pointed to by the bottom CAM and the most recently used cache contents pointed to by the top CAM.

Furthermore, unlike a conventional CAM-based cache, there is no fixed relationship between the address in the CAM and what element of cache memory it points to. CAM's relationship to a page of cache memory changes over time. For example, at one instant, the fifth CAM in the stack can include a pointer to one particular page of cache memory, and some time later, that same fifth CAM can point to a different cache memory page.

In one embodiment, the CAM array includes 32 CAMs and the cache memory includes 32 memory cells (e.g., memory pages), one page pointed to by each CAM contents. Suppose the CAMs are numbered $CAM_0$, $CAM_1$, ..., $CAM_{31}$, respectively, with $CAM_0$ the top CAM in the array and $CAM_{31}$ the bottom CAM.

The CAM array is controlled by a CAM controller implemented as a state machine, and the cache memory is controlled by a cache memory controller which also is implemented as a state machine. The need for such controllers and how to implement them as state machines or otherwise would be clear to one skilled in the art from this description of operation. In order not to confuse these controllers with other controllers, for example, with the unified memory controller, the two controllers will be called the CAM state machine and the memory state machine, respectively.

Consider as an example, that the state of the cache is that it is full. Suppose furthermore that the contents of the CAM stack (the address and the pointer to the cache memory) and of the cache memory at each page number address of cache memory are as shown in the following table.

| CAM | Hash | Cache Point | | Cache Addr. | Contents |
|---|---|---|---|---|---|
| $CAM_0$ | $hash_0$ | $page_0$ | | $page_0$ | $entry_0$ |
| $CAM_1$ | $hash_1$ | $page_1$ | | $page_1$ | $entry_1$ |
| $CAM_2$ | $hash_2$ | $page_2$ | | $page_2$ | $entry_2$ |
| $CAM_3$ | $hash_3$ | $page_3$ | | $page_3$ | $entry_3$ |
| $CAM_4$ | $hash_4$ | $page_4$ | | $page_4$ | $entry_4$ |
| $CAM_5$ | $hash_5$ | $page_5$ | | $page_5$ | $entry_5$ |
| $CAM_6$ | $hash_6$ | $page_6$ | | $page_6$ | $entry_6$ |
| $CAM_7$ | $hash_7$ | $page_7$ | | $page_7$ | $entry_7$ |
| ... | .... | .... | | .... | .... |
| $CAM_{29}$ | $hash_{29}$ | $page_{29}$ | | $page_{29}$ | $entry_{29}$ |
| $CAM_{30}$ | $hash_{30}$ | $Page_{30}$ | | $Page_{30}$ | $entry_{30}$ |
| $CAM_{31}$ | $hash_{31}$ | $page_{31}$ | | $Page_{31}$ | $entry_{31}$ |

This says that $CAM_4$ contains and will match with the hash value $hash_4$, and a lookup with $hash_4$ will produce a match and the address $page_4$ in cache memory. Furthermore, $page_4$ in cache memory contains the flow-entry, $entry_4$, that in this notation is the flow-entry matching hash value $hash_4$. This table also indicates that $hash_0$ was more recently used than $hash_1$, $hash_5$ more recently than $hash_2$, and so forth, with $hash_{31}$ the least recently used hash value. Suppose further that the LUE 1107 obtains an entry from unified flow key buffer 1103 with a hash value $hash_{31}$. The LUE looks up the cache subsystem via the CAM array. $CAM_{31}$ gets a hit and returns the page number of the hit, i.e., $page_{31}$. The cache subsystem now indicates to the LUE 1007 that the supplied hash value produced a hit and provides a pointer to $page_{31}$ of the cache memory which contains the flow-entry corresponding to $hash_{31}$, i.e., $flow_{31}$. The LUE now retrieve the flow-entry $flow_{31}$ from the cache memory at address $page_{31}$. In the preferred embodiment, the lookup of the cache takes only one clock cycle.

The value $hash_{31}$ is the most recently used hash value. Therefore, in accordance with an aspect of the inventive cache system, the most recently used entry is put on top of the CAM stack. Thus $hash_{31}$ is put into $CAM_0$ (pointing to $page_{31}$). Furthermore, $hash_{30}$ is now the LRU hash value, so is moved to $CAM_{31}$. The next least recently used hash value, $hash_{29}$ is now moved to $CAM_{30}$, and so forth. Thus, all CAM contents are shifted one down after the MSU entry is put in the top CAM. In the preferred embodiment the shifting down on CAM entries takes one clock cycle. Thus, the lookup and the rearranging of the CAM array to maintain the ordering according to usage recentness. The following table shows the new contents of the CAM array and the (unchanged) contents of the cache memory.

| CAM | Hash | Cache Point | | Cache Addr. | Contents |
|---|---|---|---|---|---|
| $CAM_0$ | $hash_{31}$ | $Page_{31}$ | | $page_0$ | $entry_0$ |
| $CAM_1$ | $hash_0$ | $page_0$ | | $page_1$ | $entry_1$ |
| $CAM_2$ | $hash_1$ | $page_1$ | | $page_2$ | $entry_2$ |
| $CAM_3$ | $hash_2$ | $page_2$ | | $page_3$ | $entry_3$ |
| $CAM_4$ | $hash_3$ | $page_3$ | | $page_4$ | $entry_4$ |
| $CAM_5$ | $hash_4$ | $page_4$ | | $page_5$ | $entry_5$ |
| $CAM_6$ | $hash_5$ | $page_5$ | | $page_6$ | $entry_6$ |
| $CAM_7$ | $hash_6$ | $page_6$ | | $page_7$ | $entry_7$ |
| ... | .... | .... | | .... | .... |
| $CAM_{29}$ | $hash_{28}$ | $Page_{28}$ | | $page_{29}$ | $entry_{29}$ |
| $CAM_{30}$ | $hash_{29}$ | $page_{29}$ | | $page_{30}$ | $entry_{30}$ |
| $CAM_{31}$ | $hash_{30}$ | $Page_{30}$ | | $Page_{31}$ | $entry_{31}$ |

To continue with the example, suppose that some time later, the LUE 1007 looks up hash value $hash_5$. This produces a hit in $CAM_6$ pointing to $page_5$ of the cache memory. Thus, in one clock cycle, the cache subsystem 1115 provides LUE 1007 with an indication of a hit and the pointer to the flow-entry in the cache memory. The most recent entry is $hash_5$, so $hash_5$ and cache memory address $page_6$ are entered into $CAM_0$. The contents of the remaining CAMs are all shifted down one up to and including the entry that contained $hash_5$. That is, $CAM_7$, $CAM_8$, ..., $CAM_{31}$ remain unchanged. The CAM array contents and unchanged cache memory contents are now as shown in the following table.

| CAM | Hash | Cache Point | | Cache Addr. | Contents |
|---|---|---|---|---|---|
| $CAM_0$ | $hash_5$ | $page_5$ | | $page_0$ | $entry_0$ |
| $CAM_1$ | $hash_{31}$ | $page_{31}$ | | $page_1$ | $entry_1$ |
| $CAM_2$ | $hash_0$ | $page_0$ | | $page_2$ | $entry_2$ |
| $CAM_3$ | $hash_1$ | $page_1$ | | $page_3$ | $entry_3$ |
| $CAM_4$ | $hash_2$ | $page_2$ | | $page_4$ | $entry_4$ |
| $CAM_5$ | $hash_3$ | $page_3$ | | $page_5$ | $entry_5$ |
| $CAM_6$ | $hash_4$ | $page_4$ | | $page_6$ | $entry_6$ |
| $CAM_7$ | $hash_6$ | $page_6$ | | $page_7$ | $entry_7$ |
| ... | ... | ... | | ... | ... |
| $CAM_{29}$ | $hash_{28}$ | $page_{28}$ | | $page_{29}$ | $entry_{29}$ |
| $CAM_{30}$ | $hash_{29}$ | $page_{29}$ | | $page_{30}$ | $entry_{30}$ |
| $CAM_{31}$ | $hash_{30}$ | $page_{30}$ | | $Page_{31}$ | $entry_{31}$ |

Thus in the case of cache hits, the CAM array always keeps used hash values in the order of recentness of use, with the most recently used hash value in the top CAM.

The operation of the cache subsystem when there is a cache hit will be described by continuing the example. Suppose there is a lookup (e.g., from LUE 1107) for hash value $hash_{43}$. The CAM array produces a miss that causes in a lookup using the hash in the external memory. The specific operation of our specific implementation is that the CAM state machine sends a GET message to the memory state machine that results in a memory lookup using the hash via the unified memory controller (UMC) 1119. However, other means of achieving a memory lookup when there is a miss in the CAM array would be clear to those in the art.

The lookup in the flow-entry database 324 (i.e., external memory) results in a hit or a miss. Suppose that the database 324 of flow-entries does not have an entry matching hash value $hash_{43}$. The memory state machine indicates the miss to the CAM state machine which then indicates the miss to the LUE 1007. Suppose, on the other hand that there is a flow-entry-$entry_{43}$- in database 324 matching hash value $hash_{43}$- In this case, the flow-entry is brought in to be loaded into the cache.

In accordance with another embodiment of the invention, the bottom CAM entry $CAM_{31}$ always points to the LRU address in the cache memory. Thus, implementing a true LRU replacement policy includes flushing out the LRU cache memory entry and inserting a new entry into that LRU cache memory location pointed to by the bottom CAM. The CAM entry also is modified to reflect the new hash value of the entry in the pointed to cache memory element. Thus, hash value $hash_{43}$ is put in $CAM_{31}$ and flow-entry $entry_{43}$ is placed in the cache page pointed to by CAM 31. The CAM array and now changed cache memory contents are now

| CAM | Hash | Cache Point | | Cache Addr. | Contents |
|---|---|---|---|---|---|
| $CAM_0$ | $hash_5$ | $page_5$ | | $page_0$ | $entry_0$ |
| $CAM_1$ | $hash_{31}$ | $page_{31}$ | | $page_1$ | $entry_1$ |
| $CAM_2$ | $hash_0$ | $page_0$ | | $page_2$ | $entry_2$ |
| $CAM_3$ | $hash_1$ | $page_1$ | | $page_3$ | $entry_3$ |
| $CAM_4$ | $hash_2$ | $page_2$ | | $page_4$ | $entry_4$ |
| $CAM_5$ | $hash_3$ | $page_3$ | | $page_5$ | $entry_5$ |
| $CAM_6$ | $hash_4$ | $page_4$ | | $page_6$ | $entry_6$ |
| $CAM_7$ | $hash_6$ | $page_6$ | | $page_7$ | $entry_7$ |
| ... | ... | ... | | ... | ... |
| $CAM_{29}$ | $hash_{28}$ | $page_{28}$ | | $page_{29}$ | $entry_{29}$ |
| $CAM_{30}$ | $hash_{29}$ | $page_{29}$ | | $Page_{30}$ | $entry_{43}$ |
| $CAM_{31}$ | $hash_{43}$ | $Page_{30}$ | | $page_{31}$ | $entry_{31}$ |

Note that the inserted entry is now the MRU flow-entry. So, the contents of $CAM_{31}$ are now moved to $CAM_0$ and the entries previously in the top 30 CAMs moved down so that once again, the bottom CAM points to the LRU cache memory page.

| CAM | Hash | Cache Point | | Cache Addr. | Contents |
|---|---|---|---|---|---|
| $CAM_0$ | $hash_{43}$ | $page_{30}$ | | $page_0$ | $entry_0$ |
| $CAM_1$ | $hash_5$ | $page_5$ | | $page_1$ | $entry_1$ |
| $CAM_2$ | $hash_{31}$ | $page_{31}$ | | $page_2$ | $entry_2$ |
| $CAM_3$ | $hash_0$ | $page_0$ | | $page_3$ | $entry_3$ |
| $CAM_4$ | $hash_1$ | $page_1$ | | $page_4$ | $entry_4$ |
| $CAM_5$ | $hash_2$ | $page_2$ | | $page_5$ | $entry_5$ |
| $CAM_6$ | $hash_3$ | $page_3$ | | $page_6$ | $entry_6$ |
| $CAM_7$ | $hash_4$ | $page_4$ | | $page_7$ | $entry_7$ |
| .... | $hash_6$ ... | $page_6$ ... | | .... | .... |
| $CAM_{29}$ | | | | $page_{29}$ | $entry_{29}$ |
| $CAM_{30}$ | $hash_{28}$ | $page_{28}$ | | $page_{30}$ | $entry_{43}$ |
| $CAM_{31}$ | $hash_{29}$ | $page_{29}$ | | $Page_{31}$ | $entry_{31}$ |

Note that the inserted entry is now the MRU flow-entry. So, the contents of $CAM_{31}$ are now moved to $CAM_0$

and the entries previously in the top 30 CAMs moved

In addition to looking up entries of database 324 via the cache subsystem 1115 for retrieval of an existing flow-entry, the LUE, SP, or FIDE engines also may update the flow-entries via the cache. As such, there may be entries in the cache that are updated flow-entries. Until such updated entries have been written into the flow-entry database 324 in external memory, the flow-entries are called "dirty." As is common in cache systems, a mechanism is provided to indicate dirty entries in the cache. A dirty entry cannot, for example, be flushed out until the corresponding entry in the database 324 has been updated.

Suppose in the last example, that the entry in the cache was modified by the operation. That is, $hash_{43}$ is in MRU $CAM_0$, $CAM_0$ correctly points to $page_{30}$, but the information in $page_{30}$ of the cache, $entry_{43}$, does not correspond to $entry_{43}$ in database 324. That is, the contents of cache page $page_{30}$ is dirty. There is now a need to update the database 324. This is called backing up or cleaning the dirty entry.

As is common in cache systems, there is an indication provided that a cache memory entry is dirty using a dirty flag. In the preferred embodiment, there is a dirty flag for each word in cache memory.

Another feature of the cache system of an embodiment of the invention is cleaning cache memory contents according to the entry most likely to be first flushed out of the cache memory. In our LRU cache embodiment, the cleaning of the cache memory entries proceeds in the inverse order of recentness of use. Thus, LRU pages are cleaned first consistent with the least likelihood that these are the entries likely to be flushed first.

In our embodiment, the memory state machine, whenever it is idle, is programmed to scan the CAM array in reverse order of recentness, i.e., starting from the bottom of the CAM array, and look for dirty flags. Whenever a dirty flag is found, the cache memory contents are backed up to the database 324 in external memory.

Note that once a page of cache memory is cleaned, it is kept in the cache in case it is still needed. The page is only flushed when more cache memory pages are needed. The corresponding CAM also is not changed until a new cache memory page is needed. In this way, efficient lookups of all cache memory contents, including clean entries are still possible. Furthermore, whenever a cache memory entry is flushed, a check is first made to ensure the entry is clean. If the entry is dirty, it is backed up prior to flushing the entry.

The cache subsystem 1115 can service two read transfers at one time. If there are more than two read requests active at one time the Cache services them in a particular order as follows:

(1) LRU dirty write back. The cache writes back the least recently used cache memory entry if it is dirty so that there will always be a space for the fetching of cache misses.

(2) Lookup and update engine 1107.

(3) State processor 1108.

(4) Flow insertion and deletion engine 1110.

(5) Analyzer host interface and control 1118.

(6) Dirty write back from LRU -1 to MRU; when there is nothing else pending, the cache engine writes dirty entries back to external memory.

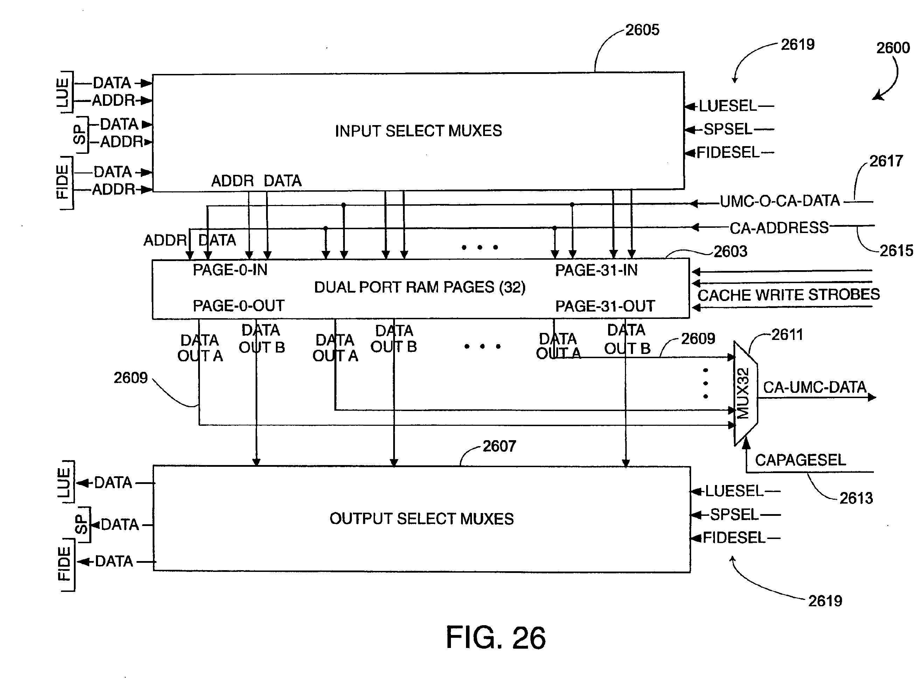

FIG. 26 shows the cache memory component 2600 of the cache subsystem 1115. Cache memory subsystem 2600 includes a bank 2603 of dual ported memories for the pages of cache memory. In our preferred embodiment there are 32 pages. Each page of memory is dual ported. That is, it includes two sets of input ports each having address and data inputs, and two sets of output ports, one set of input and output ports are coupled to the unified memory controller (UMC) 1119 for writing to and reading from the cache memory from and into the external memory used for the flow-entry database 324. Which of the output lines 2609 is coupled to UMC 1119 is selected by a multiplexor 2611 using a cache page select signal 2613 from CAM memory subsystem part of cache system 1115. Updating cache memory from the database 324 uses a cache data signal 2617 from the UMC and a cache address signal 2615.

Looking up and updating data from and to the cache memory from the lookup/update engine (LUE) 1107, state processor (SP) 1108 or flow insertion/deletion engine (FIDE) 1110 uses the other input and output ports of the cache memory pages 2603. A bank of input selection multiplexors 2605 and a set of output selector multiplexors 2607 respectively select the input and output engine using a set of selection signals 2619.

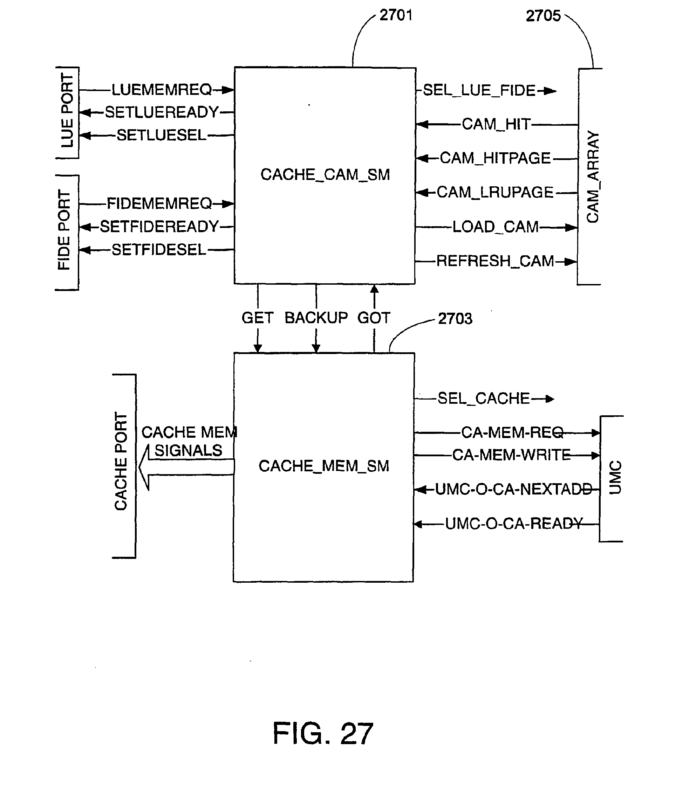

FIG. 27 shows the cache CAM state machine 2701 coupled to the CAM array 2705 and to the memory state machine 2703, together with some of the signals that pass between these elements. The signal names are self-explanatory, and how to implement these controllers as state machines or otherwise would be clear from the description herein above.

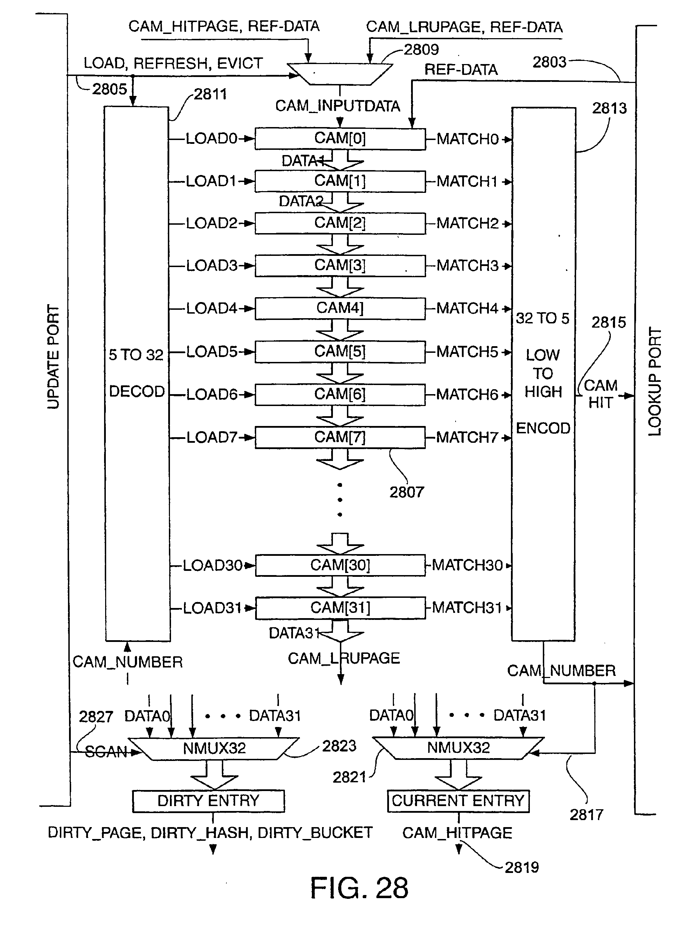

While the above description of operation of the CAM array is sufficient for one skilled in the art to design such a CAM array, and many such designs are possible, FIG. 28 shows one such design. Referring to that figure, the CAM array 2705 comprises one CAM, e.g., CAM[7] (2807), per page of CAM memory. The lookup port or update port depend which of the LUE, SP or FIDE are accessing the cache subsystem. The input data for a lookup is typically the hash, and shown as REF-DATA 2803. Loading, updating or evicting the cache is achieved using the signal 2805 that both selects the CAM input data using a select multiplexor 2809, such data being the hit page or the LRU page (the bottom CAM in according to an aspect of the invention). Any loading is done via a 5 to 32 decoder 2811. The results of the CAM lookup for all the CAMs in the array is provided to a 32-5 low to high 32 to 5 encoder 2813 that outputs the hit 2815, and which CAM number 2817 produced the hit. The CAM hit page 2819 is an output of a MUX 2821 that has the CAM data of each CAM as input and an output selected by the signal 2817 of the CAM that produced the hit. Maintenance of dirty entries is carried out similarly from the update port that coupled to the CAM state machine 2701. A MUX 2823 has all CAMs' data input and a scan input 2827. The MUX 2823 produces the dirty data 2825.

### The Pattern Parse and Extraction Database Format

The different protocols that can exist in different layers may be thought of as nodes of one or more trees of linked nodes. The packet type is the root of a tree (called base level). Each protocol is either a parent node of some other protocol at the next later or a terminal node. A parent node links a protocol to other protocols (child protocols) that can be at higher layer levels. Thus a protocol may have zero or more children.

As an example of the tree structure, consider an Ethernet packet. One of the children nodes may be the IP protocol, and one of the children of the IP protocol may be the TCP protocol. Another child of the IP may be the UDP protocol.

A packet includes at least one header for each protocol used. The child protocol of a particular protocol used in a packet is indicated by the contents at a location within the header of the particular protocol. The contents of the packet that specify the child are in the form of a child recognition pattern.

A network analyzer preferably can analyze many different protocols. At a base level, there are a number of packet types used in digital telecommunications, including Ethernet, HDLC, ISDN, Lap B, ATM, X.25, Frame Relay, Digital Data Service, FDDI (Fiber Distributed Data Interface), and T1, among others. Many of these packet types use different packet and/or frame formats. For example, data is transmitted in ATM and frame-relay systems in the form of fixed length packets (called "cells") that are 53 octets (i.e., bytes) long; several such cells may be needed to make up the information that might be included in a single packet of some other type.

Note that the term packet herein is intended to encompass packets, datagrams, frames and cells. In general, a packet format or frame format refers to how data is encapsulated with various fields and headers for transmission across a network. For example, a data packet typically includes an address destination field, a length field, an error correcting code (ECC) field or cyclic redundancy check (CRC) field, as well as headers and footers to identify the beginning and end of the packet. The terms "packet format," "frame format" and "cell format" are generally synonymous.

The packet monitor 300 can analyze different protocols, and thus can perform different protocol specific operations on a packet wherein the protocol headers of any protocol are located at different locations depending on the parent protocol or protocols used in the packet. Thus, the packet monitor adapts to different protocols according to the contents of the packet. The locations and the information extracted from any packet are adaptively determined for the particular type of packet. For example, there is no fixed definition of what to look for or where to look in order to form the flow signature. In some prior art systems, such as that described in United States Patent 5,101,402 to Chiu, et al.*,* there are fixed locations specified for particular types of packets. With the proliferation of protocols, the specifying of all the possible places to look to determine the session becomes more and more difficult. Likewise, adding a new protocol or application is difficult. In the present invention, the number of levels is variable for any protocol and is whatever number is sufficient to uniquely identify as high up the level system as we wish to go, all the way to the application level (in the OSI model).

Even the same protocol may have different variants. Ethernet packets for example, have several known variants, each having a basic format that remains substantially the same. An Ethernet packet (the root node) may be an Ethertype packet-also called an Ethernet Type/Version 2 and a DIX (DIGITAL-Intel-Xerox packet)-or an IEEE Ethernet (IEEE 803.x) packet. A monitor should be able to handle all types of Ethernet protocols. With the Ethertype protocol, the contents that indicate the child protocol is in one location, while with an IEEE type, the child protocol is specified in a different location. The child protocol is indicated by a child recognition pattern.

FIG. 16 shows the header 1600 (base level 1) of a complete Ethernet frame (i.e., packet) of information and includes information on the destination media access control address (Dst MAC 1602) and the source media access control address (Src MAC 1604). Also shown in FIG. 16 is some (but not all) of the information specified in the PDL files for extraction the signature. Such information is also to be specified in the parsing structures and extraction operations database 308. This includes all of the header information at this level in the form of 6 bytes of Dst MAC information 1606 and 6 bytes of Src MAC information 1610. Also specified are the source and destination address components, respectively, of the hash. These are shown as 2 byte Dst Hash 1608 from the Dst MAC address and the 2 byte Src Hash 1612 from the Src MAC address. Finally, information is included (1614) on where to the header starts for information related to the next layer level. In this case the next layer level (level 2) information starts at packet offset 12.

FIG. 17A now shows the header information for the next level (level-2) for an Ethertype packet 1700.

For an Ethertype packet 1700, the relevant information from the packet that indicates the next layer level is a two-byte type field 1702 containing the child recognition pattern for the next level. The remaining information 1704 is shown hatched because it not relevant for this level. The list 1712 shows the possible children for an Ethertype packet as indicated by what child recognition pattern is found offset 12.

Also shown is some of the extracted part used for the parser record and to locate the next header information. The signature part of the parser record includes extracted part 1702. Also included is the 1-byte Hash component 1710 from this information.

An offset field 1710 provides the offset to go to the next level information, i.e., to locate the start of the next layer level header. For the Ethertype packet, the start of the next layer header 14 bytes from the start of the frame.

Other packet types are arranged differently. For example, in an ATM system, each ATM packet comprises a five-octet "header" segment followed by a forty-eight octet "payload" segment. The header segment of an ATM cell contains information relating to the routing of the data contained in the payload segment. The header segment also contains traffic control information. Eight or twelve bits of the header segment contain the Virtual Path Identifier (VPI), and sixteen bits of the header segment contain the Virtual Channel Identifier (VCI). Each ATM exchange translates the abstract routing information represented by the VPI and VCJ bits into the addresses of physical or logical network links and routes each ATM cell appropriately.

FIG. 17B shows the structure of the header of one of the possible next levels, that of the IP protocol. The possible children of the IP protocol are shown in table 1752. The header starts at a different location (L3) depending on the parent protocol. Also included in FIG. 17B are some of the fields to be extracted for the signature, and an indication of where the next level's header would start in the packet.

Note that the information shown in FIGS. 16, 17A, and 17B would be specified to the monitor in the form of PDL files and compiled into the database 308 of pattern structures and extraction operations.

The parsing subsystem 301 performs operations on the packet header data based on information stored in the database 308. Because data related to protocols can be considered as organized in the form of a tree, it is required in the parsing subsystem to search through data that is originally organized in the form of a tree. Since real time operation is preferable, it is required to carry out such searches rapidly.

Data structures are known for efficiently storing information organized as trees. Such storage-efficient means typically require arithmetic computations to determine pointers to the data nodes. Searching using such storage-efficient data structures may therefore be too time consuming for the present application. It is therefore desirable to store the protocol data in some form that enables rapid searches.

In accordance with another embodiment of the invention, the database 308 is stored in a memory and includes a data structure used to store the protocol specific operations that are to be performed on a packet. In particular, a compressed representation is used to store information in the pattern parse and extraction database 308 used by the pattern recognition process 304 and the extraction process 306 in the parser subsystem 301. The data structure is organized for rapidly locating the child protocol related information by using a set of one or more indices to index the contents of the data structure. A data structure entry includes an indication of validity. Locating and identifying the child protocol includes indexing the data structure until a valid entry is found. Using the data structure to store the protocol information used by the pattern recognition engine (PRE) 1006 enables the parser subsystem 301 to perform rapid searches.

In one embodiment, the data structure is in the form of a three-dimensional structure. Note that this three dimensional structure in turn is typically stored in memory as a set of two-dimensional structures whereby one of the three dimensions of the 3-D structure is used as an index to a particular 2-D array. This forms a first index to the data structure.

FIG. 18A shows such a 3-D representation 1800 (which may be considered as an indexed set of 2-D representations). The three dimensions of this data structure are:

1. Type identifier [1:M]. This is the identifier that identifies a type of protocol at a particular level. For example, 01 indicates an Ethernet frame. 64 indicates IP, 16 indicates an IEEE type Ethernet packet, etc. Depending on how many protocols the packet parser can handle, M may be a large number; M may grow over time as the capability of analyzing more protocols is added to monitor 300. When the 3-D structure is considered a set of 2-D structures, the type ID is an index to a particular 2-D structure.

2. Size [1:64]. The size of the field of interest within the packet.

3. Location [1:512]. This is the offset location within the packet, expressed as a number of octets (bytes).

At any one of these locations there may or may not be valid data. Typically, there will not be valid data in most locations. The size of the 3-D array is M by 64 by 512, which can be large; M for example may be 10,000. This is a sparse 3-D matrix with most entries empty (i.e., invalid).

Each array entry includes a "node code" that indicates the nature of the contents. This node code has one of four values: (1) a "protocol" node code indicating to the pattern recognition process 304 that a known protocol has been recognized as the next (i.e., child) protocol; (2) a "terminal" node code indicating that there are no children for the protocol presently being searched, i.e., the node is a final node in the protocol tree; (3) a "null" (also called "flush") node code indicating that there is no valid entry.

In the preferred embodiment, the possible children and other information are loaded into the data structure by an initialization that includes compilation process 310 based on the PDL files 336 and the layering selections 338. The following information is included for any entry in the data structure that represents a protocol.

(a) A list of children (as type IDs) to search next. For example, for an Ethernet type 2, the children are Ethertype (IP, IPX, *etc,* as shown in 1712 of FIG. 17). These children are compiled into the type codes. The code for IP is 64, that for IPX is 83, *etc.*

(b) For each of the IDs in the list, a list of the child recognition patterns that need to be compared. For example, 64: $0800_{16}$ in the list indicates that the value to look for is 0800 (hex) for the child to be type ID 64 (which is the IP protocol). $83:8137_{16}$ in the list indicates that the value to look for is 8137 (hex) for the child to be type ID 83 (which is the IPX protocol), etc.

(c) The extraction operations to perform to build the identifying signature for the flow. The format used is (offset, length, flow_signature_value_identifier), the flow_signature_value_identifier indicating where the extracted entry goes in the signature, including what operations (AND, ORs, *etc.*) may need to be carried out. If there is also a hash key component, for instance, then information on that is included. For example, for an Ethertype packet, the 2-byte type (1706 in FIG 17) is used in the signature. Furthermore, a 1-byte hash (1708 in FIG. 17A) of the type is included.. Note furthermore, the child protocol starts at offset 14.

An additional item may be the "fold." Folding is used to reduce the storage requirements for the 3-D structure. Since each 2-D array for each protocol ID may be sparsely populated, multiple arrays may be combined into a single 2-D array as long as the individual entries do not conflict with each other. A fold number is then used to associate each element. For a given lookup, the fold number of the lookup must match the fold number entry. Folding is described in more detail below.

In the case of the Ethernet, the next protocol field may indicate a length, which tells the parser that this is a IEEE type packet, and that the next protocol is elsewhere. Normally, the next protocol field contains a value which identifies the next, i.e., child protocol.

The entry point for the parser subsystem is called the virtual base layer and contains the possible first children, i.e., the packet types. An example set of protocols written in a high level protocol description language (PDL) is included herein. The set includes PDL files, and the file describing all the possible entry points (i.e., the virtual base) is called virtual.pdl. There is only one child, O1, indicating the Ethernet, in this file. Thus, the particular example can only handle Ethernet packets. In practice, there can be multiple entry points.

In one embodiment, the packet acquisition device provides a header for every packet acquired and input into monitor 300 indicating the type of packet. This header is used to determine the virtual base layer entry point to the parser subsystem. Thus, even at the base layer, the parser subsystem can identify the type of packet.

Initially, the search starts at the child of the virtual base, as obtained in the header supplied by the acquisition device. In the case of the example, this has ID value 01, which is the 2-D array in the overall 3-D structure for Ethernet packets.

Thus hardware implementing pattern analysis process 304 (e.g., pattern recognition engine (PRE) 1006 of FIG. 10) searches to determine the children (if any) for the 2-D array that has protocol ID 01. In the preferred embodiment that uses the 3-D data structure, the hardware PRE 1006 searches up to four lengths (i.e., sizes) simultaneously. Thus, the process 304 searches in groups of four lengths. Starting at protocol ID O1, the first two sets of 3-D locations searched are

(1, 1, 1)    (1, 1, 2)    ...
(1, 2, 1)    (1,2,2)

(continued)

(1, 3, 1)     (1,3,2)

(1, 4, 1)     (1,4,2)

At each stage of a search, the analysis process 304 examines the packet and the 3-D data structure to see if there is a match (by looking at the node code). If no valid data is found, e.g., using the node code, the size is incremented (to maximum of 4) and the offset is then incremented as well.

Continuing with the example, suppose the pattern analysis process 304 finds something at 1, 2, 12. By this, we mean that the process 304 has found that for protocol ID value 01 (Ethernet) at packet offset 12, there is information in the packet having a length of 2 bytes (octets) that may relate to the next (child) protocol. The information, for example, may be about a child for this protocol expressed as a child recognition pattern. The list of possible child recognition patterns that may be in that part of the packet is obtained from the data structure.

The Ethernet packet structure comes in two flavors, the Ethertype packet and newer IEEE types, and the packet location that indicates the child is different for both. The location that for the Ethertype packet indicates the child is a "length" for the IEEE type, so a determination is made for the Ethernet packet whether the "next protocol" location contains a value or a length (this is called a "LENGTH" operation). A successful LENGTH operation is indicated by contents less than or equal to $05DC_{16}$, then this is an IEEE type Ethernet frame. In such a case, the child recognition pattern is looked for elsewhere. Otherwise, the location contains a value that indicates the child.

Note that while this capability of the entry being a value (e.g., for a child protocol ID) or a length (indicating further analysis to determine the child protocol) is only used for Ethernet packets, in the future, other packets may end up being modified. Accordingly, this capability in the form of a macro in the PDL files still enables such future packets to be decoded.

Continuing with the example, suppose that the LENGTH operation fails. In that case, we have an Ethertype packet, and the next protocol field (containing the child recognition pattern) is 2 bytes long starting at offset 12 as shown as packet field 1702 in FIG. 17A. This will be one of the children of the Ethertype shown in table 1712 in FIG. 17A. The PRE uses the information in the data structure to check what the ID code is for the found 2-byte child recognition pattern. For example, if the child recognition pattern is 0800 (Hex), then the protocol is IP. If the child recognition pattern is OBAD (Hex) the protocol is VIP (VINES).

Note that an alternate embodiment may keep a separate table that includes all the child recognition patterns and their corresponding protocol ID's

To follow the example, suppose the child recognition pattern at 1,2,12 is $0800_{16}$, indicating IP. The ID code for the IP protocol is $64_{10}$). To continue with the Ethertype example, once the parser matches one of the possible children for the protocl--in the example, the protocol type is IP with an ID of 64--then the parser continues the search for the next level. The ID is 64, the length is unknown, and offset is known to be equal or larger than 14 bytes (12 offset for type, plus 2, the length of type), so the search of the 3-D structure commences from location (64, 1) at packet offset 14. A populated node is found at (64, 2) at packet offset 14. Heading details are shown as 1750 in FIG. 17B. The possible children are shown in table 1752.

Alternatively, suppose that at (1, 2, 12) there was a length $1211_{10}$. This indicates that this is an IEEE type Ethernet frame, which stores its type elsewhere. The PRE now continues its search at the same level, but for a new ID, that of an IEEE type Ethernet frame. An IEEE Ethernet packet has protocol ID 16, so the PRE continues its search of the three-dimensional space with ID 16 starting at packet offset 14.

In our example, suppose there is a "protocol" node code found at (16, 2) at packet offset 14, and the next protocol is specified by child recognition pattern $0800_{16}$. This indicates that the child is the IP protocol, which has type ID 64. Thus the search continues, starting at (64, 1) at packet offset 16.

**Compression.**

As noted above, the 3-D data structure is very large, and sparsely populated. For example, if 32 bytes are stored at each location, then the length is M by 64 by 512 by 32 bytes, which is M megabytes. If M = 10,000, then this is about 10 gigabytes. It is not practical to include 10 Gbyte of memory in the parser subsystem for storing the database 308. Thus a compressed form of storing the data is used in the preferred embodiment. The compression is preferably carried out by an optimizer component of the compilation process 310.

Recall that the data structure is sparse. Different embodiments may use different compression schemes that take advantage of the sparseness of the data structure. One embodiment uses a modification of multi-dimensional run length encoding.

Another embodiment uses a smaller number two-dimensional structures to store the information that otherwise would be in one large three-dimensional structure. The second scheme is used in the preferred embodiment.

FIG. 18A illustrated how the 3-D array 1800 can be considered a set of 2-D arrays, one 2-D array for each protocol (i.e., each value of the protocol ID). The 2-D structures are shown as 1802-1, 1802-2, ..., 1802-M for up to M protocol ID's. One table entry is shown as 1804. Note that the gaps in table are used to illustrate that each 2-D structure table is typically large.

Consider the set of trees that represent the possible protocols. Each node represents a protocol, and a protocol may have a child or be a terminal protocol. The base (root) of the tree has all packet types as children. The other nodes form the nodes in the tree at various levels from level 1 to the final terminal nodes of the tree. Thus, one element in the base node may reference node ID 1, another element in the base node may reference node ID 2 and so on. As the tree is traversed from the root, there may be points in the tree where the same node is referenced next. This would occur, for example, when an application protocol like Telnet can run on several transport connections like TCP or UDP. Rather than repeating the Telnet node, only one node is represented in the patterns database 308 which can have several parents. This eliminates considerable space explosion.

Each 2-D structure in FIG. 18A represents a protocol. To enable saving space by using only one array per protocol which may have several parents, in one embodiment, the pattern analysis subprocess keeps a "current header" pointer. Each location (offset) index for each protocol 2-D array in the 3-D structure is a relative location starting with the start of header for the particular protocol.

Each of the two-dimensional arrays is sparse. The next step of the optimization, is checking all the 2-D arrays against all the other 2-D arrays to find out which ones can share memory. Many of these 2-D arrays are often sparsely populated in that they each have only a small number of valid entries. So, a process of "folding" is next used to combine two or more 2-D arrays together into one physical 2-D array without losing the identity of any of the original 2-D arrays (i.e., all the 2-D arrays continue to exist logically). Folding can occur between any 2-D arrays irrespective of their location in the tree as long as certain conditions are met.

Assume two 2-D arrays are being considered for folding. Call the first 2-D arrays A and the second 2-D array B. Since both 2-D arrays are partially populated, 2-D array B can be combined with 2-D arrays A if and only if none of the individual elements of these two 2-D arrays that have the same 2-D location conflict. If the result is foldable, then the valid entries of 2-D array B are combined with the valid entries of 2-D array A yielding one physical 2-D array. However, it is necessary to be able to distinguish the original 2-D array A entries from those of 2-D array B. For example, if a parent protocol of the protocol represented by 2-D array B wants to reference the protocol ID of 2-D array B, it must now reference 2-D array A instead. However, only the entries that were in the original 2-D array B are valid entries for that lookup. To accomplish this, each element in any given 2-D array is tagged with a fold number. When the original tree is created, all elements in all the 2-D arrays are initialized with a fold value of zero. Subsequently, if 2-D array B is folded into 2-D array A, all valid elements of 2-D array B are copied to the corresponding locations in 2-D array A and are given different fold numbers than any of the elements in 2-D array A. For example, if both 2-D array A and 2-D array B were original 2-D arrays in the tree (i.e., not previously folded) then, after folding, all the 2-D array A entries would still have fold 0 and the 2-D array B entries would now all have a fold value of 1. After 2-D array B is folded into 2-D array A, the parents of 2-D array B need to be notified of the change in the 2-D array physical location of their children and the associated change in the expected fold value.

This folding process can also occur between two 2-D arrays that have already been folded, as long as none of the individual elements of the two 2-D arrays conflict for the same 2-D array location. As before, each of the valid elements in 2-D array B must have fold numbers assigned to them that are unique from those of 2-D array A. This is accomplished by adding a fixed value to all the 2-D array B fold numbers as they are merged into 2-D array A. This fixed value is one larger than the largest fold value in the original 2-D array A. It is important to note that the fold number for any given 2-D array is relative to that 2-D array only and does not span across the entire tree of 2-D arrays.

This process of folding can now be attempted between all combinations of two 2-D arrays until there are no more candidates that qualify for folding. By doing this, the total number of 2-D arrays can be significantly reduced.

Whenever a fold occurs, the 3-D structure (i.e., all 2-D arrays) must be searched for the parents of the 2-D array being folded into another array. The matching pattern which previously was mapped to a protocol ID identifying a single 2-D array must now be replaced with the 2-D array ID and the next fold number (i.e., expected fold).

Thus, in the compressed data structure, each entry valid entry includes the fold number for that entry, and additionally, the expected fold for the child.

An alternate embodiment of the data structure used in database 308 is illustrated in FIG. 18B. Thus, like the 3-D structure described above, it permits rapid searches to be performed by the pattern recognition process 304 by indexing locations in a memory rather than performing address link computations. The structure, like that of FIG. 18A, is suitable for implementation in hardware, for example, for implementation to work with the pattern recognition engine (PRE) 1006 of FIG. 10.

A table 1850, called the protocol table (PT) has an entry for each protocol known by the monitor 300, and includes some of the characteristics of each protocol, including a description of where the field that specifies next protocol (the child recognition pattern) can be found in the header, the length of the next protocol field, flags to indicate the header length and type, and one or more slicer commands, the slicer can build the key components and hash components for the packet at this protocol at this layer level.

For any protocol, there also are one or more lookup tables (LUTs). Thus database 308 for this embodiment also includes a set of LUTs 1870. Each LUT has 256 entries indexed by one byte of the child recognition pattern that is extracted from the next protocol field in the packet. Such a protocol specification may be several bytes long, and so several of LUTs 1870 may need to be looked up for any protocol.

Each LUT's entry includes a 2-bit "node code" that indicates the nature of the contents, including its validity. This node code has one of four values: (1) a "protocol" node code indicating to the pattern recognition engine 1006 that a known protocol has been recognized; (2) an "intermediate" node code, indicating that a multi-byte protocol code has been partially recognized, thus permitting chaining a series of LUTs together before; (3) a "terminal" node code indicating that there are no children for the protocol presently being searched, i.e., the node is a final node in the protocol tree; (4) a "null" (also called "flush" and "invalid") node code indicating that there is no valid entry.

In addition to the node code, each LUT entry may include the next LUT number, the next protocol number (for looking up the protocol table 1850), the fold of the LUT entry, and the next fold to expect. Like in the embodiment implementing a compressed form of the 3-D representation, folding is used to reduce the storage requirements for the set of LUTs. Since the LUTs 1870 may be sparsely populated, multiple LUTs may be combined into a single LUT as long as the individual entries do not conflict with each other. A fold number is then used to associate each element with its original LUT.

For a given lookup, the fold number of the lookup must match the fold number in the lookup table. The expected fold is obtained from the previous table lookup (the "next fold to expect" field). The present implementation uses 5-bits to describe the fold and thus allows up to 32 tables to be folded into one table.

When using the data structure of FIG. 18B, when a packet arrives at the parser, the virtual base has been pre-pended or is known. The virtual base entry tells the packet recognition engine where to find the first child recognition pattern in the packet. The pattern recognition engine then extracts the child recognition pattern bytes from the packet and uses them as an address into the virtual base table (the first LUT). If the entry looked up in the specified next LUT by this method matches the expected next fold value specified in the virtual base entry, the lookup is deemed valid. The node code is then examined. If it is an intermediate node then the next table field obtained from the LUT lookup is used as the most significant bits of the address. The next expected fold is also extracted from the entry. The pattern recognition engine 1006 then uses the next byte from the child recognition pattern as the for the next LUT lookup.

Thus, the operation of the PRE continues until a terminal code is found. The next (initially base layer) protocol is looked up in the protocol table 1850 to provide the PRE 1006 with information on what field in the packet (in input buffer memory 1008 of parser subsystem 1000) to use for obtaining the child recognition pattern of the next protocol, including the size of the field. The child recognition pattern bytes are fetched from the input buffer memory 1008. The number of bytes making up the child recognition pattern is also now known.

The first byte of the protocol code bytes is used as the lookup in the next LUT. If a LUT lookup results in a node code indicating a protocol node or a terminal node, the Next LUT and next expected fold is set, and the "next protocol" from LUT lookup is used as an index into the protocol table 1850. This provides the instructions to the slicer 1007, and where in the packet to obtain the field for the next protocol. Thus, the PRE 1006 continues until it is done processing all the fields (i.e., the protocols), as indicated by the terminal node code reached.

Note that when a child recognition pattern is checked against a table there is always an expected fold. If the expected fold matches the fold information in the table, it is used to decide what to do next. If the fold does not match, the optimizer is finished.

Note also that an alternate embodiment may use different size LUTs, and then index a LUT by a different amount of the child recognition pattern.

The present implementation of this embodiment allows for child recognition patterns of up to four bytes. Child recognition patterns of more than 4 bytes are regarded as special cases.

In the preferred embodiment, the database is generated by the compiler process 310. The compiler process first builds a single protocol table of all the links between protocols. Links consist of the connection between parent and child protocols. Each protocol can have zero or more children. If a protocol has children, a link is created that consists of the parent protocol, the child protocol, the child recognition pattern, and the child recognition pattern size. The compiler first extracts child recognition patterns that are greater than two bytes long. Since there are only a few of these, they are handled separately. Next sub links are created for each link that has a child recognition pattern size of two.

All the links are then formed into the LUTs of 256 entries.

Optimization is then carried out. The first step in the optimization is checking all the tables against all the other tables to find out which ones can share a table. This process proceeds the same way as described above for two-dimensional arrays, but now for the sparse lookup tables.

Part of the initialization process (e.g., compiler process 310) loads a slicer instruction database with data items including of instruction, source address, destination address, and length. The PRE 1006 when it sends a slicer instruction sends this instruction as an offset into the slicer instruction database. The instruction or Op code tells the slicer what to extract from the incoming packet and where to put it in the flow signature. Writing into certain fields of the flow signature automatically generates a hash. The instruction can also tell the slicer how to determine the connection status of certain protocols.

Note that alternate embodiments may generate the pattern, parse and extraction database other than by compiling PDL files.

### *The compilation process*

The compilation process 310 is now described in more detail. This process 310 includes creating the parsing patterns and extractions database 308 that provides the parsing subsystem 301 with the information needed to parse packets and extract identifying information, and the state processing instructions database 326 that provides the state processes that need to be performed in the state processing operation 328.

Input to the compiler includes a set of files that describe each of the protocols that can occur. These files are in a convenient protocol description language (PDL) which is a high level language. PDL is used for specifying new protocols and new levels, including new applications. The PDL is independent of the different types of packets and protocols that may be used in the computer network. A set of PDL files is used to describe what information is relevant to packets and packets that need to be decoded. The PDL is further used to specify state analysis operations. Thus, the parser subsystem and the analyzer subsystems can adapt and be adapted to a variety of different kinds of headers, layers, and components and need to be extracted or evaluated, for example, in order to build up a unique signature.

There is one file for each packet type and each protocol. Thus there is a PDL file for Ethernet packets and there is a PDL file for frame relay packets. The PDL files are compiled to form one or more databases that enable monitor 300 to perform different protocol specific operations on a packet wherein the protocol headers of any protocol are located at different locations depending on the parent protocol or protocols used in the packet. Thus, the packet monitor adapts to different protocols according to the contents of the packet. In particular, the parser subsystem 301 is able to extract different types of data for different types of packets. For example, the monitor can know how to interpret a Ethernet packet, including decoding the header information, and also how to interpret an frame relay packet, including decoding the header information.

The set of PDL files, for example, may include a generic Ethernet packet file. There also is included a PDL file for each variation Ethernet file, for example, an IEEE Ethernet file.

The PDL file for a protocol provides the information needed by compilation process 310 to generate the database 308. That database in turn tells the parser subsystem how to parse and/or extract information, including one or more of what protocol-specific components of the packet to extract for the flow signature, how to use the components to build the flow signature, where in the packet to look for these components, where to look for any child protocols, and what child recognition patterns to look for. For some protocols, the extracted components may include source and destination addresses, and the PDL file may include the order to use these addresses to build the key. For example, Ethernet frames have end-point addresses that are useful in building a better flow signature. Thus the PDL file for an Ethernet packet includes information on how the parsing subsystem is to extract the source and destination addresses, including where the locations and sizes of those addresses are. In a frame-relay base layer, for example, there are no specific end point addresses that help to identify the flow better, so for those type of packets, the PDL file does not include information that will cause the parser subsystem to extract the end-point addresses.

Some protocols also include information on connections. TCP is an example of such a protocol. Such protocol use connection identifiers that exist in every packet. The PDL file for such a protocol includes information about what those connection identifiers are, where they are, and what their length is. In the example of TCP, for example running over IP, these are port numbers. The PDL file also includes information about whether or not there are states that apply to connections and disconnections and what the possible children are states. So, at each of these levels, the packet monitor 300 learns more about the packet. The packet monitor 300 can identify that a particular packet is part of a particular flow using the connection identifier. Once the flow is identified, the system can determine the current state and what states to apply that deal with connections or disconnections that exist in the next layer up to these particular packets.

For the particular PDL used in the preferred embodiment, a PDL file may include none or more FIELD statement each defining a specific string of bits or bytes (i.e., a field) in the packet. A PDL file may further include none or more GROUP statements each used to tie together several defined fields. A set of such tied together fields is called a group. A PDL file may further include none or more PROTOCOL statements each defining the order of the fields and groups within the header of the protocol. A PDL file may further include none or more FLOW statements each defining a flow by describing where the address, protocol type, and port numbers are in a packet. The FLOW statement includes a description of how children flows of this protocol are determined using state operations. States associated may have state operations that may be used for managing and maintaining new states learned as more packets of a flow are analyzed.

FIG. 24 shows a set of PDL files for a layering structure for an Ethernet packet that runs TCP on top of IP. Common.pdl (2403) is a file containing the common protocol definitions, i.e., some field definitions for commonly used fields in various network protocols. Flows.pdl (2405) is a file containing general flow definitions. Virtual.pdl (2407) is a PDL file containing the definition for the VirtualBase layer used. Ethernet.pdl (2411) is the PDL file containing the definition for the Ethernet packet. The decision on Ethertype vs. IEEE type Ethernet file is described herein. If this is Ethertype, the selection is made from the file Ethertype.pdl (2413). In an alternate embodiment, the Ethertype selection definition may be in the same Ethernet file 2411. In a typical implementation, PDL files for other Ethernet types would be included. IP.pdl (2415) is a PDL file containing the packet definitions for the Internet Protocol. TCP.pdl (2417) is the PDL file containing the packet definitions for the Transmission Control Protocol, which in this case is a transport service for the IP protocol. In addition to extracting the protocol information the TCP protocol definition file assists in the process of identification of connections for the processing of states. In a typical set of files, there also would be a file UDP.pdl for the User Datagram Protocol (UDP) definitions. RPC.pdl (2419) is a PDL file file containing the packet definitions for Remote Procedure Calls.

NFS.pdl (2421) is a PDL file containing the packet definitions for the Network File System. Other PDL files would typically be included for all the protocols that might be encountered by monitor 300.

Input to the compilation process 310 is the set of PDL files (e.g., the files of FIG 24) for all protocols of interest. Input to process 310 may also include layering information shown in FIG. 3 as datagram layer selections 338. The layer selections information describes the layering of the protocols-what protocol(s) may be on top of any particular protocols. For example, IP may run over Ethernet, and also over many other types of packets. TCP may run on top of IP. UDP also may run on top of IP. When no layering information is explicitly included, it is inherent; the PDL files include the children protocols, and this provides the layering information.

The compiling process 310 is illustrated in FIG. 25. The compiler loads the PDL source files into a scratch pad memory (step 2503) and reviews the files for the correct syntax (parse step 2505). Once completed, the compiler creates an intermediate file containing all the parse elements (step 2507). The intermediate file in a format called "Compiled Protocol Language" (CPL). CPL instructions have a fixed layer format, and include all of the patterns, extractions, and states required for each layer and for the entire tree for a layer. The CPL file includes the number of protocols and the protocol definitions. A protocol definition for each protocol can include one or more of the protocol name, the protocol ID, a header section, a group identification section, sections for any particular layers, announcement sections, a payload section, a children section, and a states section. The CPL file is then run by the optimizer to create the final databases that will be used by monitor 300. It would be clear to those in the art that alternate implementations of the compilation process 310 may include a different form of intermediate output, or no intermediate output at all, directly generating the final database(s).

After the parse elements have been created, the compiler builds the flow signature elements (step 2509). This creates the extraction operations in CPL that are required at each level for each PDL module for the building of the flow signature (and hash key) and for links between layers (2009).

With the flow signature operations complete, the PDL compiler creates (step 2511) the operations required to extract the payload elements from each PDL module. These payload elements are used by states in other PDL modules at higher layers in the processing.

The last pass is to create the state operations required by each PDL module. The state operations are complied from the PDL files and created in CPL form for later use (2013).

The CPL file is now run through an optimizer that generates the final databases used by monitor 300.

**PROTOCOL DEFINITION LANGUAGE (PDL) REFERENCE GUIDE (VERSION A0.02)**

Included herein is this reference guide (the "guide") for the page description language (PDL) which, in one embodiment of the invention, permits the automatic generation of the databases used by the parser and analyzer sub-systems, and also allows for including new and modified protocols and applications to the capability of the monitor.

**COPYRIGHT NOTICE**

## 1. INTRODUCTION

The Protocol Definition Language (PDL) is a special purpose language used to describe network protocols and all the fields within the protocol headers.

Within this guide, protocol descriptions (PDL files) are referred to as *PDL* or *rules* when there in no risk of confusion with other types of descriptions.

PDL uses both form and organization similar to the data structure definition part of the C programming language and the PERL scripting language. Since PDL was derived from a language used to decode network packet contact, the authors have mixed the language format with the requirements of packet decoding. This results in an expressive language that is very familiar and comfortable for describing packet content and the details required representing a flow.

### 1.1 Summary

The PDL is a non-procedural Forth Generation language (4GL). This means is describes *what* needs to be done without describing *how* to do it. The details of *how* are hidden in the compiler and the Compiled Protocol Layout (CPL) optimization utility.

In addition, it is used to describe network flows by defining which fields are the address fields, which are the protocol type fields, etc.

Once a PDL file is written, it is compiled using the Netscope compiler (nsc), which produces the *MeterFlow* database (MeterFlow.db) and the Netscope database (Netscope.db). The MeterFlow database contains the flow definitions and the Netscope database contains the protocol header definitions.

These databases are used by programs like: **mfkeys**, which produces flow keys (also called flow signatures); **mfcpl,** which produces flow definitions in CPL format; **mfpkts** which produces sample packets of all known protocols; and **netscope**, which decodes Sniffer™ and tcpdump files.

### 1.2 Guide Conventions

The following conventions will be used throughout this guide:

Small courier typeface indicates C code examples or function names. Functions are written with parentheses after them **[function () ]**, variables are written just as their names **[variables],** and structure names are written prefixed with **"struct" [struct packet].**

*Italics* indicate a filename (for instance, *mworkslbaselhlbase.h).* Filenames will usually be written relative to the root directory of the distribution.

Constants are expressed in decimal, unless written "0x... ", the C language notation for hexadecimal numbers.

Note that any contents on any line in a PDL file following two hyphen (--) are ignored by the compiler. That is, they are comments.

## 2. PROGRAM STRUCTURE

*A MeterFlow* PDL decodes and flow set is a non-empty sequence of statements.

There are four basic types of statements or definitions available in *MeterFlow* PDL:

**FIELD,**

**GROUP,**

**PROTOCOL** and

**FLOW.**

### 2.1 FIELD Definitions

The FIELD definition is used to define a specific string of bits or bytes in the packet. The FIELD definition has the following format:

**Name FIELD**

**SYNTAX Type [{Enums }]**
**DISPLAY-HINT "FormatString"**
**LENGTH "Expression"**
**FLAGS FieldFlags**
**ENCAP FieldName [, FieldName2]**
**LOOKUP LookupType [Filename ]**
**ENCODING EncodingType**
**DEFAULT "value"**
**DESCRIPTION "Description"**

Where only the **FIELD** and **SYNTAX** lines are required. All the other lines are attribute lines, which define special characteristics about the **FIELD**. Attribute lines are optional and may appear in any order. Each of the attribute lines are described in detail below:

### 2.1.1 SYNTAX Type [{ Enums }]

This attribute defines the type and, if the type is an INT, BYTESTRING, BITSTRING, or SNMPSEQUENCE type, the enumerated values for the FIELD. The currently defined types are:

| | |
|---|---|
| INT*(numBits)* | Integer that is *numBits* bits long. |
| UNSIGNED INT*(numBits)* | Unsigned integer that is *numBits* bits long. |
| BYTESTRING*(numBytes)* | String that is *numBytes* bytes long. |
| BYTESTRING(RI..R2) | String that ranges in size from *R1* to R2 bytes. |
| BITSTRING*(numBits)* | String that is *numBits* bits long. |
| LSTRING*(lenBytes)* | String with *lenBytes* header. |
| NSTRING | Null terminated string. |
| DNSSTRING | DNS encoded string. |
| SNMPOID | SNMP Object Identifier. |
| SNMPSEQUENCE | SNMP Sequence. |
| SNMPTIMETICKS | SNMP TimeTicks. |
| COMBO *field1 field2* | Combination pseudo field. |

### 2.1.2 DISPLAY-HINT "FormatString"

This attribute is for specifying how the value of the FIELD is displayed. The currently supported formats are:

| | |
|---|---|
| Numx | Print as a num byte hexidecimal number. |
| Numd | Print as a num byte decimal number. |
| Numo | Print as a num byte octal number. |
| Numb | Print as a num byte binary number. |
| Numa | Print num bytes in ASCII format. |
| Text | Print as ASCII text. |
| HexDump | Print in hexdump format. |

### 2.1.3 LENGTH "Expression"

This attribute defines an expression for determining the FIELD's length. Expressions are arithmetic and can refer to the value of other FIELD's in the packet by adding a $ to the referenced field's name. For example, "($tcpHeaderLen *4) - 20" is a valid expression if tcpHeaderLen is another field defined for the current packet.

### 2.1.4 FLAGS FieldFlags

The attribute defines some special flags for a FIELD. The currently supported FieldFlags are:

| SAMELAYER | Display field on the same layer as the previous field. |
|---|---|
| NOLABEL | Don't display the field name with the value. |
| NOSHOW | Decode the field but don't display it. |
| SWAPPED | The integer value is swapped. |

### 2.1.5 ENCAP FieldName [, FieldName2]

This attribute defines how one packet is encapsulated inside another. Which packet is determined by the value of the FieldName field. If no packet is found using FieldName then FieldName2 is tried.

### 2.1.6 LOOKUP LookupType [Filename ]

This attribute defines how to lookup the name for a particular FIELD value. The currently supported LookupTypes are:

| SERVICE | Use getservbyport(). |
|---|---|
| HOSTNAME | Use gethostbyaddr(). |
| MACADDRESS | Use $METERFLOW/conf/mac2ip.cf. |
| FILE *file* | Use *file* to lookup value. |

### 2.1.7 ENCODING EncodingType

This attribute defines how a FIELD is encoded. Currently, the only supported EncodingType is BER (for Basic Encoding Rules defined by ASN.1).

### 2.1.8 DEFAULT "value"

This attribute defines the default value to be used for this field when generating sample packets of this protocol.

### 2.1.9 DESCRIPTION "Description"

This attribute defines the description of the FIELD. It is used for informational purposes only.

### *2.2 GROUP Definitions*

The GROUP definition is used to tie several related FIELDs together. The GROUP definition has the following format:

**Name GROUP
LENGTH "Expression"
OPTIONAL "Condition"
SUMMARIZE "Condition" : "FormatString" [
"Condition" : "FormatString"...]
DESCRIPTION "Description"
::= { Name=FieldOrGroup [,
Name=FieldOrGroup...] }**

Where only the GROUP and ::= lines are required. All the other lines are attribute lines, which define special characteristics for the GROUP. Attribute lines are optional and may appear in any order. Each attribute line is described in detail below:

**2.2.1. LENGTH "Expression"**

This attribute defines an expression for determining the GROUP's length. Expressions are arithmetic and can refer to the value of other FIELD's in the packet by adding a $ to the referenced field's name. For example, "($tcpHeaderLen *4) - 20" is a valid expression if tcpHeaderLen is another field defined for the current packet.

**2.2.2 OPTIONAL "Condition"**

This attribute defines a condition for determining whether a GROUP is present or not. Valid conditions are defined in the Conditions section below.

**2.2.3 SUMMARIZE "Condition" : "FormatString" [ "Condition" : "FormatString"... ]**

This attribute defines how a GROUP will be displayed in Detail mode. A different format (FormatString) can be specified for each condition (Condition). Valid conditions are defined in the Conditions section below. Any FIELD's value can be referenced within the FormatString by proceeding the FIELD's name with a $. In addition to FIELD names there are several other special $ keywords:

| $LAYER | Displays the current protocol layer. |
|---|---|
| $GROUP | Displays the entire GROUP as a table. |
| $LABEL | Displays the GROUP label. |
| $*field* | Displays *the field* value (use enumerated name if available). |
| $*:field* | Displays *the field* value (in raw format). |

**2.2.4 DESCRIPTION "Description"**

This attribute defines the description of the GROUP. It is used for informational purposes only.

**2.2.5 ::= { Name=FieldOrGroup [, Name=FieldOrGroup... ] }**

This defines the order of the fields and subgroups within the GROUP.

***2.3 PROTOCOL Definitions***

The PROTOCOL definition is used to define the order of the FIELDs and GROUPs within the protocol header. The PROTOCOL definition has the following format:

**Name PROTOCOL**
**SUMMARIZE "Condition" : "FormatString" [**
**"Condition" : "FormatString"... ]**
**DESCRIPTION "Description"**
**REFERENCE "Reference"**
**::= { Name=FieldOrGroup [ ,**
**Name=FieldOrGroup... ] }**

Where only the PROTOCOL and ::= lines are required. All the other lines are attribute lines, which define special characteristics for the PROTOCOL. Attribute lines are optional and may appear in any order. Each attribute line is described in detail below:

### 2.3.1 SUMMARIZE "Condition" : "FormatString" [ "Condition" : "FormatString"...]

This attribute defines how a PROTOCOL will be displayed in Summary mode. A different format (FormatString) can be specified for each condition (Condition). Valid conditions are defined in the Conditions section below. Any FIELD's value can be referenced within the FormatString by proceeding the FIELD's name with a $. In addition to FIELD names there are several other special $ keywords:

| $LAYER | Displays the current protocol layer. |
|---|---|
| $VARBIND | Displays the entire SNMP VarBind list. |
| $field | Displays *the field* value (use enumerated name if available). |
| $:field | Displays *the field* value (in raw format). |
| $#field | Counts all occurrences of *field.* |
| $*field | Lists all occurrences of *field.* |

### 2.3.2 DESCRIPTION "Description"

This attribute defines the description of the PROTOCOL. It is used for informational purposes only.

### 2.3.3 REFERENCE "Reference"

This attribute defines the reference material used to determine the protocol format. It is used for informational purposes only.

### 2.3.4 ::= {Name=FieldOrGroup [, Name=FieldOrGroup... ]}

This defines the order of the FIELDs and GROUPs within the PROTOCOL.

### *2.4 FLOW Definitions*

The FLOW definition is used to define a network flow by describing where the address, protocol type, and port numbers are in a packet. The FLOW definition has the following format:

**Name FLOW**
**HEADER {Option [, Option...] }**
**DLC-LAYER { Option [ , Option...] }**
**NET-LAYER { Option [ , Option...] }**
**CONNECTION { Option [, Option...] }**
**PAYLOAD { Option [, Option...] }**
**CHILDREN { Option [ , Option...] }**
**STATE-BASED**
**STATES "Definitions"**

Where only the FLOW line is required. All the other lines are attribute lines, which define special characteristics for the FLOW. Attribute lines are optional and may appear in any order. However, at least one attribute line must be present. Each attribute line is described in detail below:

### 2.4.1 HEADER {Option [, Option...]}

This attribute is used to describe the length of the protocol header. The currently supported Options are:

| LENGTH=number | Header is a fixed length of size *number.* |
|---|---|
| LENGTH=field | Header is variable length determined by value of *field.* |
| IN-WORDS | The units of the header length are in 32-bit words rather than bytes. |

### 2.4.2 DLC-LAYER {Option [, Option...]}

If the protocol is a data link layer protocol, this attribute describes it. The currently supported Options are:

| | |
|---|---|
| DESTINATION=*field* | Indicates which *field* is the DLC destination address. |
| SOURCE=*field* | Indicates which *field* is the DLC source address. |
| PROTOCOL | Indicates this is a data link layer protocol. |
| TUNNELING | Indicates this is a tunneling protocol. |

### 2.4.3 NET-LAYER {Option [, Option...] }

If the protocol is a network layer protocol, then this attribute describes it. The currently supported Options are:

| | |
|---|---|
| DESTINATION=*field* | Indicates which *field* is the network destination address. |
| SOURCE=*field* | Indicates which *field* is the network source address. |
| TUNNELING | Indicates this is a tunneling protocol. |
| FRAGMENTATION=*type* | Indicates this protocol supports fragmentation. There are currently two fragmentation types: IPV4 and IPV6. |

### 2.4.4 CONNECTION { Option [, Option...] }

If the protocol is a connection-oriented protocol, then this attribute describes how connections are established and torn down. The currently supported Options are:

| | |
|---|---|
| IDENTIFIER=field | Indicates the connection identifier *field.* |
| CONNECT-START="*flag"* | Indicates when a connection is being initiated. |
| CONNECT-COMPLETE="*flag"* | Indicates when a connection has been established. |
| DISCONNECT-START=*"flag"* | Indicates when a connection is being torn down. |
| DISCONNECT-COMPLETE="*flag*" | Indicates when a connection has been torn down. |
| INHERITED | Indicates this is a connection-oriented protocol but the parent protocol is where the connection is established. |

### 2.4.5 PAYLOAD {Option [, Option...]}

This attribute describes how much of the payload from a packet of this type should be stored for later use during analysis. The currently supported Options are:

| | |
|---|---|
| INCLUDE-HEADER | Indicates that the protocol header should be included. |
| LENGTH=*number* | Indicates how many bytes of the payload should be stored. |
| DATA=*field* | Indicates which *field* contains the payload. |

### 2.4.6 CHILDREN {Option [, Option...]}

This attribute describes how children protocols are determined. The currently supported Options are:

| DESTINATION=*field* | Indicates which field is the destination port. |
|---|---|
| SOURCE=*field* | Indicates which *field* is the source port. |
| LLCCHECK=*flow* | Indicates that if the DESTINATION field is less than 0x05DC then use *flow* instead of the current flow definition. |

### 2.4.7 STATE-BASED

This attribute indicates that the flow is a state-based flow.

### 2.4.8 STATES "Definitions"

This attribute describes how children flows of this protocol are determined using states. See the State Definitions section below for how these states are defined.

### *2. 5 CONDITIONS*

Conditions are used with the OPTIONAL and SUMMARIZE attributes and may consist of the following:

| Value 1 == Value2 | Value 1 equals Value2. Works with string values. |
|---|---|
| Value 1 != Value2 | Value 1 does not equal Value2. Works with string values. |
| Value 1 <= Value2 | Value 1 is less than or equal to Value2. |
| Value 1 >= Value2 | Value 1 is greater than or equal to Value2. |
| Value 1 < Value2 | Value 1 is less than Value2. |
| Value 1 > Value2 | Value 1 is greater than Value2. |
| Field m/regex/ | Field matches the regular expression regex. |

Where *Value1* and *Value2* can be either FIELD references (field names preceded by a $) or constant values. Note that compound conditional statements (using AND and OR) are not currently supported.

### *2. 6 STATE DEFINITIONS*

Many applications running over data networks utilize complex methods of classifying traffic through the use of multiple states. State definitions are used for managing and maintaining learned states from traffic derived from the network.

The basic format of a state definition is:

**StateName: Operand Parameters [Operand Parameters...]**

The various states of a particular flow are described using the following operands:

### 2.6.1 CHECKCONNECT, *operand*

Checks for connection. Once connected executes *operand.*

### 2.6.2 GOTO *state*

Goes to *state,* using the <u>current</u> packet.

### 2.6.3 NEXT *state*

Goes to *state,* using the <u>next</u> packet.

### 2.6.4 DEFAULT *operand*

Executes *operand* when all other operands fail.

### 2.6.5 CHILD *protocol*

Jump to child *protocol* and perform state-based processing (if any) in the child.

### 2.6.6 WAIT *numPackets, operand1, operand2*

Waits the specified number of packets. Executes *operand1* when the specified number of packets have been received. Executes *operand2* when a packet is received but it is less than the number of specified packets.

### 2.6.7 MATCH *'string' weight offset LF-offset range LF-range, operand*

Searches for a *string* in the packet, executes *operand* if found.

### 2.6.8 CONSTANT *number offset range, operand*

Checks for a constant in a packet, executes *operand* if found.

### 2.6.9 EXTRACTIP *offset destination, operand*

Extracts an IP address from the packet and then executes *operand.*

### 2.6.10 EXTRACTPORT *offset destination, operand*

Extracts a port number from the packet and then executes *operand.*

### 2.6.11 CREATEREDIRECTEDFLOW, *operand*

Creates a redirected flow and then executes *operand.*

### 3. EXAMPLE PDL RULES

The following section contains several examples of PDL Rule files.

### *3.1 Ethernet*

The following is an example of the PDL for Ethernet:

```
MacAddress      FIELD
                SYNTAX       BYTESTRING(6)
                DISPLAY-HINT "1x:"
                LOOKUP       MACADDRESS
                DESCRIPTION
                    "MAC layer physical address"
etherType       FIELD
                SYNTAX       INT(16)
                DISPLAY-HINT "1x:"
                LOOKUP       FILE "EtherType.cf"
                DESCRIPTION
                    "Ethernet type field"
etherData       FIELD
                SYNTAX       BYTESTRING(46..1500)
                ENCAP              etherType
                DISPLAY-HINT "HexDump"
                DESCRIPTION
                    "Ethernet data"
```

```
ethernet     PROTOCOL
             DESCRIPTION
                 "Protocol format for an Ethernet frame"
             REFERENCE     "RFC 894"
::= { MacDest=macAddress, MacSrc=macAddress, EtherType=etherType,
      Data=etherData }
ethernet     FLOW
             HEADER { LENGTH=14 }
             DLC-LAYER {
                 SOURCE=MacSrc,
                 DESTINATION=MacDest,
                 TUNNELING,
                 PROTOCOL
             }
             CHILDREN {DESTINATION=EtherType, LLC-CHECK=11c}
```

### 3.2 IP Version 4

Here is an example of the PDL for the IP protocol:

```
ipAddress    FIELD
             SYNTAX      BYTESTRING(4)
             DISPLAY-HINT "1d."
             LOOKUP      HOSTNAME
             DESCRIPTION
                 "IP address"
ipVersion    FIELD
             SYNTAX      INT(4)
             DEFAULT     "4"
ipHeaderLength    FIELD
                  SYNTAX INT(4)
ipTypeOfService   FIELD
                  SYNTAX      BITSTRING(8) {minCost(1),
                            maxReliability(2), maxThruput(3), minDelay(4) }
ipLength     FIELD
             SYNTAX UNSIGNED INT(16)
ipFlags      FIELD
             SYNTAX      BITSTRING(3) {moreFrags(0), dontFrag(1)}
IpFragmentOffset    FIELD
                    SYNTAX INT(13)
ipProtocol   FIELD
             SYNTAX INT(8)
             LOOKUP FILE "IpProtocol.cf"
ipData FIELD
             SYNTAX BYTESTRING(0..1500)
             ENCAP ipProtocol
             DISPLAY-HINT "HexDump"
ip     PROTOCOL
       SUMMARIZE
       "$FragmentOffset != 0":
             "IPFragment ID=$Identification Offset=$FragmentOffset"
       "Default" :
             "IP Protocol=$Protocol"
       DESCRIPTION
           "Protocol format for the Internet Protocol"
       REFERENCE "RFC 791"
::= { Version=ipVersion, HeaderLength=ipHeaderLength,
      TypeOfService=ipTypeOfService, Length=ipLength,
      Identification=UInt16, IpFlags=ipFlags,
      FragmentOffset=ipFragmentOffset, TimeToLive=Int8,
      Protocol=ipProtocol, Checksum=ByteStr2,
      IpSrc=ipAddress, IpDest=ipAddress, Options=ipOptions,
```

```
          Fragment=ipFragment, Data=ipData }
    ip      FLOW
          HEADER { LENGTH=HeaderLength, IN-WORDS }
          NET-LAYER {
              SOURCE=IpSrc,
              DESTINATION=IpDest,
              FRAGMENTATION=IPV4,
              TUNNELING
          }

          CHILDREN { DESTINATION=Protocol }
    ipFragData    FIELD
                  SYNTAX        BYTESTRING(1..1500)
                  LENGTH        "ipLength - ipHeaderLength * 4"
                  DISPLAY-HINT "HexDump"
    ipFragment    GROUP
                  OPTIONAL      "$FragmentOffset != 0"
    ::= { Data=ipFragData }
    ipOptionCode  FIELD
                  SYNTAX INT(8) { ipRR(Ox07), ipTimestamp (0x44),
                                  ipLSRR(0x83), ipSSRR(0x89) }
                  DESCRIPTION
                      "IP option code"
    ipOptionLength    FIELD
                      SYNTAX UNSIGNED INT(8)
                      DESCRIPTION
                          "Length of IP option"
    ipOptionData  FIELD
                      SYNTAX        BYTESTRING(0..1500)
                      ENCAP             ipOptionCode
                      DISPLAY-HINT "HexDump"
    ipOptions     GROUP
                      LENGTH        "(ipHeaderLength * 4) – 20"
    ::= { Code=ipOptionCode, Length=ipOptionLength, Pointer=UInt8,
    Data=ipOptionData }
```

### 3.3 *TCP*

**Here is an example of the PDL for the TCP protocol:**

```
tcpPort FIELD
      SYNTAX UNSIGNED INT(16)
      LOOKUP FILE "TcpPort.cf"
tcpHeaderLen FIELD
      SYNTAX INT(4)
tcpFlags FIELD
      SYNTAX BITSTRING(12) {fin(0), syn(1), rst(2), psh(3),
                            ack(4), urg(5) }
tcpData FIELD
      SYNTAX BYTESTRING(0..1564)
      LENGTH "($ipLength-($ipHeaderLength*4))-($tcpHeaderLen*4)"
      ENCAP        tcpPort
      DISPLAY-HINT "HexDump"
tcp   PROTOCOL
      SUMMARIZE
          "Default" :
              "TCP ACK=$Ack WIN=$WindowSize"
      DESCRIPTION
          "Protocol format for the Transmission Control Protocol"
      REFERENCE     "RFC 793"
::= {SrcPort=tcpPort, DestPort=tcpPort, SequenceNum=UInt32,
      Ack=UInt32, HeaderLength=tcpHeaderLen, TcpFlags=tcpFlags,
```

```
        WindowSize=UInt16, Checksum=ByteStr2,
        UrgentPointer=UInt16, Options=tcpOptions, Data=tcpData }
tcp    FLOW
        HEADER {LENGTH=HeaderLength, IN-WORDS}
        CONNECTION {
            IDENTIFIER=SequenceNum,
            CONNECT-START="TcpFlags:1",
            CONNECT-COMPLETE="TcpFlags:4",
            DISCONNECT-START="TcpFlags:0",
            DISCONNECT-COMPLETE="TcpFlags:4"
        }
        PAYLOAD { INCLUDE-HEADER }
        CHILDREN { DESTINATION=DestPort, SOURCE=SrcPort }
tcpOptionKind FIELD
            SYNTAX UNSIGNED INT(8) { tcpOptEnd(0), tcpNop(1),
tcpMSS(2), tcpWscale(3), tcpTimestamp(4) }
            DESCRIPTION
                "Type of TCP option"
tcpOptionData FIELD
            SYNTAX      BYTESTRING(0..1500)
            ENCAP       tcpOptionKind
            FLAGS       SAMELAYER
            DISPLAY-HINT "HexDump"
tcpOptions   GROUP
            LENGTH      "($tcpHeaderLen * 4) - 20"
    ::= { Option=tcpOptionKind, OptionLength=UInt8,
        OptionData=tcpOptionData }
tcpMSS PROTOCOL
    ::= { MaxSegmentSize=UInt16 }
```

### 3.4 HTTP (with State)

**Here is an example of the PDL for the HTTP protocol:**

```
httpData FIELD
    SYNTAX BYTESTRING(1..1500)
    LENGTH "($ipLength - ($ipHeaderLength * 4)) - ($tcpHeaderLen * 4)"
    DISPLAY-HINT  "Text"
    FLAGS         NOLABEL
http    PROTOCOL
        SUMMARIZE
            "$httpData m/^GET|^HTTPl^HEAD|^POST/" :
                "HTTP $httpData"
            "$httpData m/^[Dd]atel^[Ss]erverl^[L1]ast-[Mm]odified/":
                "HTTP $httpData"
            "$httpData m/^[Cc]ontent-/" :
                "HTTP $httpData"
            "$httpData m/"<HTML>/":
                "HTTP [HTML document]"
            "$httpData m/^GIF/":
                "HTTP [GIF image]"
            "Default" :
                "HTTP [Data]"
        DESCRIPTION
            "Protocol format for HTTP."
    ::= { Data=httpData }
http FLOW
HEADER { LENGTH=0 }
CONNECTION { INHERITED }
PAYLOAD { INCLUDE-HEADER, DATA=Data, LENGTH=256 }
STATES
        "S0: CHECKCONNECT, GOTO S1
```

```
                        DEFAULT NEXT S0
            S1: WAIT 2, GOTO S2, NEXT S1
                    DEFAULT NEXT S0
            S2: MATCH
                    '\n\r\n'         900 0 0 255 0, NEXT S3
                    '\n\n'           900 0 0 255 0, NEXT S3
                    'POST /tds?'      50 0 0 127 1, CHILD sybaseWebsql
                    '.hts HTTP/1.0'   50 4 0 127 1, CHILD sybaseJdbc
                    'jdbc:sybase:Tds' 50 4 0 127 1, CHILD sybaseTds
                    'PCN-The Poin'   500 4 1 255 0, CHILD pointcast
                    't: BW-C-'       100 4 1 255 0, CHILD backweb
                      DEFAULT NEXT S3
            S3: MATCH
                    '\n\r\n'          50 0 0 0 0, NEXT S3
                    '\n\n'            50 0 0 0 0, NEXT S3
                    'Content-Type:'   800 0 0 255 0, CHILD mime
                    'PCN-The Poin'    500 4 1 255 0, CHILD pointcast
                    't: BW-C-'        100 4 1 255 0, CHILD backweb
                    DEFAULT NEXT S0"
sybaseWebsql    FLOW
                STATE-BASED
sybaseJdbc      FLOW
                STATE-BASED
sybaseTds       FLOW
                STATE-BASED


pointcast       FLOW
                STATE-BASED
backweb         FLOW
                STATE-BASED
mime            FLOW
                STATE-BASED
                STATES
                  "S0: MATCH
'application' 900 0 0 1 0, CHILD mimeApplication
'audio'       900 0 0 1 0, CHILD mimeAudio
'image'        50 0 0 1 0, CHILD mimeImage
'text'         50 0 0 1 0, CHILD mimeText
'video'        50 0 0 10, CHILD mimeVideo
'x-world'     500 4 1 255 0, CHILD mimeXworld
DEFAULT GOTO S0"
mimeApplication FLOW
                STATE-BASED
mimeAudio  FLOW
            STATE-BASED
            STATES
             "S0: MATCH
                    'basic'           100 0 0 1 0, CHILD pdBasicAudio
                    'midi'            100 0 0 1 0, CHILD pdMidi
                    'mpeg'            100 0 0 1 0, CHILD pdMpeg2Audio
                    'vnd.rn-realaudio' 100 0 0 1 0, CHILD pdRealAudio
                    'wav'             100 0 0 1 0, CHILD pdWav
                    'x-aiff'          100 0 0 1 0, CHILD pdAiff
                    'x-midi'          100 0 0 1 0, CHILD pdMidi
                    'x-mpeg'          100 0 0 1 0, CHILD pdMpeg2Audio
                    'x-mpgurl'        100 0 0 1 0, CHILD pdMpeg3Audio
                    'x-pn-realaudio'  100 0 0 1 0, CHILD pdRealAudio
                    'x-wav'           100 0 0 1 0, CHILD pdWav
                    DEFAULT GOTO S0"
mimeImage FLOW
          STATE-BASED
mimeText FLOW
          STATE-BASED
```

```
mimeVideo FLOW
          STATE-BASED
mimeXworld FLOW
          STATE-BASED
pdBasicAudio FLOW
          STATE-BASED
pdMidi FLOW
          STATE-BASED
pdMpeg2Audio FLOW
          STATE-BASED
pdMpeg3Audio FLOW
          STATE-BASED
pdRealAudio FLOW
          STATE-BASED
pdWav FLOW

          STATE-BASED
pdAiff FLOW
          STATE-BASED
```

### *Re-Using Information from Flows for Maintaining Metrics*

The flow-entry of each flow stores a set of statistical measures for the flow, including the total number of packets in the flow, the time of arrival, and the differential time from the last arrival.

Referring again to FIG. 3, the state processing process 328 performs operations defined for the state of the flow, for example for the particular protocol so far identified for the flow. In one embodiment of the invention, from time to time, a set of one or more metrics related t the flow may be determined using one or more of the statistical measures stored in the flow-entry. Such metric determining may be carried out, for example, by the state processor running instructions in the state processor instruction and pattern database 326. Such metrics may then be sent by the analyzer subsystem to a host computer connected to the monitor. Alternatively, such metric determining may be carried out by a processor connected to the flow-entry database 324. In our preferred hardware implementation shown in FIG. 10, an analyzer host interface and control 1118 may be configured to configured to access flow-entry records via cache system 1115 to output to a processor via the host bus interface. The processor may then do the reporting of the base metrics.

Fig. 15 describes how the monitor system can be set up with a host computer 1504. The monitor 300 sends metrics from time to time to the host computer 1504, and the host computer 1504 carries out part of the analysis.

This following section describes how the monitor of one embodiment of the invention can be used to monitor the Quality of Service (QOS) by providing QOS Metrics.

### *Quality of Service Traffic Statistics (Metrics)*

This next section defines the common structure that may be applied for the Quality of Service (QOS) Metrics according to one embodiment of the invention. It also defines the "original" (or "base") set of metrics that may be determined in an embodiment of the invention to support QOS. The base metrics are determined as part of state processing or by a processor connected to monitor 300, and the QOS metrics are determined from the base metrics by the host computer 1504. The main reason for the breakdown is that the complete QOS metrics may be computationally complex, involving square roots and other functions requiring more computational resources than may be available in real time. The base functions are chosen to be simple to calculate in real time and from which complete QOS metrics may be determined. Other breakdowns of functions clearly are possible within the scope of the invention.

Such metric determining may be carried out, for example, by the state processor running instructions in the state processor instruction and pattern database 326. Such base metrics may then be sent by the analyzer subsystem via a microprocessor or logic circuit connected to the monitor. Alternatively, such metric determining may be carried out by a microprocessor (or some other logic) connected to the flow-entry database 324. In our preferred hardware implementation shown in FIGS. 10 and 11, such a microprocessor is connected cache system 1115 via an analyzer host interface and control 1118 and host bus interface. These components may be configured to access flow-entry records via cache system 1115 to enable the microprocessor to determine and report the base metrics.

The QOS Metrics may broken into the following Metrics Groups. The names are descriptive. The list is not exhaustive, and other metrics may be used. The QOS metrics below include client-to-server (CS) and server-to-client (SC) metrics.

Traffic Metrics such as CSTraffic and SCTraffic.

Jitter Metrics such as CSTraffic and CS Traffic.

Exchange Response Metrics such as CSExchangeResponseTimeStartToStart, CSExchangeResponseTimeEndToStart, CSExchangeResponseTimeStartToEnd, SCExchangeResponseTimeStartToStart, SCExchangeResponseTimeEndToStart, and SCExchangeResponseTimeStartToEnd.

Transaction Response Metrics such as CSTransactionResponseTimeStartToStart, CSApplicationResponseTimeEndToStart, CSApplicationResponseTimeStartToEnd, SCTransactionResponseTimeStartToStart, SCApplicationResponseTimeEndToStart, and SCApplicationResponseTimeStartToEnd.

Connection Metrics such as ConnectionEstablishment and ConnectionGracefulTermination, and ConnectionTimeoutTermination.

Connection Sequence Metrics such as CSConnectionRetransmissions, SCConnectionRetransmissions, and CSConnectionOutOfOrders, SCConnectionOutOfOrders.

Connection Window Metrics, CSConnectionWindow, SCConnectionWindow, CSConnectionFrozenWindows, SCConnectionFrozenWindows, CSConnectionClosedWindows, and SCConnectionClosedWindows

**QOS Base Metrics**

The simplest means of representing a group of data is by frequency distributions in sub-ranges. In the preferred embodiment, there are some rules in creating the sub-ranges. First the range needs to be known. Second a sub-range size needs to be determined. Fixed sub-range sizes are preferred, alternate embodiments may use variable sub-range sizes.

Determining complete frequency distributions may be computationally expensive. Thus, the preferred embodiment uses metrics determined by summation functions on the individual data elements in a population.

The metrics reporting process provides data that can be used to calculate useful statistical measurements. In one embodiment, the metrics reporting process is part of the state processing that is carried out from time to time according to the state, and in another embodiment, the metrics reporting process carried out from time to time by a microprocessor having access to flow records. Preferably, the metrics reporting process provides base metrics and the final QOS metrics calculations are carried out by the host computer 1504. In addition to keeping the real time state processing simple, the partitioning of the tasks in this way provides metrics that are scalable. For example, the base metrics from two intervals may be combined to metrics for larger intervals.

Consider, for example is the arithmetic mean defined as the sum of the data divided by the number of data elements.

$$\overline{X} = \frac{\sum x}{N}$$

Two base metrics provided by the metrics reporting process are the sum of the x, and the number of elements N. The host computer 1504 performs the division to obtain the average. Furthermore, two sets base metrics for two intervals may be combined by adding the sum of the x's and by adding the number of elements to get a combined sum and number of elements. The average formula then works just the same.

The base metrics have been chosen to maximize the amount of data available while minimizing the amount of memory needed to store the metric and minimizing the processing requirement needed to generate the metric. The base metrics are provided in a metric data structure that contains five unsigned integer values.

- N count of the number of data points for the metric.

- $\Sigma X$ sum of all the data point values for the metric.

- $\Sigma (X^2)$ sum of all the data point values squared for the metric.

- $X_{max}$ maximum data point value for the metric.

- $X_{min}$ minimum data point value for the metric.

A metric is used to describe events over a time interval. The base metrics are determined from statistical measures maintained in flow-entries. It is not necessary to cache all the events and then count them at the end of the interval. The base metrics have also been designed to be easily scaleable in terms of combining adjacent intervals.

The following rules are applied when combining base metrics for contiguous time intervals.

- N EN

- ΣX Σ(Σ (X))

- Σ (X$^2$) Σ(Σ (X$^2$))

- X$_{max}$ MAX(X$_{max}$)

- X$_{min}$ MIN(X$_{min}$)

In addition to the above five values, a "trend" indicator is included in the preferred embodiment data structure. This is provided by an enumerated type. The reason for this is that the preferred method of generating trend information is by subtract an initial first value for the interval from the final value for the interval. Only the sign of the resulting number may have value, for example, to determine an indication of trend.

Typical operations that may be performed on the base metrics include:

- Number N.

- Frequency $\dfrac{N}{TimeInterval}$ .

- Maximum $X_{max}$.

- Minimum $X_{min}$,

- Range $R = X_{max} - X_{min}$.

- Arithmetic Mean $\overline{X} = \dfrac{\sum X}{N}$ .

- Root Mean Square $RMS = \sqrt{\dfrac{\sum(X^2)}{N}}$ .

- Variance $\sigma^2 = \dfrac{\sum(X - \overline{X})^2}{N} = \dfrac{\left(\sum X^2\right) - 2\overline{X}\left(\sum X\right) + N\left(\overline{X}^2\right)}{N}$ .

- Standard Deviation $\sigma = \sqrt{\dfrac{\sum\left((X - \overline{X})^2\right)}{N}} = \sqrt{\dfrac{\left(\sum(X^2)\right) - 2\overline{X}\left(\sum X\right) + N\left(\overline{X}^2\right)}{N}}$ .

- Trend information, which may be the trend between polled intervals and the trend within an interval. Trending between polled intervals is a management application function. Typically the management station would trend on the average of the reported interval. The trend within an interval is presented as an enumerated type and can easily be generated by subtracting the first value in the interval from the last and assigning trend based on the sign value.

**Alternate Embodiments**

One or more of the following different data elements may be included in various implementation of the metric.

- Sum of the deltas (i.e., differential values). The trend enumeration can be based on this easy calculation.

- Sum of the absolute values of the delta values. This would provide a measurement of the overall movement within an interval.

- Sum of positive delta values and sum of the negative delta values. Expanding each of these with an associated count and maximum would give nice information.

- The statistical measurement of skew can be obtained by adding $E(X^3)$ to the existing metric.

- The statistical measurement of kurtosis can be obtained by adding $\Sigma(X^3)$ and $\Sigma(X^4)$ to the existing metric.

- Data to calculate a slope of a least-squares line through the data..

Various metrics are now described in more detail.

**Traffic Metrics**

**CSTraffic**

*Definition*

This metric contains information about the volume of traffic measured for a given application and either a specific Client-Server Pair or a specific Server and all of its clients.
This information duplicates, somewhat, that which may be found in the standard, RMON II, AL/NL Matrix Tables. It has been included here for convenience to applications and the associated benefit of improved performance by avoiding the need to access different functional RMON areas when performing QOS Analysis.

**Metric Specification**

| Metric | Applicability | Units | Description |
|---|---|---|---|
| N | Applicable | Packets | Count of the # of Packets from the Client(s) to the Server |
| Σ | Applicable | Octets | Sum total of the # of Octets in these packets from the Client(s) to the Server. |
| Maximum | Not Applicable | | |
| Minimum | Not Applicable | | |

**SCTraffic**

*Definition*

This metric contains information about the volume of traffic measured for a given application and either a specific Client-Server Pair or a specific Server and all of its clients.
This information duplicates, somewhat, that which may be found in the standard, RMON II, AL/NL Matrix Tables. It has been included here for convenience to applications and the associated benefit of improved performance by avoiding the need to access different functional RMON areas when performing QOS Analysis.

*Metric Specification*

| Metric | Applicability | Units | Description |
|---|---|---|---|
| N | Applicable | Packets | Count of the # of Packets from the Server to the Client(s) |
| Σ | Applicable | Octets | Sum total of the # of Octets in these packets from the Server to the Client(s). |
| Maximum | Not Applicable | | |
| Minimum | Not Applicable | | |

**Jitter Metrics**

**CSJitter**

*Definition*

This metric contains information about the Jitter (e.g. Inter-packet Gap) measured for data packets for a given application and either a specific Client-Server Pair or a specific Server and all of its clients. Specifically, *CSJitter* measures the Jitter for Data Messages from the Client to the Server.

A Data Message starts with the 1st Transport Protocol Data Packet/Unit (TPDU) from the Client to the Server and is demarcated (or terminated) by 1st subsequent Data Packet in the other direction. Client to Server Inter-packet Gaps are measured between Data packets within the Message. Note that in our implementaions, ACKnowledgements are not considered within the measurement of this metric.

Also, there is no consideration in the measurement for retransmissions or out-of-order data packets. The interval between the last packet in a Data Message from the Client to the Server and the 1st packet of the Next Message in the same direction is not interpreted as an Inter-Packet Gap.

*Metric Specification*

| Metric | Applicability | Units | Description |
|---|---|---|---|
| N | Applicable | Inter-Packet Gaps | Count of the # of Inter-Packet Gaps measured for Data from the Client(s) to the Server |
| Σ | Applicable | uSeconds | Sum total of the Delta Times in these Inter-Packet Gaps |
| Maximum | Applicable | uSeconds | The maximum Delta Time of Inter-Packet Gaps measured |
| Minimum | Applicable | uSeconds | The minimum Delta Time of Inter-Packet Gaps measured. |

**SCJitter**

*Definition*

This metric contains information about the Jitter (e.g. Inter-packet Gap) measured for data packets for a given application and either a specific Client-Server Pair or a specific Server and all of its clients. Specifically, *SCJitter* measures the Jitter for Data Messages from the Client to the Server.

A Data Message starts with the 1st Transport Protocol Data Packet/Unit (TPDU) from the Server to the Client and is demarcated (or terminated) by 1st subsequent Data Packet in the other direction. Server to Client Inter-packet Gaps are measured between Data packets within the Message. Note that in our implementaions, ACKnowledgements are not considered within the measurement of this metric.

*Metric Specification*

| Metric | Applicability | Units | Description |
|---|---|---|---|
| N | Applicable | Inter-Packet Gaps | Count of the # of Inter-Packet Gaps measured for Data from the Server to the Client(s). |
| Σ | Applicable | uSeconds | Sum total of the Delta Times in these Inter-Packet Gaps. |
| Maximum | Applicable | uSeconds | The maximum Delta Time of Inter-Packet Gaps measured |
| Minimum | Applicable | uSeconds | The minimum Delta Time of Inter-Packet Gaps measured. |

**Exchange Response Metrics**

**CSExchangeResponseTimeStartToStart**

*Definition*

This metric contains information about the Transport-level response time measured for data packets for a given application and either a specific Client-Server Pair or a specific Server and all of its clients. Specifically, *CSExchangeResponseTimeStartToStart* measures the response time between start of Data Messages from the Client to the Server and the start of their subsequent response Data Messages from the Server to the Client.

A Client->Server Data Message starts with the 1st Transport Protocol Data Packet/Unit (TPDU) from the Client to the Server and is demarcated (or terminated) by 1st subsequent Data Packet in the other direction. The total time between the start of the Client->Server Data Message and the start of the Server->Client Data Message is measured with this metric. Note that ACKnowledgements are not considered within the measurement of this metric.

Also, there is no consideration in the measurement for retransmissions or out-of-order data packets.

*Metric Specification*

| Metric | Applicability | Units | Description |
|---|---|---|---|
| N | Applicable | Client-> Server Messages | Count of the # Client->Server Messages measured for Data Exchanges from the Client(s) to the Server |
| Σ | Applicable | uSeconds | Sum total of the Start-to-Start Delta Times in these Exchange Response Times |
| Maximum | Applicable | uSeconds | The maximum Start-to-Start Delta Time of these Exchange Response Times |
| Minimum | Applicable | uSeconds | The minimum Start-to-Start Delta Time of these Exchange Response Times |

**CSExchangeResponseTimeEndToStart**

*Definition*

This metric contains information about the Transport-level response time measured for data packets for a given application and either a specific Client-Server Pair or a specific Server and all of its clients. Specifically, *CSExchangeResponseTimeEndToStart* measures the response time between end of Data Messages from the Client to the Server and the start of their subsequent response Data Messages from the Server to the Client.

A Client->Server Data Message starts with the 1st Transport Protocol Data Packet/Unit (TPDU) from the Client to the Server and is demarcated (or terminated) by 1st subsequent Data Packet in the other direction. The total time between the end of the Client->Server Data Message and the start of the Server->Client Data Message is measured with this metric. Note that ACKnowledgements are not considered within the measurement of this metric.

Also, there is no consideration in the measurement for retransmissions or out-of-order data packets.

*Metric Specification*

| Metric | Applicability | Units | Description |
|--------|---------------|-------|-------------|
| N | Applicable | Client-> Server Messages | Count of the # Client->Server Messages measured for Data Exchanges from the Client(s) to the Server |
| Σ | Applicable | uSeconds | Sum total of the End-to-Start Delta Times in these Exchange Response Times |
| Maximum | Applicable | uSeconds | The maximum End-to-Start Delta Time of these Exchange Response Times |
| Minimum | Applicable | uSeconds | The minimum End-to-Start Delta Time of these Exchange Response Times |

**CSExchangeResponseTimeStartToEnd**

*Definition*

This metric contains information about the Transport-level response time measured for data packets for a given application and either a specific Client-Server Pair or a specific Server and all of its clients. Specifically, *CSExchangeResponseTimeEndToStart* measures the response time between Start of Data Messages from the Client to the Server and the End of their subsequent response Data Messages from the Server to the Client.

A Client->Server Data Message starts with the 1st Transport Protocol Data Packet/Unit (TPDU) from the Client to the Server and is demarcated (or terminated) by 1st subsequent Data Packet in the other direction. The end of the Response Message in the other direction (e.g. from the Server to the Client) is demarcated by the last data of the Message prior to the 1st data packet of the next Client to Server Message. The total time between the start of the Client->Server Data Message and the end of the Server->Client Data Message is measured with this metric. Note that ACKnowledgements are not considered within the measurement of this metric.

Also, there is no consideration in the measurement for retransmissions or out-of-order data packets.

*Metric Specification*

| Metric | Applicability | Units | Description |
|--------|---------------|-------|-------------|
| N | Applicable | Client-> Server Message Exchanges | Count of the # Client->Server and Server-> Client Exchange message pairs measured for Data Exchanges from the Client(s) to the Server |
| Σ | Applicable | uSeconds | Sum total of the Start-to-End Delta Times in these Exchange Response Times |
| Maximum | Applicable | uSeconds | The maximum Start-to-End Delta Time of these Exchange Response Times |
| Minimum | Applicable | uSeconds | The minimum Start-to-End Delta Time of these Exchange Response Times |

**SCExchangeResponseTimeStartToStart**

*Definition*

This metric contains information about the Transport-level response time measured for data packets for a given application and either a specific Client-Server Pair or a specific Server and all of its clients. Specifically, *SCExchangeResponseTimeStartToStart* measures the response time between start of Data Messages from the Server to the Client and the start of their subsequent response Data Messages from the Client to the Server.

A Server->Client Data Message starts with the 1st Transport Protocol Data Packet/Unit (TPDU) from the Server to the Client and is demarcated (or terminated) by 1st subsequent Data Packet in the other direction. The total time between the start of the Server->Client Data Message and the start of the Client->Sever Data Message is measured with this metric. Note that ACKnowledgements are not considered within the measurement of this metric.

Also, there is no consideration in the measurement for retransmissions or out-of-order data packets.

*Metric Specification*

| Metric | Applicability | Units | Description |
|---|---|---|---|
| N | Applicable | Server-> Client Messages | Count of the # Server->Client Messages measured for Data Exchanges from the Client(s) to the Server |
| Σ | Applicable | uSeconds | Sum total of the Start-to-Start Delta Times in these Exchange Response Times |
| Maximum | Applicable | uSeconds | The maximum Start-to-Start Delta Time of these Exchange Response Times |
| Minimum | Applicable | uSeconds | The minimum Start-to-Start Delta Time of these Exchange Response Times |

**SCExchangeResponseTimeEndToStart**

*Definition*

This metric contains information about the Transport-level response time measured for data packets for a given application and either a specific Client-Server Pair or a specific Server and all of its clients. Specifically, *SCExchangeResponseTimeEndToStart* measures the response time between **end** of Data Messages from the Server to the Client and the **start** of their subsequent response Data Messages from the Client to the Server.

A Server->Client Data Message starts with the 1st Transport Protocol Data Packet/Unit (TPDU) from the Server to the Client and is demarcated (or terminated) by 1st subsequent Data Packet in the other direction. The total time between the end of the Server->Client Data Message and the start of the Client->Server Data Message is measured with this metric. Note that ACKnowledgements are not considered within the measurement of this metric.

Also, there is no consideration in the measurement for retransmissions or out-of-order data packets.

*Metric Specification*

| Metric | Applicability | Units | Description |
|---|---|---|---|
| N | Applicable | Server-> Client Messages | Count of the # Server->Client Messages measured for Data Exchanges from the Client(s) to the Server |
| Σ | Applicable | uSeconds | Sum total of the End-to-Start Delta Times in these Exchange Response Times |
| Maximum | Applicable | uSeconds | The maximum End-to-Start Delta Time of these Exchange Response Times |
| Minimum | Applicable | uSeconds | The minimum End-to-Start Delta Time of these Exchange Response Times |

**SCExchangeResponseTimeStartToEnd**

*Definition*

This metric contains information about the Transport-level response time measured for data packets for a given application and either a specific Client-Server Pair or a specific Server and all of its clients. Specifically, *SCExchangeResponseTimeEndToStart* measures the response time between **Start** of Data Messages from the Server to the Client and the **End** of their subsequent response Data Messages from the Client to the Server.

A Server->Client Data Message starts with the 1st Transport Protocol Data Packet/Unit (TPDU) from the Server to the Client and is demarcated (or terminated) by 1st subsequent Data Packet in the other direction. The end of the Response Message in the other direction (e.g. from the Server to the Client) is demarcated by the last data of the Message prior to the 1st data packet of the **next** Server to Client Message. The total time between the start of the Server->Client Data Message and the end of the Client->Server Data Message is measured with this metric. Note that ACKnowledgements are not considered within the measurement of this metric.

Also, there is no consideration in the measurement for retransmissions or out-of order data packets.

*Metric Specification*

| Metric | Applicability | Units | Description |
|---|---|---|---|
| N | Applicable | Client-Server Message Exchanges | Count of the # Server->Client and Client-> Server Exchange message pairs measured for Data Exchanges from the Server to the Client(s) |
| Σ | Applicable | uSeconds | Sum total of the Start-to-End Delta Times in these Exchange Response Times |
| Maximum | Applicable | uSeconds | The maximum Start-to-End Delta Time of these Exchange Response Times |
| Minimum | Applicable | uSeconds | The minimum Start-to-End Delta Time of these Exchange Response Times |

**Transaction Response Metrics**

**CSTransactionResponseTimeStartToStart**

*Definition*

This metric contains information about the **Application-level response time** measured for application transactions for a given application and either a specific Client-Server Pair or a specific Server and all of its clients. Specifically, *CSTransactionResponseTimeStartToStart* measures the response time between **start** of an application transaction from the Client to the Server and the **start** of their subsequent transaction response from the Server to the Client.

A Client->Server transaction starts with the 1st Transport Protocol Data Packet/Unit (TPDU) of a transaction request from the Client to the Server and is demarcated (or terminated) by 1st subsequent data packet of the response to the transaction request. The total time between the start of the Client->Server transaction request and the start of the actual transaction response from the Server->Client is measured with this metric.

This metric is considered a "best-effort" measurement. Systems implementing this metric should make a "best-effort" to demarcate the start and end of requests and responses with the specific application's definition of a logical transaction. The lowest level of support for this metric would make this metric the equivalent of *CSExchangeResponseTimeStartToStart.*

*Metric Specification*

| Metric | Applicability | Units | Description |
|---|---|---|---|
| N | Applicable | Client->Svr Transaction Requests | Count of the # Client->Server Transaction Requests measured for Application requests from the Client(s) to the Server |
| Σ | Applicable | uSeconds | Sum total of the Start-to-Start Delta Times in these Application Response Times |
| Maximum | Applicable | uSeconds | The maximum Start-to-Start Delta Time of these Application Response Times |
| Minimum | Applicable | uSeconds | The minimum Start-to-Start Delta Time of these Application Response Times |

**CSApplicationResponseTimeEndToStart**

*Definition*

This metric contains information about the **Application-level response time** measured for application transactions for a given application and either a specific Client-Server Pair or a specific Server and all of its clients. Specifically, *CSApplicationResponseTimeEndToStart* measures the response time between **end** of an application transaction from the Client to the Server and the **start** of their subsequent transaction response from the Server to the Client.
A Client->Server transaction starts with the 1st Transport Protocol Data Packet/Unit (TPDU) of a transaction request from the Client to the Server and is demarcated (or terminated) by 1st subsequent data packet of the response to the transaction request The total time between the end of the Client->Server transaction request and the start of the actual transaction response from the Server->Client is measured with this metric
This metric is considered a "best-effort" measurement. Systems implementing this metric should make a "best-effort" to demarcate the start and end of requests and responses with the specific application's definition of a logical transaction. The lowest level of support for this metric would make this metric the equivalent of *CSExchangeResponseTimeEndToStart.*

*Metric Specification*

| Metric | Applicability | Units | Description |
|---|---|---|---|
| N | Applicable | Client->Svr Transaction Requests | Count of the # Client->Server Transaction Requests measured for Application requests from the Client(s) to the Server |
| Σ | Applicable | uSeconds | Sum total of the End-to-Start Delta Times in these Application Response Times |
| Maximum | Applicable | uSeconds | The maximum End-to-Start Delta Time of these Application Response Times |
| Minimum | Applicable | uSeconds | The minimum End-to-Start Delta Time of these Application Response Times |

**CSApplicationResponseTimeStartToEnd**

*Definition*

This metric contains information about the Application-level response time measured for application transactions for a given application and either a specific Client-Server Pair or a specific Server and all of its clients. Specifically, *CSTransactionResponseTimeStartToEnd* measures the response time between **Start** of an application transaction from the Client to the Server and the **End** of their subsequent transaction response from the Server to the Client.

A Client->Server transaction starts with the 1st Transport Protocol Data Packet/Unit (TPDU) a transaction request from the Client to the Server and is demarcated (or terminated) by 1st subsequent data packet of the response to the transaction request. The end of the Transaction Response in the other direction (e.g. from the Server to the Client) is demarcated by the last data of the transaction response prior to the 1st data of the **next** Client to Server Transaction Request. The total time between the start of the Client->Server transaction request and the end of the Server->Client transaction response is measured with this metric.

This metric is considered a "best-effort" measurement. Systems implementing this metric should make a "best-effort" to demarcate the start and end of requests and responses with the specific application's definition of a logical transaction. The lowest level of support for this metric would make this metric the equivalent of *CSExchangeResponseTimeStartToEnd.*

*Metric Specification*

| Metric | Applicability | Units | Description |
|---|---|---|---|
| N | Applicable | Client-> Server Transactions | Count of the # Client<->Server request/response pairs measured for transactions from the Client(s) to the Server |
| Σ | Applicable | uSeconds | Sum total of the Start-to-End Delta Times in these Application Response Times |
| Maximum | Applicable | uSeconds | The maximum Start-to-End Delta Time of these Application Response Times |
| Minimum | Applicable | uSeconds | The minimum Start-to-End Delta Time of these Application Response Times |

**SCTransactionResponseTimeStartToStart**

*Definition*

This metric contains information about the **Application-level response time** measured for application transactions for a given application and either a specific Client-Server Pair or a specific Server and all of its clients. Specifically, *SCTransactionResponseTimeStartToStart* measures the response time between **start** of an application transaction from the Server to the Client and the **start** of their subsequent transaction response from the Client to the Server.

A Server->Client transaction starts with the 1st Transport Protocol Data Packet/Unit (TPDU) of a transaction request from the Server to the Client and is demarcated (or terminated) by 1st subsequent data packet of the response to the transaction request. The total time between the start of the Server->Client transaction request and the start of the actual transaction response from the Client->Server is measured with this metric.

This metric is considered a "best-effort" measurement. Systems implementing this metric should make a "best-effort" to demarcate the start and end of requests and responses with the specific application's definition of a logical transaction. The lowest level of support for this metric would make this metric the equivalent of *SCExchangeResponseTimeStartToStart.*

*Metric Specification*

| Metric | Applicability | Units | Description |
|---|---|---|---|
| N | Applicable | Svr->Client Transaction Requests | Count of the # Server->Client Transaction Requests measured for Application requests from the Server to the Client(s) |
| Σ | Applicable | uSeconds | Sum total of the Start-to-Start Delta Times in these Application Response Times |

(continued)

| Metric | Applicability | Units | Description |
|---|---|---|---|
| Maximum | Applicable | uSeconds | The maximum Start-to-Start Delta Time of these Application Response Times |
| Minimum | Applicable | uSeconds | The minimum Start-to-Start Delta Time of these Application Response Times |

**SCApplicationResponseTimeEndToStart**

*Definition*

This metric contains information about the **Application-level response time** measured for application transactions for a given application and either a specific Client-Server Pair or a specific Server and all of its clients. Specifically, *SCApplicationResponseTimeEndToStart* measures the response time between **end** of an application transaction from the Server to the Client and the **start** of their subsequent transaction response from the Client to the Server.

A Server->Client transaction starts with the 1st Transport Protocol Data Packet/Unit (TPDU) of a transaction request from the Server to the Client and is demarcated (or terminated) by 1st subsequent data packet of the response to the transaction request The total time between the end of the Server->Client transaction request and the start of the actual transaction response from the Client->Server is measured with this metric

This metric is considered a "best-effort" measurement. Systems implementing this metric should make a "best-effort" to demarcate the start and end of requests and responses with the specific application's definition of a logical transaction. The lowest level of support for this metric would make this metric the equivalent of *SCExchangeResponseTimeEndToStart.*

*Metric Specification*

| Metric | Applicability | Units | Description |
|---|---|---|---|
| N | Applicable | Svr->Client Transaction Requests | Count of the # Server->Client Transaction Requests measured for Application requests from the Server to the Client(s) |
| Σ | Applicable | uSeconds | Sum total of the End-to-Start Delta Times in these Application Response Times |
| Maximum | Applicable | uSeconds | The maximum End-to-Start Delta Time of these Application Response Times |
| Minimum | Applicable | uSeconds | The minimum End-to-Start Delta Time of these Application Response Times |

**SCApplicationResponseTimeStartToEnd**

*Definition*

This metric contains information about the **Application-level response time** measured for application transactions for a given application and either a specific Client-Server Pair or a specific Server and all of its clients. Specifically, *SCTransactionResponseTimeStartToEnd* measures the response time between **Start** of an application transaction from the Server to the Client and the **End** of their subsequent transaction response from the Client to the Server.

A Server->Client transaction starts with the 1st Transport Protocol Data Packet/Unit (TPDU) a transaction request from the Server to the Client and is demarcated (or terminated) by 1st subsequent data packet of the response to the transaction request. The end of the Transaction Response in the other direction (e.g. from the Client to the Server) is demarcated by the last data of the transaction response prior to the 1st data of the next Server to Client Transaction Request. The total time between the start of the Server->Client transaction request and the end of the Client->Server transaction response is measured with this metric.

This metric is considered a "best-effort" measurement. Systems implementing this metric should make a "best-effort" to demarcate the start and end of requests and responses with the specific application's definition of a logical transaction. The lowest level of support for this metric would make this metric the equivalent of *SCExchangeResponseTimeStartToEnd.*

*Metric Specification*

| Metric | Applicability | Units | Description |
|---|---|---|---|
| N | Applicable | Server-> Client Transactions | Count of the # Server<->Client request/response pairs measured for transactions from the Server to the Client(s) |
| Σ | Applicable | uSeconds | Sum total of the Start-to-End Delta Times in these Application Response Times |
| Maximum | Applicable | uSeconds | The maximum Start-to-End Delta Time of these Application Response Times |
| Minimum | Applicable | uSeconds | The minimum Start-to-End Delta Time of these Application Response Times |

**Connection Metrics**

**ConnectionEstablishment**

*Definition*

This metric contains information about the transport-level connection establishment for a given application and either a specific Client-Server Pair or a specific Server and all of its clients. Specifically, *ConnectionsEstablishment* measures number of connections established the Client(s) to the Server. The information contain, in essence, includes:

• # Transport Connections Successfully established

• Set-up Times of the established connections

• Max. # of Simultaneous established connections.

• # Failed Connection establishment attempts (due to either timeout or rejection)

Note that the "# of CURRENT Established Transport Connections" may be derived from this metric along with the *ConnectionGracefulTermination* and *ConnectionTimeoutTermination* metrics, as follows:

# current connections :== "# successfully established"

- "# terminated gracefully"
- "# terminated by time-out"

The set-up time of a connection is defined to be the delta time between the first transport-level, Connection Establishment Request (i.e., SYN, CR-TPDU, etc.) and the first Data Packet exchanged on the connection.

*Metric Specification*

| Metric | Applicability | Units | Description |
|---|---|---|---|
| N | Applicable | Connections | Count of the # Connections Established from the Client(s) to the Server |
| E | Applicable | uSeconds | Sum total of the Connection Set-up Times in these Established connections |
| Maximum | Applicable | Connections | Count of the MAXIMUM simultaneous # Connections Established from the Client(s) to the Server |
| Minimum | Not Applicable | Connections | Count of the Failed simultaneous # Connections Established from the Client(s) to the Server |

**ConnectionGracefulTermination**

*Definition*

This metric contains information about the transport-level connections terminated gracefully for a given application and either a specific Client-Server Pair or a specific Server and all of its clients. Specifically, *ConnectionsGracefulTermination* measures gracefully terminated connections both in volume and summary connection duration. The information contain, in essence, includes:

- # Gracefully terminated Transport Connections

- Durations (lifetimes) of gracefully terminated connections.

*Metric Specification*

| Metric | Applicability | Units | Description |
|---|---|---|---|
| N | Applicable | Connections | Count of the # Connections Gracefully Terminated between Client (s) to the Server |
| Σ | Applicable | mSeconds | Sum total of the Connection Durations (Lifetimes) of these terminated connections |
| Maximum | Not Applicable | | |
| Minimum | Not Applicable | | |

**ConnectionTimeoutTermination**

*Definition*

This metric contains information about the transport-level connections terminated non-gracefully (e.g. Timed-Out) for a given application and either a specific Client-Server Pair or a specific Server and all of its clients. Specifically, *ConnectionsTimeoutTermination* measures previously established and timed-out connections both in volume and summary connection duration. The information contain, in essence, includes:

- # Timed-out Transport Connections

- Durations (lifetimes) of timed-out terminated connections.

The duration factor of this metric is considered a "best-effort" measurement. Independent network monitoring devices cannot really know when network entities actually detect connection timeout conditions and hence may need to extrapolate or estimate when connection timeouts actually occur.

*Metric Specification*

| Metric | Applicability | Units | Description |
|---|---|---|---|
| N | Applicable | Connections | Count of the # Connections Timed-out between Client(s) to the Server |
| Σ | Applicable | mSeconds | Sum total of the Connection Durations (Lifetimes) of these terminated connections |
| Maximum | Not Applicable | | |
| Minimum | Not Applicable | | |

**Connection Sequence Metrics**

**CSConnectionRetransmissions**

*Definition*

This metric contains information about the transport-level connection health for a given application and either a specific Client-Server Pair or a specific Server and all of its clients. Specifically, *CSConnectionRetransmissions* measures number of actual events within established connection lifetimes in which Transport, data-bearing PDUs (packets) from the Client->Server were retransmitted.
Note that retransmission events as seen by the Network Monitoring device indicate the "duplicate" presence of a TPDU as observed on the network.

*Metric Specification*

| Metric | Applicability | Units | Description |
|---|---|---|---|
| N | Applicable | Events | Count of the # Data TPDU retransmissions from the Client(s) to the Server |
| Σ | Not Applicable | | |
| Maximum | Not Applicable | | |
| Minimum | Not Applicable | | |

**SCConnectionRetransmissions**

*Definition*

This metric contains information about the transport-level connection health for a given application and either a specific Client-Server Pair or a specific Server and all of its clients. Specifically, SC*ConnectionRetransmissions* measures number of actual events within established connection lifetimes in which Transport, data-bearing PDUs (packets) from the Server->Client were retransmitted.
Note that retransmission events as seen by the Network Monitoring device indicate the "duplicate" presence of a TPDU as observed on the network.

*Metric Specification*

| Metric | Applicability | Units | Description |
|---|---|---|---|
| N | Applicable | Events | Count of the # Data TPDU retransmissions from the Server to the Client(s) |
| Σ | Not Applicable | | |
| Maximum | Not Applicable | | |
| Minimum | Not Applicable | | |

**CSConnectionOutOfOrders**

*Definition*

This metric contains information about the transport-level connection health for a given application and either a specific Client-Server Pair or a specific Server and all of its clients. Specifically, CS*ConnectionOutOfOrders* measures number of actual events within established connection lifetimes in which Transport, data-bearing PDUs (packets) from the Client->Server were detected as being out of sequential order.

Note that retransmissions (or duplicates) are considered to be different than out-of-order events and are tracked separately in the CS*ConnectionRetransmissions* metric.

*Metric Specification*

| Metric | Applicability | Units | Description |
|---|---|---|---|
| N | Applicable | Events | Count of the # Out-of-Order TPDU events from the Client(s) to the Server |
| Σ | Not Applicable | | |
| Maximum | Not Applicable | | |
| Minimum | Not Applicable | | |

**SCConnectionOutOfOrders**

*Definition*

This metric contains information about the transport-level connection health for a given application and either a specific Client-Server Pair or a specific Server and all of its clients. Specifically, SC*ConnectionOutOfOrders* measures number of actual events within established connection lifetimes in which Transport, data-bearing PDUs (packets) from the Server->Client were detected as being out of sequential order.

Note that retransmissions (or duplicates) are considered to be different than out-of-order events and are tracked separately in the SC*ConnectionRetransmissions* metric.

*Metric Specification*

| Metric | Applicability | Units | Description |
|---|---|---|---|
| N | Applicable | Events | Count of the # Out-of-Order TPDU events from the Server to the Client(s) |
| Σ | Not Applicable | | |
| Maximum | Not Applicable | | |
| Minimum | Not Applicable | | |

**Connection Window Metrics**

**CSConnectionWindow**

*Definition*

This metric contains information about the transport-level connection windows for a given application and either a specific Client-Server Pair or a specific Server and all of its clients. Specifically, CS*ConnectionWindow* measures number of Transport-level Acknowledges within established connection lifetimes and their relative sizes from the Client->Server.

Note that the number of DATA TPDUs (packets) may be estimated by differencing the Acknowledge count of this metric and the overall traffic from the Client to the Server (see *CSTraffic* above). A slight error in this calculation may occur due to Connection Establishment and Termination TPDUS, but it should not be significant.

*Metric Specification*

| Metric | Applicability | Units | Description |
|---|---|---|---|
| N | Applicable | Events | Count of the # ACK TPDU retransmissions from the Client(s) to the Server |
| Σ | Not Applicable | Increments | Sum total of the Window Sizes of the Acknowledges |
| Maximum | Not Applicable | Increments | The maximum Window Size of these Acknowledges |
| Minimum | Not Applicable | Increments | The minimum Window Size of these Acknowledges |

**SCConnectionWindow**

*Definition*

This metric contains information about the transport-level connection windows for a given application and either a specific Client-Server Pair or a specific Server and all of its clients. Specifically, SS*ConnectionWindow* measures number of Transport-level Acknowledges within established connection lifetimes and their relative sizes from the Server->Client.

Note that the number of DATA TPDUs (packets) may be estimated by differencing the Acknowledge count of this metric and the overall traffic from the Client to the Server (see *SCTraffic* above).. A slight error in this calculation may occur due to Connection Establishment and Termination TPDUS, but it should not be significant.

*Metric Specification*

| Metric | Applicability | Units | Description |
|---|---|---|---|
| N | Applicable | Events | Count of the # ACK TPDU retransmissions from the Server to the Client(s) |
| Σ | Applicable | Increments | Sum total of the Window Sizes of the Acknowledges |
| Maximum | Applicable | Increments | The maximum Window Size of these Acknowledges |
| Minimum | Applicable | Increments | The minimum Window Size of these Acknowledges |

**CSConnectionFrozenWindows**

*Definition*

This metric contains information about the transport-level connection windows for a given application and either a specific Client-Server Pair or a specific Server and all of its clients. Specifically, CS*ConnectionWindow* measures number of Transport-level Acknowledges from Client->Server within established connection lifetimes which validly acknowledge data, but either

- failed to increase the upper window edge,

- reduced the upper window edge

*Metric Specification*

| Metric | Applicability | Units | Description |
|---|---|---|---|
| N | Applicable | Events | Count of the # ACK TPDU with frozen/reduced windows from the Client (s) to the Server |
| Σ | Not Applicable | | |
| Maximum | Not Applicable | | |
| Minimum | Not Applicable | | |

**SCConnectionFrozenWindows**

*Definition*

This metric contains information about the transport-level connection windows for a given application and either a specific Client-Server Pair or a specific Server and all of its clients. Specifically, SC*ConnectionWindow* measures number of Transport-level Acknowledges from Server->Client within established connection lifetimes which validly acknowledge data, but either

- failed to increase the upper window edge,

- reduced the upper window edge

*Metric Specification*

| Metric | Applicability | Units | Description |
|---|---|---|---|
| N | Applicable | Events | Count of the # ACK TPDU with frozen/reduced windows from the Client (s) to the Server |
| Σ | Not Applicable | | |
| Maximum | Not Applicable | | |
| Minimum | Not Applicable | | |

**CSConnectionClosedWindows**

*Definition*

This metric contains information about the transport-level connection windows for a given application and either a specific Client-Server Pair or a specific Server and all of its clients. Specifically, CS*ConnectionWindow* measures number of Transport-level Acknowledges from Client->Server within established connection lifetimes which fully closed the acknowledge/sequence window.

*Metric Specification*

| Metric | Applicability | Units | Description |
|--------|---------------|-------|-------------|
| N | Applicable | Events | Count of the # ACK TPDU with Closed windows from the Client(s) to the Server |
| Σ | Not Applicable | | |
| Maximum | Not Applicable | | |
| Minimum | Not Applicable | | |

**SCConnectionClosedWindows**

*Definition*

This metric contains information about the transport-level connection windows for a given application and either a specific Client-Server Pair or a specific Server and all of its clients. Specifically, SC*ConnectionWindow* measures number of Transport-level Acknowledges from Server->Client within established connection lifetimes which fully closed the acknowledge/sequence window.

*Metric Specification*

| Metric | Applicability | Units | Description |
|--------|---------------|-------|-------------|
| N | Applicable | Events | Count of the # ACK TPDU with Closed windows from the Client(s) to the Server |
| Σ | Not Applicable | | |
| Maximum | Not Applicable | | |
| Minimum | Not Applicable | | |

Embodiments of the present invention automatically generate flow signatures with the necessary recognition patterns and state transition climb procedure. Such comes from analyzing packets according to parsing rules, and also generating state transitions to search for. Applications and protocols, at any level, are recognized through state analysis of sequences of packets.

Note that one in the art will understand that computer networks are used to connect many different types of devices, including network appliances such as telephones, "Internet" radios, pagers, and so forth. The term computer as used herein encompasses all such devices and a computer network as used herein includes networks of such computers.

One aspect of the invention provides a packet monitor for examining packets passing through a connection point on a computer network in real-time, the packets provided to the packet monitor via a packet acquisition device connected to the connection point, the packet monitor comprising:

(a) a packet-buffer memory configured to accept a packet from the packet acquisition device;

(b) a parsing/extraction operations memory configured to store a database of parsing/extraction operations that includes information describing how to determine at least one of the protocols used in a packet from data in the packet;

(c) a parser subsystem coupled to the packet buffer and to the pattern/extraction operations memory, the parser subsystem configured to examine the packet accepted by the buffer, extract selected portions of the accepted packet, and form a function of the selected portions sufficient to identify that the accepted packet is part of a conversational flow-sequence;

(d) a memory storing a flow-entry database including a plurality of flow-entries for conversational flows encountered by the monitor;

(e) a lookup engine connected to the parser subsystem and to the flow-entry database, and configured to determine using at least some of the selected portions of the accepted packet if there is an entry in the flow-entry database for the conversational flow sequence of the accepted packet;

(f) a state patterns/operations memory configured to store a set of predefined state transition patterns and state operations such that traversing a particular transition pattern as a result of a particular conversational flow-sequence of packets indicates that the particular conversational flow-sequence is associated with the operation of a particular application program, visiting each state in a traversal including carrying out none or more predefined state operations;

(g) a protocol/state identification mechanism coupled to the state patterns/operations memory and to the lookup engine, the protocol/state identification engine configured to determine the protocol and state of the conversational flow of the packet; and

(h) a state processor coupled to the flow-entry database, the protocol/state identification engine, and to the state patterns/operations memory, the state processor, configured to carry out any state operations specified in the state patterns/operations memory for the protocol and state of the flow of the packet,

the carrying out of the state operations furthering the process of identifying which application program is associated with the conversational flow-sequence of the packet, the state processor progressing through a series of states and state operations until there are no more state operations to perform for the accepted packet, in which case the state processor updates the flow-entry, or until a final state is reached that indicates that no more analysis of the flow is required, in which case the result of the analysis is announced.

The flow-entry can include the state of the flow, such that the protocol/state identification mechanism determines the state of the packet from the flow-entry in the case that the lookup engine finds a flow-entry for the flow of the accepted packet.

The parser subsystem can include a mechanism for building a hash from the selected portions, and the hash can be used by the lookup engine to search the flow-entry database, the hash designed to spread the flow-entries across the flow-entry database.

The packet monitor can further comprise:

a compiler processor coupled to the parsing/extraction operations memory, the compiler processor configured to run a compilation process that includes:

receiving commands in a high-level protocol description language that describe the protocols that may be used in packets encountered by the monitor, and

translating the protocol description language commands into a plurality of parsing/extraction operations that are initialized into the parsing/extraction operations memory.

The protocol description language commands can also describe a correspondence between a set of one or more application programs and the state transition patterns/operations that occur as a result of particular conversational flow-sequences associated with an application program, the compiler processor can also be coupled to the state patterns/operations memory, and the compilation process can further include translating the protocol description language commands into a plurality of state patterns and state operations that are initialized into the state patterns/operations memory.

The packet monitor can further comprise:

a cache memory coupled to and between the lookup engine and the flow-entry database providing for fast access of a set of likely-to-be-accessed flow-entries from the flow-entry database.

The cache can function as a fully associative, least-recently-used cache memory.

The cache can function as a fully associative, least-recently-used cache memory and includes content addressable memories configured as a stack.

One or more statistical measures about a flow can be stored in each flow-entry, and the packet monitor can further comprise a calculator for updating the statistical measures in a flow-entry of the accepted packet.

When the application program of a flow is determined, one or more network usage metrics related to said application and determined from the statistical measures can be presented to a user for network performance monitoring.

Another aspect of the present invention provides a method of examining packets passing through a connection point on a computer network, each packets conforming to one or more protocols, the method comprising:

(a) receiving a packet from a packet acquisition device;

(b) performing one or more parsing/extraction operations on the packet to create a parser record comprising a function of selected portions of the packet;

(c) looking up a flow-entry database comprising none or more flow-entries for previously encountered conversational flows, the looking up using at least some of the selected packet portions and determining if the packet is of an existing flow;

(d) if the packet is of an existing flow, classifying the packet as belonging to the found existing flow; and

(e) if the packet is of a new flow, storing a new flow-entry for the new flow in the flow-entry database, including identifying information for future packets to be identified with the new flow-entry,

wherein the parsing/extraction operations depend on one or more of the protocols to which the packet conforms.

Each packet passing through the connection point can be examined in real time.

Classifying the packet as belonging to the found existing flow can include updating the flow-entry of the existing flow.

Updating can include storing one or more statistical measures stored in the flow-entry of the existing flow.

The one or more statistical measures can include measures selected from the set consisting of the total packet count for the flow, the time, and a differential time from the last entered time to the present time.

The function of the selected portions of the packet can form a signature that includes the selected packet portions and that can identify future packers, the lookup operation can use the signature and the identifying information stored in the new or updated flow-entry can be a signature for identifying future packets.

At least one of the protocols of the packet can use source and destination addresses, and the selected portions of the packet can include the source and destination addresses.

The function of the selected portions for packets of the same flow can be consistent independent of the direction of the packets.

The source and destination addresses can be placed in an order determined by the order of numerical values of the addresses in the function of selected portions.

The numerically lower address can be placed before the numerically higher address in the function of selected portions.

The looking up of the flow-entry database can use a hash of the selected packet portions.

The parsing/extraction operations can be according to a database of parsing/extraction operations that includes information describing how to determine a set of one or more protocol dependent extraction operations from data in the packet that indicate a protocol used in the packet.

Step (d) can include if the packet is of an existing flow, obtaining the last encountered state of the flow and performing any state operations specified for the state of the flow starting from the last encountered state of the flow; and step (e) can include if the packet is of a new flow, performing any state operations required for the initial state of the new flow.

The state processing of each received packet of a flow can further the identifying of the application program of the flow.

The state operations can include updating the flow-entry, including storing identifying information for future packets to be identified with the flow-entry.

The state processing of each received packet of a flow can further the identifying of the application program of the flow.

The state operations can include searching the parser record for the existence of one or more reference strings.

The state operations can be carried out by a programmable state processor according to a database of protocol dependent state operations.

Another aspect of the present invention provides a packet monitor for examining packets passing through a connection point on a computer network, each packets conforming to one or more protocols, the monitor comprising:

(a) a packet acquisition device coupled to the connection point and configured to receive packets passing through the connection point;

(b) an input buffer memory coupled to and configured to accept a packet from the packet acquisition device;

(c) a parser subsystem coupled to the input buffer memory and including a slicer, the parsing subsystem configured to extract selected portions of the accepted packet and to output a parser record containing the selected portions;

(d) a memory for storing a database comprising none or more flow-entries for previously encountered conversational flows, each flow-entry identified by identifying information stored in the flow-entry;

(e) a lookup engine coupled to the output of the parser subsystem and to the flow-entry memory and configured to lookup whether the particular packet whose parser record is output by the parser subsystem has a matching flow-entry, the looking up using at least some of the selected packet portions and determining if the packet is of an existing flow; and

(f) a flow insertion engine coupled to the flow-entry memory and to the lookup engine and configured to create a flow-entry in the flow-entry database, the flow-entry including identifying information for future packets to be identified with the new flow-entry,

the lookup engine configured such that if the packet is of an existing flow, the monitor classifies the packet as belonging to the found existing flow; and if the packet is of a new flow, the flow insertion engine stores a new flow-entry for the new flow in the flow-entry database, including identifying information for future packets to be identified with the new flow-entry,

wherein the operation of the parser subsystem depends on one or more of the protocols to which the packet conforms.

Each packet passing through the connection point can be accepted by the packet buffer memory and examined by the monitor in real time.

The lookup engine can update the flow-entry of an existing flow in the case that the lookup is successful.

The monitor can include a mechanism for building a hash from the selected portions, wherein the hash is included in the input for a particular packet to the lookup engine, and wherein the hash is used by the lookup engine to search the flow-entry database.

The monitor can include a memory containing a database of parsing/extraction operations, the parsing/extraction database memory coupled to the parser subsystem, wherein the parsing/extraction operations are according to one or more parsing/extraction operations looked up from the parsing/extraction database.

The database of parsing/extraction operations can include information describing how to determine a set of one or more protocol dependent extraction operations from data in the packet that indicate a protocol used in the packet.

The monitor can include a flow-key-buffer (UFKB) coupled to the output of the parser subsystem and to the lookup engine and to the flow insertion engine, wherein the output of the parser monitor is coupled to the lookup engine via the UFKB, and wherein the flow insertion engine is coupled to the lookup engine via the UFKB.

The monitor can include a state processor coupled to the lookup engine and to the flow-entry-database memory, and configured to perform any state operations specified for the state of the flow starting from the last encountered state of the flow in the case that the packet is from an existing flow, and to perform any state operations required for the initial state of the new flow in the case that the packet is from an existing flow.

The set of possible state operations that the state processor is configured to perform can include searching for one or more patterns in the packet portions.

The state processor can be programmable, the monitor can further include a state patterns/operations memory coupled to the state processor, the state operations memory configured to store a database of protocol dependent state patterns/operations.

The monitor can include a state processor coupled to the UFKB and to the flow-entry-database memory, and configured to perform any state operations specified for the state of the flow starting from the last encountered state of the flow in the case that the packet is from an existing flow, and to perform any state operations required for the initial state of the new flow in the case that the packet is from an existing flow.

The state operations can include updating the flow-entry, including identifying information for future packets to be identified with the flow-entry.

The monitor can include:

a compiler processor coupled to the parsing/extraction operations memory, the compiler processor configured to run a compilation process that includes:

receiving commands in a high-level protocol description language that describe the protocols that may be used in packets encountered by the monitor and any children protocols thereof, and

translating the protocol description language commands into a plurality of parsing/extraction operations that are initialized into the parsing/extraction operations memory.

The monitor can include:

a compiler processor coupled to the parsing/extraction operations memory, the compiler processor configured to run a compilation process that includes:

receiving commands in a high-level protocol description language that describe a correspondence between a set of one or more application programs and the state transition patterns/operations that occur as a result of particular conversational flow-sequences associated with an application programs, and

translating the protocol description language commands into a plurality of state patterns and state operations that are initialized into the state patterns/operations memory.

The monitor can include:

a cache subsystem coupled to and between the lookup engine and the flow-entry database memory providing for fast access of a set of likely-to-be-accessed flow-entries from the flow-entry database.

The cache subsystem can be an associative cache subsystem including one or more content addressable memory cells (CAMs).

The cache subsystem can be also a least-recently-used cache memory such that a cache miss updates the least recently used cache entry.

Each flow-entry can store one or more statistical measures about the flow, the monitor can further comprise

a calculator for updating at least one of the statistical measures in the flow-entry of the accepted packet.

The one or more statistical measures can include measures selected from the set consisting of the total packet count for the flow, the time, and a differential time from the last entered time to the present time.

The monitor can include a statistical processor configured to determine one or more network usage metrics related to the flow from one or more of the statistical measures in a flow-entry.

The flow-entry-database can be organized into a plurality of bins that each contain N-number of flow-entries, and said bins can be accessed via a hash data value created by a parser subsystem based on the selected packet portions, wherein N is one or more.

The hash data value can be used to spread a plurality of flow-entries across the flow-entry-database and allows fast lookup of a flow-entry and shallower buckets.

The state processor can analyze both new and existing flows in order to classify them by application and proceeds from state-to-state based on a set of predefined rules.

The lookup engine can begin processing as soon as a parser record arrives from the parser subsystem.

The lookup engine can provide for flow state entry checking to see if a flow key should be sent to the state processor, and that outputs a protocol identifier for the flow.

Another aspect of the present invention provides a method of examining packets passing through a connection point on a computer network, the method comprising:

(a) receiving a packet from a packet acquisition device;

(b) performing one or more parsing/extraction operations on the packet according to a database of parsing/extraction operations to create a parser record comprising a function of selected portions of the packet, the database of parsing/ extraction operations including information on how to determine a set of one or more protocol dependent extraction operations from data in the packet that indicate a protocol is used in the packet;

(c) looking up a flow-entry database comprising none or more flow-entries for previously encountered conversational flows, the looking up using at least some of the selected packet portions, and determining if the packet is of an existing flow;

(d) if the packet is of an existing flow, obtaining the last encountered state of the flow and performing any state operations specified for the state of the flow starting from the last encountered state of the flow; and

(e) if the packet is of a new flow, performing any analysis required for the initial state of the new flow and storing a new flow-entry for the new flow in the flow-entry database, including identifying information for future packets to be identified with the new flow-entry.

One of the state operations specified for at least one of the states can include updating the flow-entry, including identifying information for future packets to be identified with the flow-entry.

One of the state operations specified for at least one of the states can include searching the contents of the packet for at least one reference string.

One of the state operations specified for at least one of the states can include creating a new flow-entry for future packets to be identified with the flow, the new flow-entry including identifying information for future packets to be identified with the flow-entry.

The method can include forming a signature from the selected packet portions, wherein the lookup operation uses the signature and wherein the identifying information stored in the new or updated flow-entry is a signature for identifying future packets.

The state operations can be according to a database of protocol dependent state operations.

Another aspect of the present invention provides a method of performing protocol specific operations on a packet passing through a connection point on a computer network, the method comprising:

(a) receiving the packet;

(b) receiving a set of protocol descriptions for a plurality of protocols that conform to a layered model, a protocol description for a particular protocol at a particular layer level including:

(i) the none or more child protocols of the particular protocol, the packet including for any particular child protocol of the particular protocol information at one or more locations in the packet related to the particular child protocol,

(ii) the one or more locations in the packet where information is stored related to any child protocol of the particular protocol, and

(iii) the none or more protocol specific operations to be performed on the packet for the particular protocol at the particular layer level; and

(c) performing the protocol specific operations on the packet specified by the set of protocol descriptions based on the base protocol of the packet and the children of the protocols used in the packet.

Step (c) of performing protocol specific operations can be performed recursively for any children of the children.

Which protocol specific operations are performed in step (c) can depend on the contents of the packet such that the method adapts to different protocols according to the contents of the packet.

The method can include:

storing a database in a memory, the database generated from the set of protocol descriptions and including a data structure containing information on the possible protocols and organized for locating the child protocol related information for any protocol, the data structure contents indexed by a set of one or more indices, the database entry indexed by a particular set of index values including an indication of validity,

wherein the child protocol related information includes a child recognition pattern,
wherein step (c) of performing the protocol specific operations includes, at any particular protocol layer level starting from the base level, searching the packet at the particular protocol for the child field, the searching including indexing the data structure until a valid entry is found, and

whereby the data structure is configured for rapid searches using the index set.

The protocol descriptions can be provided in a protocol description language, and the method can include compiling the PDL descriptions to produce the database.

The data structure can comprise a set of arrays, each array identified by a first index, at least one array for each protocol, each array further indexed by a second index being the location in the packet where the child protocol related information is stored, such that finding a valid entry in the data structure provides the location in the packet for finding the child recognition pattern for an identified protocol.

Each array can be further indexed by a third index being the size of the region in the packet where the child protocol related information is stored, such that finding a valid entry in the data structure provides the location and the size of the region in the packet for finding the child recognition pattern.

The data structure can be compressed according to a compression scheme that takes advantage of the sparseness of valid entries in the data structure.

The compression scheme can combine two or more arrays that have no conflicting common entries.

The data structure can include a set of tables, each table identified by a first index, at least one table for each protocol, each table further indexed by a second index being the child recognition pattern, the data structure further including a table that for each protocol provides the location in the packet where the child protocol related information is stored, such that finding a valid entry in the data structure provides the location in the packet for finding the child recognition pattern for an identified protocol.

The data structure can be compressed according to a compression scheme that takes advantage of the sparseness of valid entries in the set of tables.

The compression scheme can combine two or more tables that have no conflicting common entries.

The protocol specific operations can include one or more parsing and extraction operations on the packet to extract selected portions of the packet to form a function of the selected portions for identifying the packet as belonging to a conversational flow.

The protocol descriptions can be provided in a protocol description language.

The method can include:

compiling the PDL descriptions to produce a database and store the database in a memory, the database generated from the set of protocol descriptions and including a data structure containing information on the possible protocols and organized for locating the child protocol related information for any protocol, the data structure contents indexed by a set of one or more indices, the database entry indexed by a particular set of index values including an indication of validity,

wherein the child protocol related information includes a child recognition pattern, and

wherein the step of performing the protocol specific operations includes, at any particular protocol layer level starting from the base level, searching the packet at the particular protocol for the child field, the searching including indexing the data structure until a valid entry is found,

whereby the data structure is configured for rapid searches using the index set.

The method can include:

looking up a flow-entry database comprising none or more flow-entries, at least one flow-entry for each previously encountered conversational flow, the looking up using at least some of the selected packet portions and determining if the packet matches an existing flow-entry;

if the packet is of an existing flow, classifying the packet as belonging to the found existing flow; and

if the packet is of a new flow, storing a new flow-entry for the new flow in the flow-entry database, including identifying information for future packets to be identified with the new flow-entry,

wherein the parsing and extraction operations depend on the contents of none or more packet headers.

The protocol specific operations can further include one or more state processing operations that are a function of the state of the flow of the packet.

The protocol specific operations can include one or more state processing operations that are a function of the state of the flow of the packet.

Another aspect of the present invention provides a method of analyzing a flow of packets passing through a connection point on a computer network, the method comprising:

(a) receiving a packet from a packet acquisition device;

(b) looking up a flow-entry database comprising none or more flow-entries for previously encountered conversational flows, the looking up to determine if the received packet is of an existing flow;

(d) if the packet is of an existing flow, updating the flow-entry of the existing flow including storing one or more statistical measures kept in the flow-entry; and

(e) if the packet is of a new flow, storing a new flow-entry for the new flow in the flow-entry database, including storing one or more statistical measures kept in the flow-entry,

wherein every packet passing though the connection point is received by the packet acquisition device.

The method can include:

extracting identifying portions from the packet,

wherein the looking up uses a function of the identifying portions.

The steps can be carried out in real time on each packet passing through the connection point.

The one or more statistical measures can include measures selected from the set consisting of the total packet count for the flow, the time, and a differential time from the last entered time to the present time.

The method can include reporting one or more metrics related to the flow of a flow-entry from one or more of the statistical measures in the flow-entry.

The metrics can include one or more quality of service (QOS) metrics.

The reporting can be carried out from time to time, and wherein the one or more metrics are base metrics related to the time interval from the last reporting time.

The method can include calculating one or more quality of service (QOS) metrics from the base metrics.

The one or more metrics can be selected to be scalable such that metrics from contiguous time intervals may be combined to determine respective metrics for the combined interval.

Step (d) can include if the packet is of an existing flow, identifying the last encountered state of the flow and performing any state operations specified for the state of the flow starting from the last encountered state of the flow; and step (e) can include if the packet is of a new flow, performing any state operations required for the initial state of the new flow.

The method can include reporting one or more metrics related to the flow of a flow-entry from one or more of the statistical measures in the flow-entry.

The reporting can be carried out from time to time, and wherein the one or more metrics are base metrics related to the time interval from the last reporting time.

The reporting can be part of the state operations for the state of the flow.

The state operations can include updating the flow-entry, including storing identifying information for future packets to be identified with the flow-entry.

The method can include receiving further packets, wherein the state processing of each received packet of a flow can further the identifying of the application program of the flow.

One or more metrics related to the state of the flow can be determined as part of the state operations specified for the state of the flow.

Another aspect of the present invention provides a packet monitor for examining packets passing through a connection point on a computer network, each packets conforming to one or more protocols, the monitor comprising:

(a) a packet acquisition device coupled to the connection point and configured to receive packets passing through the connection point;

(b) a memory for storing a database comprising none or more flow-entries for previously encountered conversational flows to which a received packet may belong; and

(c) an analyzer subsystem coupled to the packet acquisition device configured to lookup whether a received packet belongs to a flow-entry in the flow-entry database, to update the flow-entry of the existing flow including storing one or more statistical measures kept in the flow-entry in the case that the packet is of an existing flow, and to store a new flow-entry for the new flow in the flow-entry database, including storing one or more statistical measures kept in the flow-entry if the packet is of a new flow.

The monitor can include:

a parser subsystem coupled to the packet acquisition device and to the analyzer subsystem configured to extract identifying information from a received packet,

wherein each flow-entry is identified by identifying information stored in the flow-entry, and wherein the cache lookup uses a function of the extracted identifying information.

The one or more statistical measures can include measures selected from the set consisting of the total packet count for the flow, the time, and a differential time from the last entered time to the present time.

The monitor can include a statistical processor configured to determine one or more metrics related to a flow from one or more of the statistical measures in the flow-entry of the flow.

The statistical processor can determine and reports the one or more metrics from time to time.

Another aspect of the present invention provides a packet monitor for examining packets passing through a connection point on a computer network, each packets conforming to one or more protocols, the monitor comprising:

(a) a packet acquisition device coupled to the connection point and configured to receive packets passing through the connection point;

(b) a memory for storing a database comprising none or more flow-entries for previously encountered conversational flows to which a received packet may belong;

(c) a cache subsystem coupled to the flow-entry database memory providing for fast access of flow-entries from the flow-entry database; and

(d) a lookup engine coupled to the packet acquisition device and to the cache subsystem and configured to lookup whether a received packet belongs to a flow-entry in the flow-entry database, the looking up being in the cache subsystem.

The monitor can include:

a parser subsystem coupled to the packet acquisition device and to the lookup engine such that the acquisition device is coupled to the lookup engine via the parser subsystem, the parser subsystem configured to extract identifying information from a received packet,

wherein each flow-entry is identified by identifying information stored in the flow-entry, and wherein the cache lookup uses a function of the extracted identifying information.

The cache subsystem can be an associative cache subsystem including one or more content addressable memory cells (CAMs).

The cache subsystem can include:

(i) a set of cache memory elements coupled to the flow-entry database memory, each cache memory element including an input port to input an flow-entry and configured to store a flow-entry of the flow-entry database;

(ii) a set of content addressable memory cells (CAMs) connected according to an order of connections from a top CAM to a bottom CAM, each CAM containing an address and a pointer to one of the cache memory elements, and including:

a matching circuit having an input such that the CAM asserts a match output when the input is the same as the address in the CAM cell, an asserted match output indicating a hit,

a CAM input configured to accept an address and a pointer, and

a CAM address output and a CAM pointer output;

(iii) a CAM controller coupled to the CAM set; and

(iv) a memory controller coupled to the CAM controller, to the cache memory set, and to the flow-entry memory,

wherein the matching circuit inputs of the CAM cells are coupled to the lookup engine such that that an input to the matching circuit inputs produces a match output in any CAM cell that contains an address equal to the input, and wherein the CAM controller is configured such that which cache memory element a particular CAM points to changes over time.

The CAM controller can be configured such that the bottom CAM points to the least recently used cache memory element.

The address and pointer output of each CAM starting from the top CAM is coupled to the address and pointer input of the next CAM, the final next CAM being the bottom CAM, and wherein the CAM controller is configured such than when there is a cache hit, the address and pointer contents of the CAM that produced the hit are put in the top CAM of the stack, the address and pointer contents of the CAMs above the CAM that produced the asserted match output are shifted down, such that the CAMs are ordered pointed to by the bottom CAM and the most recently used cache memory element pointed to by the top CAM.

Another aspect of the present invention provides a cache system for looking up one or more elements of an external memory, comprising:

(a) a set of cache memory elements coupled to the external memory, each cache memory element including an input port to input an element of the external memory and configured to store the input external memory element;

(b) a set of content addressable memory cells (CAMs) connected according to an order of connections from a top CAM to a bottom CAM, each CAM containing an address and a pointer to one of the cache memory elements, and including

(i) a matching circuit having an input such that the CAM asserts a match output when the input is the same as the address in the CAM cell, an asserted match output indicating a hit,

(ii) a CAM input configured to accept an address and a pointer, and

(iii) a CAM address output and a CAM pointer output, and

(c) a CAM controller coupled to the CAM set;

(d) a memory controller coupled to the CAM controller, to the cache memory set, and to the external memory,

wherein the matching circuit inputs of the CAM cells are coupled such that that an input to the matching circuit inputs produces a match output in any CAM cell that contains an address equal to the input, and wherein the CAM controller is configured such that which cache memory element a particular CAM points to changes over time.

The CAM controller can be configured such that the bottom CAM points to the least recently used cache memory element, and the CAM controller can be configured to implement a least recently used replacement policy such that least recently used cache memory element is the first memory element flushed.

The address and pointer output of each CAM starting from the top CAM can be coupled to the address and pointer input of the next CAM, the final next CAM being the bottom CAM, and the CAM controller can be configured such than when there is a cache hit, the address and pointer contents of the CAM that produced the hit are put in the top CAM of the stack, the address and pointer contents of the CAMs above the CAM that produced the asserted match output are shifted down, such that the CAMs are ordered according to recentness of use, with the least recently used cache memory element pointed to by the bottom CAM and the most recently used cache memory element pointed to by the top CAM.

The CAM controller can be configured such that replacing any cache memory elements occurs according to the inverse order of recentness of use, with the least recently used entry being the first flushed cache memory entry.

Each memory element can be a page of memory.

Each cache memory element can be provided with an indication of whether or not it is dirty, and the CAM controller can be configured to clean any dirty cache memory elements by backing up the dirty contents into the external memory.

The contents of any cache memory element can be maintained after cleaning until such cache contents need to be replaced according to the LRU replacement policy.

Each cache memory element can be provided with an indication of whether or not it is dirty, and the CAM controller can be configured to clean any dirty cache memory elements by backing up the dirty contents into the external memory.

The CAM controller can be further configured to clean any dirty cache memory elements prior to replacing the cache memory element contents.

The CAM controller can be further configured to clean any dirty cache memory elements prior to replacing the cache memory element contents.

Each cache memory element can be provided with an indication of whether or not it is dirty, and the CAM controller can be configured to clean dirty cache memory elements by backing up the dirty contents into the external memory in reverse order of recentness of use.

The cleaning in reverse order of recentness of use automatically can proceed whenever the cache controller is idle.

Another aspect of the present invention provides a cache system for looking up one or more elements of an external memory, comprising:

(a) a set of cache memory elements coupled to the external memory, each cache memory element including an input port to input an element of the external memory and configured to store the input external memory element; and

(b) a set of content addressable memory cells (CAMs) containing an address and a pointer to one of the cache memory elements, and including a matching circuit having an input such that the CAM asserts a match output when the input is the same as the address in the CAM cell,

wherein which cache memory element a particular CAM points to changes over time.

The CAMs acan be connected in an order from top to bottom, and wherein the bottom CAM points to the least recently used cache memory element.

Another aspect of the present invention provides a packet monitor for examining all packets passing through a connection point on a computer network, the monitor comprising:

(a) a packet acquisition device coupled to the connection point and configured to receive packets passing through the connection point; and

(b) a memory for storing a database comprising none or more flow-entries for previously encountered conversational flows to which a received packet may belong;

(c) a lookup engine coupled to the packet acquisition device configured to lookup whether a received packet belongs to a flow in the flow-entry database, and to determine the state of the flow for the received packet in the case that the packet belongs to a flow-entry;

(d) a state determining mechanism coupled to the lookup engine to determine the state of a flow in the case that the received packet does not belong to a flow in the flow-entry database; and

(e) a state processor coupled to the lookup engine and to the state determining mechanism configured to perform any state operations specified for the state of the flow starting from the last encountered state of the flow in the case that the packet is from an existing flow, and to perform any state operations required for the initial state of the new flow in the case that the packet is from an existing flow.

The set of possible state operations that the state processor is configured to perform can include searching for one or more patterns in the packet portions.

The monitor can process all packets passing through the connection point in real time.

The state processor can be programmable, and the monitor can further include a state patterns/operations memory coupled to the state processor, the state operations memory configured to store a database state patterns/operations.

The monitor can further include a buffer coupled to the packet acquisition device, to the state processor, and to the lookup engine, the buffer configured to accepting at least selected portions of the received packet.

The state processor can include a searching apparatus configured to search for a reference string of NR units in the buffer contents, the searching apparatus comprising:

(i) a first reference register configured to receive the NR units of a first reference string;

(ii) one or more target data registers coupled in series and coupled to the buffer, the target data registers configured to receive contents from the buffer; and

(iii) a first plurality of comparator sets, one comparator set corresponding to each of a set of starting positions in the target data registers, the comparator set of a particular starting position coupled to each unit of the first reference register and to NR units of the target data registers starting from the particular starting position and comparing the first reference register contents to corresponding contents ofNR contiguous units of the target data registers starting from the particular starting position,

such that each comparator set indicates if there is a match of the first reference string in the target data starting from its corresponding different starting position,

whereby the first plurality of comparator sets indicates in parallel if the first reference string is contained in the target data registers starting at any of the starting positions.

Another aspect of the present invention provides a processor configured to process contents of packets passing through a connection point on a computer network, the processor comprising:

(a) a buffer for receiving at least some of the contents of each packet passing through the connection point;

(b) a memory containing one or more instructions of an instruction set for the state processor;

(c) an arithmetic logic unit (ALU) coupled to the buffer;

(d) a control block coupled to the ALU and to the instruction memory for decoding instructions; and

(e) a program counter coupled to the instruction memory and to the ALU for indicating the next state processor instruction in the memory to process,

wherein the ALU includes a searching apparatus comprising one or more comparators for searching for a reference string in the contents of a packet.

The state processor can process contents of all packets passing through the connection point in real time.

The instruction set can include an instruction for invoking the searching apparatus of the ALU to search for a specified reference string in the packet starting at an unknown location within a range of the packet.

The searching apparatus can search for any of a set of reference strings in the contents of a packet, and the instruction set can include an instruction for invoking the searching apparatus to search for any of a set of specified reference strings in the packet starting at an unknown location within a range of the packet.

Another aspect of the present invention provides a searching apparatus configured to search for a reference string of NR units in target data starting from any of a set of starting positions within the target data, the searching apparatus comprising:

(a) a first reference register configured to receive the NR units of a first reference string;

(b) one or more target data registers coupled in series to receive the target data; and

(c) a first plurality of comparator sets, one comparator set corresponding to each of the starting positions, the comparator set of a particular starting position coupled to each unit of the first reference register and to NR units of the target data registers starting from the particular starting position and comparing the first reference register contents to corresponding contents of NR contiguous units of the target data registers starting from the particular starting position,

such that each comparator set indicates if there is a match of the first reference string in the target data starting from its corresponding different starting position,

whereby the first plurality of comparator sets indicates in parallel if the first reference string is contained in the target data registers starting at any of the starting positions.

The set of possible starting positions can include Nstart positions, wherein the one or more target data registers are coupled in series to receive at least NR+Nstart-1 units of the target data, and wherein the first plurality of comparator sets includes Nstart comparator sets, one comparator set for each of the Nstart starting positions.

Each of the target data registers can hold Nstart units of data.

Nstart units of the target data can be clocked into the target data registers in one clock cycle, such that the first plurality of comparator sets indicates in one clock cycle if the first reference string is in the target area starting at any of the Nstart starting positions.

The searching apparatus can further comprise a mechanism to specify an offset Noffset, wherein during the first clock cycle of operation, the first Noffset starting positions are ignored such that the first plurality of comparator sets indicates in the first clock cycle if the first reference string is in the target area starting at any of the Nstart- Noffset starting positions of the first data register that start after the first Noffset starting positions, and wherein during subsequent clock cycles all Nstart starting positions are considered, whereby in one or more clock cycles, the searching apparatus indicates if the first reference string is in the target data starting anywhere other than the first Noffset units.

Each comparator set can include NR consecutive comparators, each comparator having a reference unit input, a target unit input, and an output indicating a match, each comparator coupled to the previous comparator's output such that the output of a comparator is asserted when the reference and target data inputs match and the previous comparator's output indicates a match.

The searching apparatus can further comprise:

(d) one or more further reference register for receiving NR units of one or more further reference strings; and

(e) one or more further pluralities of comparator sets, one comparator set for each of a corresponding plurality of starting positions, each particular comparator set of each further plurality coupled to each unit of the corresponding further reference register and to NR units of the data registers starting from the particular comparator set's starting position and comparing the corresponding further reference register contents to NR units of the target data registers starting from the particular comparator set's starting position,

such that the searching apparatus searches for any one of the first or further reference strings of NR units in contents of the target registers starting from any of the starting positions.

Each comparator set can include NR consecutive comparators, each comparator having a reference unit input, a target data unit input, and an output indicating a match, each comparator coupled to the previous comparator's output such that the output of a comparator is asserted when the reference and target data inputs match and the previous comparator's output indicates a match.

Each comparator set can includes NR consecutive comparators, each comparator having a reference unit input, a target data unit input, an enable input, and an output indicating a match, such that the match output of a comparator is asserted when the reference and target inputs match and the enable input is asserted, wherein for a particular set of comparators for a particular starting position, the reference inputs of consecutive comparators are coupled to consecutive units of the reference register, the target data inputs of consecutive comparators are coupled to consecutive units of the target data registers starting at the particular starting location, the first comparator of the set is enabled, and the enable input of each comparator is coupled to the output of the previous comparator, such that the output of the final comparator is asserted when the NR units of the reference string and the NR units of the target data agree.

The unit can be a byte.

The final comparator outputs of the sets can be coupled to a priority selector having an output indicating if and where a match of the reference string occurred in the target data.

NR can be 16 bytes.

Each of the data registers can have Nstart bytes, such that the searching apparatus indicates a match starting anywhere within the first data register.

Another aspect of the present invention provides a searching apparatus configured to search for a reference string of NR units in a target data stream, the apparatus comprising:

(a) a first NR-unit comparator having NR pairs of inputs and an output indicating a match of each pair of the NR-pairs of inputs; and

(b) NR connections indicating values of the reference string and defining a first axis of a matrix, and NR connections indicating values of the target data defining a second axis of the matrix perpendicular to the first axis, the target data connections starting from a first starting location of the target data and ending at an ending location,

wherein the first comparator is oriented along the diagonal of the matrix such that NR connections of the target data are compared to the NR reference string connections.

The searching apparatus can further comprise:

additional one or more contiguous connections parallel and contiguous to the target data connections in the matrix and starting from the ending location; and

an additional NR-unit comparator for and corresponding to each of the additional target data connections, each additional comparators parallel to the first comparator and shifted towards the additional target connections in the matrix,

such that each additional comparator compares the reference string to a different set of NR units continuous values of the target data starting from a different staring point.

The searching apparatus can further comprise:

one or more further sets of NR-unit comparators; and

further sets connections corresponding for the further sets of NR-unit comparators, the further connections defining one or more additional matrices, each further set of connections along the first axis indicating values of one or more corresponding further reference strings along the first axis, and NR connections indicating values of the target data along the second axis,

such that each additional comparator set compares the corresponding one of the reference strings to a different set of NR contiguous values of the target data starting from a different staring point.

**Claims**

1. A method of performing protocol specific operations on a packet passing through a connection point on a computer network, the method comprising:

   receiving the packet;
   receiving a set of protocol descriptions for a plurality of protocols that conform to a layered model, a protocol description for a particular protocol at a particular layer level including:

   if there is at least one child protocol of the particular protocol, the one or more child protocols of the particular protocol, the packet including for any particular child protocol of the particular protocol information at one or more locations in the packet related to the particular child protocol,
   the one or more locations in the packet where information is stored related to any child protocol of the particular protocol, and
   if there is at least one protocol specific operation to be performed, the one or more protocol specific operations to be performed on the packet for the particular protocol at the particular layer level; and
   performing the protocol specific operations on the packet specified by the set of protocol descriptions based on the base protocol of the packet and the children of the protocols used in the packet.

2. A method according to claim 1, wherein step of performing protocol specific operations is performed recursively for any children of the children.

3. A method according to claim 1, wherein which protocol specific operations are performed in the step of performing protocol specific operations depends on the contents of the packet such that the method adapts to different protocols according to the contents of the packet.

4. A method according to claim 1, further comprising:

   storing a database in a memory, the database generated from the set of protocol descriptions and including a data structure containing information on the possible protocols and organized for locating the child protocol related information for any protocol, the data structure contents indexed by a set of one or more indices, the database entry indexed by a particular set of index values including an indication of validity,

   wherein the child protocol related information includes a child recognition pattern, the step of performing the protocol specific operations includes, at any particular protocol layer level starting from the base level, searching the packet at the particular protocol for the child field, the searching including indexing the data structure until a valid entry is found, and the data structure is configured for rapid searches using the index set.

5. A method according to claim 4, wherein the protocol descriptions are provided in a protocol description language, the method further comprising compiling the protocol description language descriptions to produce the database.

**6.** A method according to claim 4, wherein the data structure comprises a set of arrays, each array identified by a first index, at least one array for each protocol, each array further indexed by a second index being the location in the packet where the child protocol related information is stored, such that finding a valid entry in the data structure provides the location in the packet for finding the child recognition pattern for an identified protocol.

**7.** A method according to claim 6, wherein each array is further indexed by a third index being the size of the region in the packet where the child protocol related information is stored, such that finding a valid entry in the data structure provides the location and the size of the region in the packet for finding the child recognition pattern.

**8.** A method according to claim 7, wherein the data structure is compressed according to a compression scheme that takes advantage of the sparseness of valid entries in the data structure.

**9.** A method according to claim 8, wherein the compression scheme combines two or more arrays that have no conflicting common entries.

**10.** A method according to claim 4, wherein the data structure includes a set of tables, each table identified by a first index, at least one table for each protocol, each table further indexed by a second index being the child recognition pattern, the data structure further including a table that for each protocol provides the location in the packet where the child protocol related information is stored, such that finding a valid entry in the data structure provides the location in the packet for finding the child recognition pattern for an identified protocol.

**11.** A method according to claim 10, wherein the data structure is compressed according to a compression scheme that takes advantage of the sparseness of valid entries in the set of tables.

**12.** A method according to claim 11, wherein the compression scheme combines two or more tables that have no conflicting common entries.

**13.** A method according to claim 1, wherein the protocol specific operations include one or more parsing and extraction operations on the packet to extract selected portions of the packet to form a function of the selected portions for identifying the packet as belonging to a conversational flow.

**14.** A method according to claim 1, wherein the protocol descriptions are provided in a protocol description language.

**15.** A method according to claim 14, further comprising compiling the protocol description language descriptions to produce a database and store the database in a memory, the database generated from the set of protocol descriptions and including a data structure containing information on the possible protocols and organized for locating the child protocol related information for any protocol, the data structure contents indexed by a set of one or more indices, the database entry indexed by a particular set of index values including an indication of validity; wherein the child protocol related information includes a child recognition pattern, and the step of performing the protocol specific operations includes, at any particular protocol layer the child field, the searching including indexing the data structure until a valid entry is found, whereby the data structure is configured for rapid searches using the index set.

**16.** A method according to claim 13, further comprising:

looking up a flow-entry database comprising, if the flow-entry database includes at least one flow entry for a previously encountered conversational flow, one none or more flow-entries, at least one flow-entry for each previously encountered conversational flow, the looking up using at least some of the selected packet portions and determining if the packet matches an existing flow-entry;
if the packet is of an existing flow, classifying the packet as belonging to the found existing flow; and
if the packet is of a new flow, storing a new flow-entry for the new flow in the flow-entry database, including identifying information for future packets to be identified with the new flow-entry,

wherein the parsing and extraction operations either do not depend on the contents of at least one packet header, or depend on the contents of none one or more packet headers.

**17.** A method according to claim 13, wherein the protocol specific operations further include one or more state processing operations that are a function of the state of the flow of the packet.

**18.** A method according to claim 1, wherein the protocol specific operations include one or more state processing operations that are a function of the state of the flow of the packet.

FIG. 1

FIG. 2

FIG. 3

EP 1 791 063 A1

**401**

**402**
HIGH LEVEL
PACKET
DECODING
DESCRIPTIONS

**404**
GENERATE
PACKET
PARSE AND
EXTRACT
OPERATIONS

**403**
COMPILE
DESCRIPTIONS

**405**
GENERATE
PACKET
STATE
INSTRUCTIONS
AND
OPERATIONS

**406**
PATTERN, PARSE
AND
EXTRACTION
DATABASE

**407**
STATE
PROCESSOR
INSTRUCTION
DATABASE

**408**
LOAD
PARSING
SUBSYSTEM
MEMORY

**409**
LOAD STATE
INSTRUCTION
DATABASE
MEMORY

**400**

**410**

# FIG. 4

FIG. 5

FIG. 6

701

KEY BUFFER AND
PATTERN NODES — 702

703 — LOAD PATTERN
NODE ELEMENT

708

704 — MORE PATTERN
NODES?

NO

OUTPUT TO
ANALYZER

YES

HASH KEY BUFFER
ELEMENT FROM
PATTERN NODE — 705

F 8

709

706 — PACK KEY & HASH

700

707 — NEXT PACKET
COMPONENT

# FIG. 7

801

UFKB ENTRY FOR PACKET — 802

800

COMPUTE CONVERSATION RECORD BIN FROM HASH — 803

REQUEST RECORD BIN/ BUCKET FROM CACHE — 804

806

805 — MORE BUCKETS IN THE BIN?

NO → SET UFKB FOR PACKET AS 'NEW'

YES

COMPARE CURRENT BIN AND BUCKET RECORD KEY TO PACKET — 807

NEXT BUCKET ←NO— KEY MATCH? — 808

809

YES

MARK RECORD BIN AND BUCKET 'IN PROCESS' IN CACHE AND TIMESTAMP — 810

811 — SET UFKB FOR PACKET AS 'FOUND'

812 — UPDATE STATISTICS FOR RECORD IN CACHE

813

FIG. 8

901 — RPC REPLY PORTMAPPER

902 — RPC ANNOUNCMENT PORTMAPPER

910 — RPC BIND LOOKUP REQUEST

903 — EXTRACT PROGRAM

GET 'PROGRAM', 'VERSION', 'PORT' AND 'PROTOCOL (TCP OR UDP)

909

EXTRACT PORT

GET 'PROGRAM', 'VERSION' AND 'PROTOCOL (TCP OR UDP)'

904 — CREATE SERVER STATE

SAVE 'PROGRAM', 'VERSION', 'PORT' AND 'PROTOCOL (TCP OR UDP)' WITH NETWORK ADDRESS IN SERVER STATE DATABASE. KEY ON SERVER ADDRESS AND TCP OR UDP PORT.

908 — SAVE REQUEST

SAVE 'PROGRAM', 'VERSION' AND 'PROTOCOL (TCP OR UDP)' WITH DESTINATION NETWORK ADDRESS. BOTH MAKE A KEY.

907 — RPC BIND LOOKUP REPLY

905 — LOOKUP REQUEST

FIND 'PROGRAM' AND 'VERSION' WITH LOOKUP OF SOURCE NETWORK ADDRESS.

900

906 — EXTRACT PROGRAM

GET 'PORT' AND 'PROTOCOL (TCP OR UDP)'.

FIG. 9

1000

PATTERN
RECOGNITION
DATABASE
MEMORY

1001

1002

EXTRACTION
OPERATIONS
DATABASE
MEMORY

1003

1005

1031

1004

HOST INTERFACE MULTIPLEXR & CONTROL REGISTERS

INFO OUT

CONTRL IN

1031

1006

PATTERN
RECOGNITN
ENGINE
(PRE)

EXTRACTION ENGINE
(SLICER)

1007

1008

PACKET
INPUT

1012

PARSER INPUT BUFFER
MEMORY

1013

PARSER
OUTPUT
BUFFER
MEMORY

PACKET KEY
AND PAYLOAD

1010

1021

PACKET
START

NEXT
PACKET

INPUT BUFFER
INTERFACE
CONTROL

1011

1025

ANALYZER
INTERFACE
CONTROL

DATA READY

ANALYZER
READY

1022

1023

1027

FIG. 10

1100 →

1101   1103                    1107   1115        1118      1122

LOOKUP/
UPDATE
ENGINE
(LUE)

STATE
PROCESSR
INSTRUCN
DATABASE
(SPID)

1109

1108

PARSER
INTER-
FACE

UNIFIED
FLOW
KEY
BUFFER
(UFKB)

CACHE

STATE
PROCESSR
(SP)

ANALYZER
HOST
INTERFACE
AND
CONTROL
(ACIC)

HOST
BUS
INTER-
FACE
(HIB)

1119   1123

FLOW
INSERTION/
DELETION
ENGINE
(FIDE)

UNIFIED
MEMORY
CONTROL
(UMC)

MEMORY
INTER-
FACE

1110

# FIG. 11

1201

UFKB ENTRY FOR PACKET WITH STATUS 'NEW' — 1202

1200 →

ACCESS CONVERSATION RECORD BIN — 1203

REQUEST RECORD BIN/ BUCKET FROM CACHE — 1204

REQUEST NEXT BUCKET FROM CACHE — 1206

NO ← BIN/BUCKET EMPTY? — 1205

YES

INSERT KEY AND HASH IN BUCKET, MARK 'USED' WITH TIMESTAMP — 1207

1208 — BUCKET VALID?

NO →

YES

SET UFKB FOR PACKET AS 'DROP' — 1210

COMPARE CURRENT BIN AND BUCKET RECORD KEY TO PACKET — 1209

MARK RECORD BIN AND BUCKET 'IN PROCESS' AND 'NEW' IN CACHE — 1211

1212 — SET INITIAL STATISTICS FOR RECORD IN CACHE

1213

# FIG. 12

104

1301

1300 →

UFKB ENTRY FOR
PACKET WITH STATUS
'NEW' OR 'FOUND' — 1302

SET STATE PROCESSOR
INSTRUCTION POINTER TO
VALUE FOUND IN UFKB ENTRY — 1303

FETCH INSTRUCTION FROM
STATE PROCESSOR
INSTRUCTION MEMORY — 1304

PERFORM OPERATION BASED
ON THE STATE INSTRUCTION — 1305

SET STATE
PROCESSOR
INSTRUCTION
POINTER TO
VALUE FOUND IN
CURRENT STATE

NO ← DONE PROCESSING
STATES FOR THIS
PACKET? — 1307

1308

1310

YES

SAVE STATE
PROCESSOR
INSTRUCTION
POINTER IN
CURRENT FLOW
RECORD

NO ← DONE PROCESSING
STATES FOR THIS FLOW? — 1309

YES

SET AND SAVE FLOW REMOVAL
STATE PROCESSOR
INSTRUCTION IN CURRENT
FLOW RECORD — 1311

1313

FIG. 13

FIG. 14

FIG. 15

1602    0 - 3 Bytes

← 1600

Dst MAC

offset 0 - 11    Dst MAC | Src MAC    1604

Src MAC

1606

1608    Dst MAC (6)

Dst Hash (2)    1610

1612    Src MAC (6)

Src Hash (2)

1614

L2 Offset = 12

# FIG. 16

offset 12 to 13 | Type

1702

1704

1706

Type (2)

1708

Hash (1)

1710

L3 Offset = 14

1700

## FIG. 17A

IDP = 0x0600 *
IP = 0x0800 *
CHAOSNET = 0x0804
ARP = 0x0806
VIP = 0x0BAD *
VLOOP = 0x0BAE
VECHO = 0x0BAF
NETBIOS-3COM = 0x3C00 -
0x3C0D #
DEC-MOP = 0x6001
DEC-RC = 0x6002
DEC-DRP = 0x6003 *
DEC-LAT = 0x6004
DEC-DIAG = 0x6005
DEC-LAVC = 0x6007
RARP = 0x8035
ATALK = 0x809B *
VLOOP = 0x80C4
VECHO = 0x80C5
SNA-TH = 0x80D5 *
ATALKARP = 0x80F3
IPX = 0x8137 *
SNMP = 0x814C #
IPv6 = 0x86DD *
LOOPBACK = 0x9000

Apple = 0x080007

\* L3 Decoding
\# L5 Decoding

1712

L3 to [L3 + (IHL / 4) - 1]

Ver | IHL | Svc Type | Total Length
Identifier | Flag | Frag Offset
TTL | Protocol | Header Checksum
Src Address
Dst Address
Options & Padding

1750

Dst Address

Dst Hash (2)

Src Address

Src Hash (2)

Protocol (1)

L4 Offset = L3 + (IHL/4)

## FIG. 17B

1752

ICMP = 1
IGMP = 2
GGP = 3
TCP = 6 *
EGP = 8
IGRP = 9
PUP = 12
CHAOS = 16
UDP = 17 *
IDP = 22 #
ISO-TP4 = 29
DDP = 37 #
ISO-IP = 80
VIP = 83 #
EIGRP = 88
OSPF = 89

\* L4 Decoding
\# L3 Re-Decoding

PROTOCOL
TYPE (ID)

FIELD LENGTH

LOCATION
(OFFSET)

1800

1642

1802-1

1802-2

1802-M

## FIG. 18A

1870

1850

LUT NUM.

PROTOCOL

BYTE CODE
OF FIELD

## FIG. 18B

FIG. 19

FIG. 20

EP 1 791 063 A1

2030

SEARCH_ENGINE 4

POSITION4

FOUND4

SEARCH_ENGINE 3

POSITION3

FOUND3

SE_INCR

2023

GENERAL

RESET_N

CLK

SEARCH_ENGINE 2

POSITION2

FOUND2

SPMUXA

1919

DATA_UFKB

SEARCH_ENGINE 1  2107

2103

SE_SM

SE_LOAD

KEY_4

INC_FKAG4

KEY_3

INC_FKAG3

KEY_2

INC_FKAG2

2015

KEY_1

INC_FKAG1

SE_MATRIX

2113

2111

POSITION1

FOUND1

2105

TO SE 2,3,4

LOAD_KEY_DONE, LOAD,
CHK, ALU_DONE

SE_INC

TO SE 2,3,4

2115

2117

BYTE_OFFSET

TRUE_RANGE

FIG. 21

2023

2105

TARGET DATA IN

TARGET WORD | TARGET WORD + 1 | TARGET WORD + 2

REFERENCE

2203-1
2203-2

2203-$N_{start}$

2211-$N_{start}$

2213

PRIORITY ENCODER

FIG. 22A

FIG. 22B

2207-1
2207-2
2209-1

2203

2209-$N_R$
2207-$N_R$

2211

2205

TARGET WORD ◄ TARGET WORD + 1 ◄ TARGET WORD + 2 ◄ TARGET DATA IN

TARGET

ENABLE
(Previous)

2313

8 bit comparator

Reference →

IF Target ==
Reference
AND
Previous==1
THEN Match=1

MATCH

REFERENCE

2313

PRIORITY ENCODER

2313

FIG. 23A

FIG. 23B

2401

COMMON.PDL — 2403

FLOWS.PDL — 2405

VIRTUAL.PDL — 2407

2411 — ETHERNET.PDL

ETHERTYPE — 2413

IP.PDL — 2415

TCP.PDL — 2417

RPC.PDL — 2419

2421 — NFS.PDL

2423 —

FIG. 24

```
                    ( )  — 2501
                     |
         ┌───────────────────────┐
         │  READ IN PDL SOURCE   │ — 2503
         │       MODULES         │
         └───────────────────────┘
                     |
         ┌───────────────────────┐
         │  PARSE MODULES FOR    │ — 2505
         │       SYNTAX          │
         └───────────────────────┘
                     |
         ┌───────────────────────┐
         │  FIRST PASS, CREATE   │ — 2507
         │  ALL PARSE ELEMENTS   │
         └───────────────────────┘
                     |
         ┌───────────────────────┐
  2509 — │ 2ND PASS, BUILD FLOW  │
         │ SIGNATURE ELEMENTS    │
         └───────────────────────┘
                     |
         ┌───────────────────────┐
         │  THIRD PASS, CREATE   │ — 2511
         │   PAYLOAD ELEMENTS    │
         └───────────────────────┘
                     |
         ┌───────────────────────┐
         │  FORTH PASS, BUILD    │ — 2513
         │ STATES FOR EACH LINK  │
         └───────────────────────┘
                     |
         ┌───────────────────────┐
         │  READ IN LAYERING     │ — 2515
         │   SOURCE MODULES      │
         └───────────────────────┘
                     |
         ┌───────────────────────┐
         │ WALK LAYERING LINKS   │ — 2517
         │    FOR EACH PDL       │
         └───────────────────────┘
                     |
         ┌───────────────────────┐
  2519 — │    OUTPUT CPL         │
         │  INTERMEDIATE FILE    │
         └───────────────────────┘
                     |
             2521 — ( )        FIG. 25
```

FIG. 26

**FIG. 27**

FIG. 28

**European Patent Office**

## EUROPEAN SEARCH REPORT

Application Number

EP 07 00 4754

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 793 954 A (BAKER ET AL.) 11 August 1998 (1998-08-11) * column 2 - column 11 * ----- | 1-18 | INV. G06F15/173 |
| X | PRUFER R. J.: "NETWORK ADVISOR PROTOCOL ANALYSIS: DECODES" HEWLETT-PACKARD JOURNAL, HEWLETT-PACKARD CO. PALO ALTO, US, vol. 43, no. 5, 1 October 1992 (1992-10-01), pages 34-40, XP000349772 * pages 37,39 * ----- | 1-18 | |
| X | GORA W. ED - RAVIV J. INTERNATIONAL COUNCIL FOR COMPUTER COMMUNICATION: "UNIVERSAL NETWORK MONITORING BASED ON FAN.1" COMPUTER COMMUNICATION TECHNOLOGIES FOR THE 90'S. TEL AVIV, OCT. 30 - NOV. 3, 1988, PROCEEDINGS OF THE INTERNATIONAL CONFERENCE ON COMPUTER COMMUNICATION, AMSTERDAM, ELSEVIER, NL, vol. CONF. 9, 30 October 1988 (1988-10-30), pages 104-114, XP000077368 * page 104 - page 110 * ----- | 1-18 | |
| X | NEVIL BROWNLEE, THE UNIVERSITY OF AUCKLAND CYNDI MILLS GTE LABORATORIES ET AL.: "Traffic Flow Measurement: Architecture" IETF STANDARD-WORKING-DRAFT, INTERNET ENGINEERING TASK FORCE, IETF, CH, vol. RTFM, no. 7, June 1999 (1999-06), XP015027044 ISSN: 0000-0004 * page 1 - page 24 * ----- | 1-18 | |

TECHNICAL FIELDS SEARCHED (IPC)

G06F
H04L

The present search report has been drawn up for all claims

| Place of search | Date of completion of the search | Examiner |
|---|---|---|
| Munich | 17 April 2007 | Jurca, Alexandru |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 07 00 4754

This annex lists the patent family members relating to the patent documents cited in the above-mentioned European search report.
The members are as contained in the European Patent Office EDP file on
The European Patent Office is in no way liable for these particulars which are merely given for the purpose of information.

17-04-2007

| Patent document cited in search report | | Publication date | Patent family member(s) | Publication date |
|---|---|---|---|---|
| US 5793954 | A | 11-08-1998 | AT 290278 T | 15-03-2005 |
| | | | AU 719679 B2 | 18-05-2000 |
| | | | AU 1355097 A | 14-07-1997 |
| | | | DE 69634415 D1 | 07-04-2005 |
| | | | EP 0868799 A1 | 07-10-1998 |
| | | | HK 1011590 A1 | 02-09-2005 |
| | | | IL 124990 A | 10-02-2002 |
| | | | WO 9723076 A1 | 26-06-1997 |
| | | | US 5781729 A | 14-07-1998 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5430709 A
- US 5101402 A
- US 5315580 A
- US 4891639 A
- US 5247517 A
- US 5787253 A

**Non-patent literature cited in the description**

- Net Flow Services and Applications. Cisco White Paper. 1999, 1-27